(19) Europäisches Patentamt
European Patent Office
Office européen des brevets

(11) **EP 4 757 214 A1**

(12) **EUROPEAN PATENT APPLICATION**
published in accordance with Art. 153(4) EPC

(43) Date of publication:
**10.06.2026 Bulletin 2026/24**

(21) Application number: **23946972.9**

(22) Date of filing: **28.07.2023**

(51) International Patent Classification (IPC):
***H04L 1/00*** *(2006.01)*

(52) Cooperative Patent Classification (CPC):
**H04L 1/00**

(86) International application number:
**PCT/CN2023/110024**

(87) International publication number:
**WO 2025/025016 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XIAO, Han
Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHOD AND COMMUNICATION DEVICE**

(57)    The present application provides a wireless communication method and a communication device. The method comprises: a first device sends a target signal to a second device on a target transmission resource, wherein the target signal comprises a first signal and a second signal that are non-orthogonally transmitted. Embodiments of the present application provide a wireless communication method. **In** the method, the first signal and the second signal can be non-orthogonally transmitted on the same transmission resource (also referred to as a "the target transmission resource"). Compared with a traditional signal transmission scheme that the first signal and the second signal are orthogonally transmitted and occupy different transmission resources, the present application facilitates improvement of the utilization rate of transmission resources.

```
┌─────────────┐              ┌──────────────┐
│ First device│              │ Second device│
└─────────────┘              └──────────────┘
       │      S1010, Target signal      │
       │───────────────────────────────▶│
       │                                │
```

**FIG. 10**

EP 4 757 214 A1

**Description**

TECHNICAL FIELD

The present application relates to the technical field of communication, and more particularly, to a radio communication method and a communication apparatus.

BACKGROUND

Currently, in known communication systems, if multiple different signals need to be transmitted, the multiple different signals are transmitted in an orthogonal manner via different transmission resources. That is to say, for a certain transmission resource, it can only be used to transmit one signal at a certain time, resulting in low utilization rate of the transmission resource. On the other hand, when the total transmission resource is constant, if the number of transmission resources occupied by the first signal increases, it means that the number of transmission resources available for transmitting the second signal decreases, so that the second signal may not be transmitted in time. Alternatively, if the number of transmission resources occupied by the second signal increases, it means that the number of transmission resources available for transmitting the first signal decreases, so that the first signal may not be transmitted in time.

SUMMARY

The present application provides a radio communication method and a communication apparatus. Various aspects of the present application are described below.

According to a first aspect, there is provided a radio communication method including the following operation. A first device transmits a target signal on a target transmission resource to a second device. The target signal includes a first signal and a second signal that are transmitted non-orthogonally.

In a second aspect, there is provided a radio communication method including the following operation. A second device receives a target signal on a target transmission resource transmitted by a first device. The target signal includes a first signal and a second signal that are transmitted non-orthogonally.

According to a third aspect, there is provided a communication apparatus, the communication apparatus is a first device and includes a transmitting unit. The transmitting unit is configured to transmit a target signal on a target transmission resource to a second device. The target signal includes a first signal and a second signal that are transmitted non-orthogonally.

According to a fourth aspect, there is provided a communication apparatus, the communication apparatus is a second device and includes a receiving unit. The receiving unit is configured to receive a target signal on a target transmission resource transmitted by the first device. The target signal includes a first signal and a second signal that are transmitted non-orthogonally.

In a fifth aspect, there is provided a communication device including a processor, a memory and a communication interface. The memory is used for storing one or more computer programs, and the processor is used for invoking the computer programs in the memory to cause the terminal device to perform some or all of the steps in the method of the above aspects.

In a sixth aspect, there is provided a communication system including the first device and/or the second device described above. In another possible design, the system may further include other devices that interact with the terminal device or the network device in the solutions provided by the embodiments of the present application.

According to a seventh aspect, embodiments of the present application provide a computer-readable storage medium storing a computer program that causes a communication device (for example, a terminal device or a network device) to perform some or all of the steps in the method of the above aspects.

In an eighth aspect, embodiments of the present application provide a computer program product including a non-transitory computer-readable storage medium storing a computer program operable to cause a communication device (for example, a terminal device or a network device) to perform some or all of the steps in the methods of the various aspects described above. In some implementations, the computer program product may be a software installation package.

In a ninth aspect, embodiments of the present application provide a chip including a memory and a processor, and the processor can invoke and run a computer program from the memory to implement some or all of the steps described in the methods of the above aspects.

Embodiments of the present application provide a radio communication method, in which non-orthogonal transmission can be performed between a first signal and a second signal on the same transmission resource (also referred to as "target transmission resource"). Compared with a traditional signal transmission scheme in which the first signal and the second signal occupy different transmission resources for transmission in an orthogonal manner, it is helpful to improve the utilization rate of transmission resources.

BRIEF DESCRIPTION OF THE DRAWINGS

FIG. 1 shows a radio communication system 100 to which embodiments of the present application are applicable.
FIG. 2 is a schematic diagram of channel estimation and signal recovery to which embodiments of the present application are applicable.

FIG. 3 (a) to FIG. 3 (c) show patterns of data symbols and pilot symbols in different configurations.

FIG. 4 shows a neural network model to which embodiments of the present application are applicable.

FIG. 5 shows a neural network model to which embodiments of the present application are applicable.

FIG. 6 shows a convolutional neural network to which embodiments of the present application are applicable.

FIG. 7 shows a long short-term memory (LSTM) model to which embodiments of the present application are applicable.

FIG. 8 illustrates a process of performing channel estimation based on a channel estimation module.

FIG. 9 illustrates a radio communication system 900 to which embodiments of the present application are applicable.

FIG. 10 illustrates a schematic flowchart of a radio communication method according to embodiments of the present application.

FIG. 11 shows a transmission mode of the first signal and the second signal in an embodiment of the present application.

FIG. 12 shows a transmission mode of the second signal and the first signal in another embodiment of the present application.

FIG. 13 illustrates a scheme of transmitting the first signal and the second signal based on a linear superposition method according to an embodiment of the present application.

FIG. 14 is a schematic diagram of adjusting a modulation constellation point associated with the second signal in an embodiment of the present application.

FIGs. 15 to 24 are schematic diagrams of superposing the first signal and the second signal in embodiments of the present application.

FIGs. 25 to 58 are schematic diagrams of first parameter setting modes according to embodiments of the present application.

FIGs. 59 to 66 are schematic diagrams of signal reception schemes according to embodiments of the present application.

FIG. 67 is a schematic diagram of a training process according to embodiments of the present application.

FIG. 68 is a schematic diagram of a communication device according to embodiments of the present application.

FIG. 69 is a schematic diagram of a communication device according to another embodiment of the present application.

FIG. 70 is a schematic diagram of an apparatus according to embodiments of the present application.

DETAILED DESCRIPTION

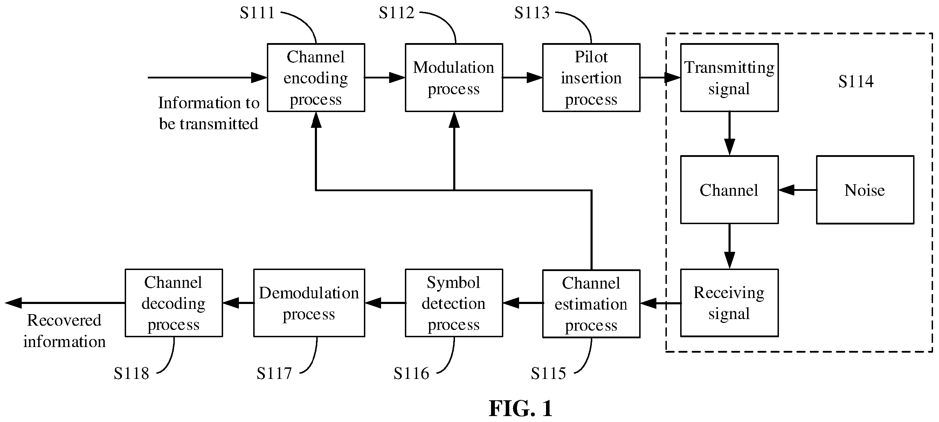

Technical solutions in the present application will be described below with reference to the accompanying drawings. In order to facilitate understanding of the present application, terms and communication processes related to embodiments of the present application will be described below with reference to FIG. 1 to FIG. 9.

## 1. Signal transmission process in radio communication system

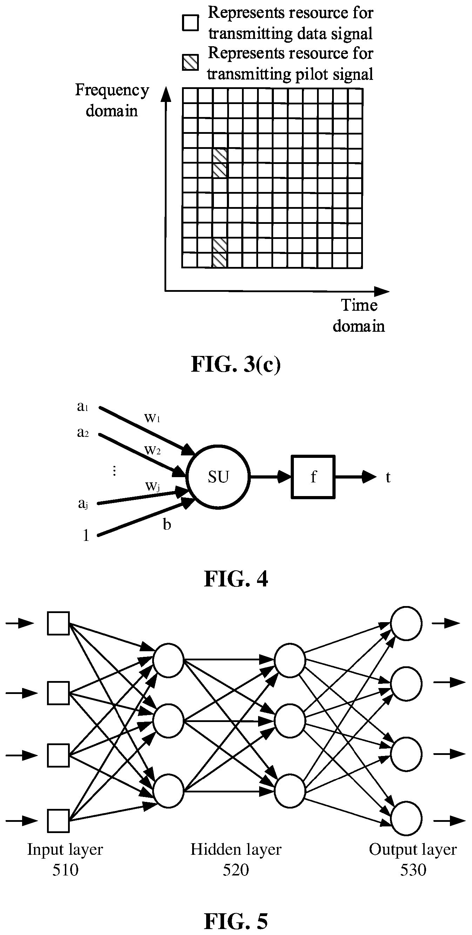

FIG. 1 is a flowchart of a signal transmission in a radio communication system to which embodiments of the present application are applicable. As shown in FIG. 1, the signal transmission process in the radio communication system can be roughly divided into various signal processing processes S111 to S118 shown in FIG. 1. Part or all of the signal processing processes shown in FIG. 1 can be implemented by a separate AI model, and the specific implementation can be referenced to the description of FIG. 5 to FIG. 8.

In the channel encoding process S111, the transmitter performs channel encoding on the information to be transmitted to obtain the encoded codestream. The information to be transmitted may be in the form of a bitstream.

In the modulation process S112, the codestream is modulated into modulation symbols.

In the pilot insertion process S113, pilot symbols are inserted into the above mentioned modulation symbols to form a signal to be transmitted. The pilot symbols can be used by the receiver for channel estimation and symbol detection.

In the transmitting signal S114, the signal is carried on the channel and transmitted to the receiver. During the transmission through channel, signal is usually superposed with noise.

In the channel estimation process S115, the receiver may perform channel estimation based on the pilot signals, obtain channel state information-reference signal (CSI), and feed back the CSI to the transmitter through the feedback link, so that the transmitter can adjust channel coding, modulation, precoding, etc.

In the symbol detection process S116, symbol detection is performed on the received modulation symbols to obtain a detection result.

In the demodulation process S117, the received modulation symbols are demodulated based on the detection result to obtain a codestream.

In the channel decoding process S118, the codestream is decoded to obtain recovered information, and the recovered information may be in the form of a bitstream.

It should be understood that the signal processing processes S111 to S118 illustrated in FIG. 1 merely list common signal processing process in a radio communication system by way of example, and the radio communication system may further include signal processing processes such as resource mapping, precoding, interference cancellation, CSI measurement, and the like, and these signal processing processes may also be implemented by a separate AI model. For the sake of brevity, the present application will not be described in detail.

## 2. Channel estimation

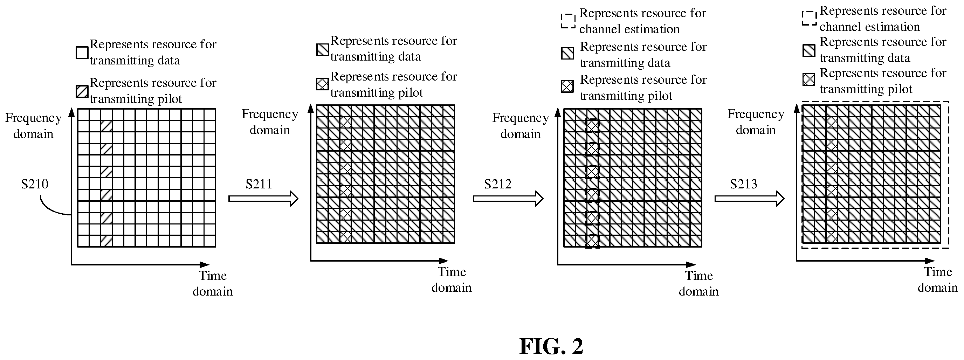

Due to the complexity and time-varying nature of the radio channel environment, in a radio communication system (e.g., the radio communication system introduced above), the receiver needs to recover the received signal based on the estimation of the channel. FIG. 2 is a schematic diagram of channel estimation and signal recovery to which the embodiments of the present application is applicable.

As shown in FIG. 2, in step S210, the transmitter transmits a series of pilot signals known to the receiver, such as a channel state information-reference signal (CSI-RS), a demodulation reference signal (DMRS), and the like, in addition to the data signals, on the time-frequency resource.

In step S211, the transmitter transmits the above data signals and the pilot signals to the transmitter through the channel.

The time-frequency resources occupied by the pilot signal are different from the time-frequency resources occupied by the data signal.

In step S212, the receiver may perform channel estimation after receiving the pilot signal. In one possible implementation, the receiver may estimate channel information of the channel for transmitting the pilot signal based on the pre-stored pilot signal and the received pilot signal by a channel estimation algorithm (e.g., least squares method (LS) channel estimation).

In step S 213, the receiver may recover the channel information on the full time-frequency resources by using an interpolation algorithm according to the channel information of the channel for transmitting the pilot sequence, and use the channel information for subsequent CSI feedback, data recovery, or the like.

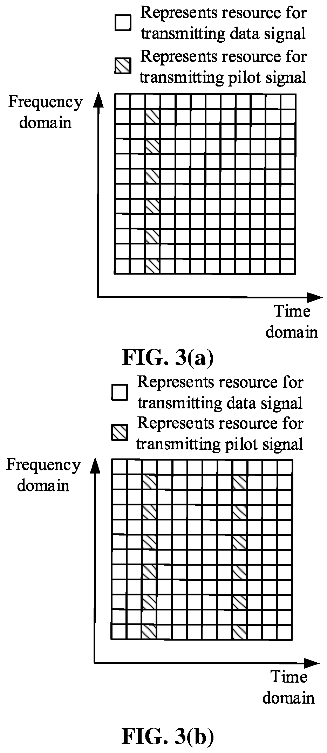

Based on the above description with reference to FIG. 2, it can be seen that the time-frequency resource for transmitting the pilot signal and the time-frequency resource for transmitting the data signal are different time-frequency resources. In addition, in some communication protocols (for example, the NR communication protocol), it is stipulated that symbols used for transmitting pilot signal (hereinafter referred to as "pilot symbols") and symbols used for transmitting data signal (hereinafter also referred to as "data symbols") are different. FIG. 3 (a) to FIG. 3 (c) show patterns of data symbols and pilot symbols in different configurations.

Referring to FIG. 3 (a), in one RB, pilot symbols are distributed at every other RE, at a plurality of REs corresponding to symbol 2 in the RB. Referring to FIG. 3 (b), in one RB, pilot symbols occupy part of a plurality of symbols corresponding to symbol 2 and symbol 10 in the RB. Referring to FIG. 3 (c), in one RB, pilot symbols occupy a plurality of groups of REs in symbol 2 in the RB. Each group of REs includes two REs that are continuous in the frequency domain.

Generally, among the patterns shown in FIG. 3 (a) to FIG. 3 (c), different patterns can be adapted to different communication environments. In some implementations, when the moving speed of the terminal device is high and the time variation of the channel characteristics is fast, a pattern in which the pilot symbol distribution is densely distributed can be selected, which is helpful to improve the accuracy of channel quality estimation of the entire RB. For example, the pattern shown in FIG. 3 (b) may be selected.

In other implementations, when the moving speed of the terminal device is slow and the time variation of the channel characteristics is slow, a pattern in which the distribution of pilot symbols is sparse can be selected, which is helpful to reduce the overhead generated by transmitting pilot signals on the premise of ensuring the accuracy of channel quality estimation of the entire RB.

## 3. Neural network

In recent years, artificial intelligence research represented by neural network has made great achievements in many fields, and it will also play an important role in people's production and life for a long time to come. Neural network can be understood as an operation model composed of multiple neuron nodes connected to each other, in which the connection between nodes can represent the weighted value from input signal to output signal, usually called parameter. Each node performs a weighted summation of different input signals and outputs them through a specific activation function.

Referring to FIG. 4, neurons can implement non-linear mapping depending on the activation function, where the input of the neuron can be denoted A, each dimension of the input is denoted $a_j$, and the corresponding parameter is denoted $w_j$, and the input is enhanced or weakened by the parameter together with summation units (SU). In addition, the output of the SU can be input into the activation function f to obtain the output t, where the values of j are 1, 2,..., n.

Common neural networks include convolutional neural network (CNN), recurrent neural network (RNN), deep neural network (DNN), etc.

Hereinafter, a neural network applicable to the embodiments of the present application will be described with reference to FIG. 5. The neural network shown in FIG. 5 can be divided into three categories according to the location of different layers: an input layer 510, a hidden layer 520, and an output layer 530. In general, the first layer is the input layer 510, the last layer is the output layer 530, and the intermediate layers between the first layer and the last layer are hidden layers 520.

The input layer 510 is used for input data. The input data may for example be a received signal received by a receiver. The hidden layer 520 is used to process the input data, for example, to decompress the received signal. The output layer 530 is used to output processed output data, for example, to output a decompressed signal.

As shown in FIG. 5, the neural network includes a plurality of layers, each layer includes a plurality of neurons, and the neurons between the layers may be fully connected or partially connected. For connected neurons, the output of the neurons of the upper layer can be used as the input of the neurons of the next layer.

With the continuous development of neural network research, neural network deep learning algorithms have been proposed in recent years, introducing more hidden layers into neural networks to form DNN. More hidden layers allow DNN to better describe complex situations in the real world. Theoretically, the more parameters a model has, the higher the complexity of the model is and the greater the "capacity" of the model is, which means that it can complete more complex learning tasks. This neural network model is widely used in pattern recognition, signal processing, optimization combination, anomaly detection and so on.

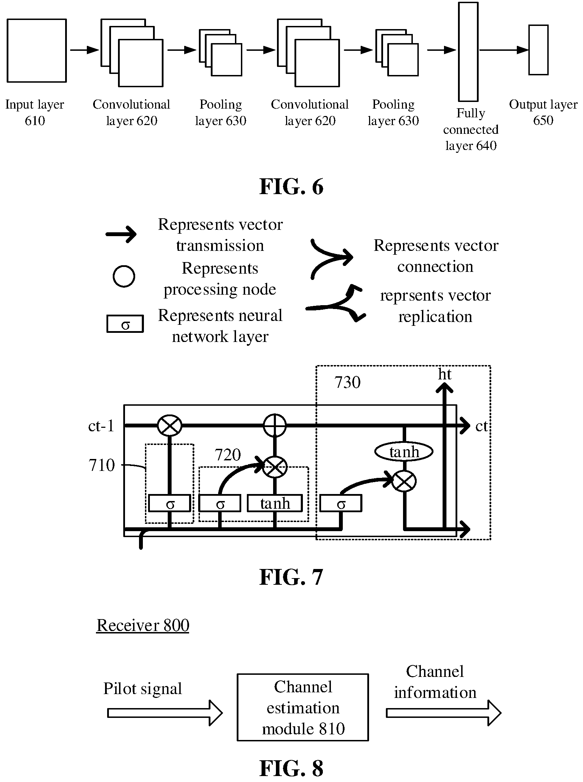

A CNN is a deep neural network with a convolutional structure, and its structure is shown in FIG. 6, which may include an input layer 610, convolutional layers 620, pooling layers 630, a fully connected layer 640, and an output layer 650.

Each convolution layer 620 may include a plurality of convolution operators. The convolution operator may be also referred to as a kernel, which may function as a filter for extracting specific information from an input signal. The convolution operator may essentially be a parameter matrix, which is usually predefined.

The parameter values in these parameter matrices need to be obtained through a lot of training in practical applications. Each parameter matrix formed by the parameter values obtained by training can extract information from the input signal, thus helping CNN to make correct prediction.

When CNN has multiple convolutional layers, the initial convolutional layer often extracts more general features, which can also be called low-level features. As the depth of CNN deepens, the features extracted from subsequent convolutional layers become more and more complex.

In the pooling layer 630, since it is often necessary to reduce the number of training parameters, it is often necessary to periodically introduce a pooling layer after the convolutional layer. For example, it may be one convolutional layer followed by one pooling layer as shown in FIG. 6, or it may be a plurality of convolutional layers followed by one or more pooling layers. In the process of signal processing, the sole purpose of the pooling layer is to reduce the space size of the extracted information.

In the fully connected layer 640, after processing by the convolutional layers 620 and the pooling layers 630, it is not sufficient for the CNN to output the required output information. Because, as previously described, the convolutional layer 620 and the pooling layer 630 will only extract features and reduce parameters brought by the input data. However, in order to generate the final output information (e.g., a bitstream of raw information transmitted by the transmitter), the CNN also needs to utilize the fully connected layer 640. Generally, the fully connected layer 640 may include a plurality of hidden layers, and the parameters included in the plurality of hidden layers may be trained in advance according to relevant training data of a specific task type, for example, the task type may include decoding data signals received by the receiver, or for example, the task type may further include channel estimation based on pilot signals received by the receiver.

After the plurality of hidden layers in the fully connected layer 640, the last layer of the entire CNN is an output layer 650 for outputting results. Typically, the output layer 650 is provided with a loss function (e.g., a loss function similar to classification cross entropy) for calculating the prediction error or for evaluating the degree of difference between the result (also known as a predicted value) output by the CNN model and the ideal result (also known as a true value).

In order to minimize the loss function, the CNN model needs to be trained. In some implementations, the CNN model may be trained using a backpropagation algorithm (BP). The training process of BP consists of a forward propagation process and a back propagation process. In the process of forward propagation (as shown in Figure 6, the propagation from 610 to 650 is forward propagation), the input data is input into the above mentioned layers of the CNN model, processed layer by layer and transmitted to the output layer. If the output result at the output layer is quite different from the ideal result, the minimization of the above loss function is taken as the optimization objective, and it is transferred to back propagation (as shown in Figure 6, the propagation from 650 to 610 is back propagation), and the partial derivative of the optimization objective to the weight of each neuron is obtained layer by layer to form the ladder of the optimization objective to the weight vector, which is used as the basis for modifying the model parameters. The training process of CNN is completed in the parameter modification process. When the above error reaches the expected value, the training process of CNN ends.

It should be noted that the CNN shown in FIG. 6 is only an example of a convolutional neural network, and in a specific application, the convolutional neural network may also exist in the form of other network models, and the embodiment of the presents application do not limit this.

The purpose of RNNs is to process sequence data. In the traditional neural network model (for example, in the CNN model), from the input layer to the hidden layers to the output layer, the layers are fully connected, and the nodes between each layer are unconnected. But this ordinary neural network is powerless for many problems. For example, if you want to predict what the next word in a sentence will be, you usually need to use the previous words, because the words before and after in a sentence are not independent. The reason why RNNs are called recurrent neural networks is that the current output of a sequence is also related to the previous output. The specific manifestation is that the network will memorize the previous information and apply it to the calculation of the current output, that is, the nodes between the hidden layers are no longer unconnected but connected, and the input of the hidden layer includes not only the output of the input layer but also the output of the hidden layer at the previous moment. Theoretically, RNNs are capable of processing sequence data of any length.

The training of RNN is the same as the training of traditional ANN (artificial neural network). The BP error back propagation algorithm is also used, but there is a difference. If RNNs are network expanded, the parameters W, U, V are shared, but traditional neural networks are not. And in using the gradient descent algorithm, the output of each step depends not only on the network of the current step, but also on the states of the network of certain previous steps. For example, when t = 4, three more steps need to be passed backwards, and various gradients need to be added to the backward three steps. This learning algorithm is called back propagation through time (BPTT) algorithm .

Since there are artificial neural network and convolutional neural network, why do we still need recurrent neural networks? The reason is very simple. Whether it is a convolutional neural network or an artificial neural network, their premise is that the elements are independent of each other, and the input and output are also independent, such as cats and dogs. But in the real world, many elements are interconnected, such as the change of stocks over time. One person said that I like traveling, my favorite place is Yunnan, and I will go to _ when I have the opportunity in the future. Fill in the blanks here. Everyone should know that it is "Yunnan". Because we infer it based on the content of the context, it is quite difficult for machine to achieve this step. Therefore, there is the current recurrent neural network, and its essence is to have the ability to remember like a human. Therefore, his output depends on the current input and memory. To explain RNN in one sentence, it means that a unit structure is reused.

At present, in order to solve the problem of gradient explosion or disappearance of RNN, a long short-term memory (LSTM) model is obtained by deformation on the basis of RNN. Referring to FIG. 7, the LSTM introduces a new memory unit $c_t$ (also referred to as "cell state") for linear cyclic information transfer while outputting information to the external state $h_t$ of the hidden layer. At each time t, $c_t$ records history information up to the current time. Unlike RNN, which only considers the most recent state, the memory unit will decide which states should be left and which states should be forgotten, which solves the shortcomings of traditional RNN in long-term memory.

Referring to FIG. 7, in order to realize the selection of the state described above, the memory unit introduces a gate control mechanism to control the path of information transmission, similar to the gate in the data circuit, with "0" indicating closed and "1" indicating open. The memory unit includes a forgetting gate 710, an input gate 720 and an output gate 730. The forgetting gate is used to control how much information the memory unit $c_{t-1}$ at the previous moment needs to forget, the input gate is used to control how much information of the candidate state $\widehat{c_t}$ at the current moment needs to be stored, and the output gate is used to control how much information the memory unit $c_t$ at the current moment needs to output to the external state ht.

## 4. Channel estimation based on AI decoder

The channel estimation based on the AI decoder aims to implement channel estimation by processing pilot signals received by the receiver with an AI-based channel estimation module. FIG. 8 illustrates a process of performing channel estimation based on a channel estimation module. Referring to FIG. 8, the pilot signal received by the receiver 800 is considered as an input to the channel estimation module 810, and accordingly, the channel estimation module 810 processes the input pilot signal to output channel information. In addition, in some implementations, other auxiliary information may be added in addition to the pilot signal to improve the accuracy of channel information output by the channel estimation module. For example, the channel estimation module 810 may also be input with an original sequence of pilot signals pre-stored by the receiver 800, an energy level of the receiver 800 receiving the pilot signals, a transmission delay in transmitting the pilot signals, or noise in transmitting the pilot signals, etc.

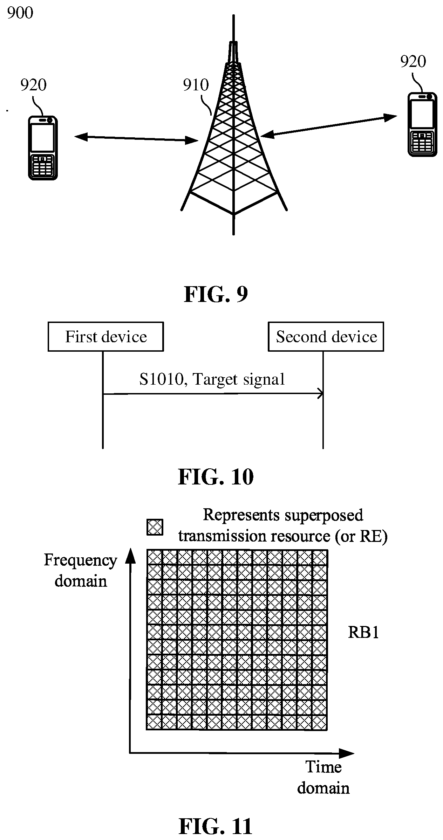

The communication process and terminology related to the embodiments of the present application are described above with reference to FIG. 1 to FIG. 8, and the communication system applicable to the embodiments of the present application is described below with reference to FIG. 9.

FIG. 9 is a radio communication system 900 to which embodiments of the present application are applicable. The radio communication system 900 may include a network device 910. The network device 910 may be a device that communicates with the terminal devices 920. The network device 910 may provide communication coverage for a particular geographic area and may communicate with the terminal devices 920 located within the coverage area.

FIG. 9 exemplarily shows one network device 910 and two terminal devices 920. Alternatively, the radio communication system 900 may include a plurality of network devices, and another number of terminal devices may be included within the coverage of each network device, which is not limited by the embodiments of the present application.

Alternatively, the radio communication system 900 may further include other network entities such as a network controller and a mobility management entity, which is not limited by the embodiments of the present application.

Alternatively, the terminal devices 920 may also communicate directly with each other, for example, the two terminal devices 920 may communicate with each other via a device-to-device (D2D) link.

Note that, in the following description, the first device and the second device will be described as examples. In some implementations, the first device may be the network device 910 described above, and correspondingly, the second device may be the terminal device 920 described above. In other implementations, the first device may be the above described terminal device 920, and correspondingly, the second device may be the above described network device 910. In other implementations, the first device may be the above described terminal device 920, and correspondingly, the second device may be the above described terminal device 920. The embodiments of the present application do not specifically limit this.

It should be understood that the technical solutions of the embodiments of the present application can be applied to various communication systems, such as: a 5th generation (5G) system or a new radio (NR) system, a long term evolution (LTE) system, an LTE frequency division duplex (FDD) system, an LTE time division duplex (TDD), and the like. The technical solutions provided in the present application can also be applied to future communication systems, such as a sixth generation mobile communication system, a satellite communication system, and the like.

The terminal device in the embodiment of the present application may also be referred to as a user equipment (UE), an access terminal, a user unit, a user station, a mobile station, a mobile station (MS), a mobile Terminal (MT), a remote station, a remote terminal, a mobile device, a user terminal, a terminal, a wireless communication device, a user agent, or a user device. The terminal device in the embodiments of the present application may be a device that provides voice and/or data connectivity to a user, and may be used to connect people, objects, and machines, for example, a handheld device having a wireless connection function, a vehicle-mounted device, or the like. The terminal device in the embodiments of the present application may be a mobile phone (mobile phone), a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used to act as a base station. For example, a UE may act as a scheduling entity that provides sidelink signals between UEs in V2X or D2D, etc. For example, cellular telephones and automobiles communicate with each other using sidelink signals. Relaying communication signals through base stations is not needed for communication between cellular phones and smart home devices.

The network device in the embodiments of the present application may be a device for communicating with a terminal device, and the network device may also be referred to as an access network device or a radio access network device, for example, the network device may be a base station. The network device in the embodiments of the present application may refer to a radio access network (RAN) node (or device) that connects the terminal device to the wireless network. The base station may broadly cover or be replaced with various names such as a NodeB, an evolved NodeB, a next generation base station, a relay station, an access point, a transmitting and receiving point, a TRP, a transmitting point, a transmitting point, a primary station MeNB, a secondary station SeNB, an MSR node, a home base station, a network controller, an access point, an access point, a BBU, an active antenna unit, an RRH, a central unit, a distributed unit, a positioning node, and the like. The base station may be a macro base station, a micro base station, a relay node, a donor node, or the like, or a combination thereof. The base station may also refer to a communication module, modem, or chip for disposal within the aforementioned device or apparatus. The base station may also be a mobile switching center, a device that assumes a base station function in device-to-device D2D, vehicle-to-everything (V2X), and machine-to-machine (M2M) communication, a network-side device in a 6G network, a device that assumes a base station function in a future communication system, or the like. The base stations may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present application may refer to a CU or a DU, or the network device includes a CU and a DU. The gNB may also include an AAU.

Network device and terminal device may be deployed on land, including indoor or outdoor, handheld or vehicle-mounted, or may be deployed on the water; or may be deployed on aircraft, balloons and satellites in the air. In the embodiments of the present application, the scenario in which the network device and the terminal device are located is not limited.

It should be understood that the communication device referred to in the present application may be a network device or a terminal device. For example, the first communication device is a network device, and the second communication device is a terminal device. In another example, the first communication device is a terminal device, and the second communication device is a network device. For another example, both the first communication device and the second communication device are network devices or both are terminal devices.

It should also be understood that all or part of the functionality of the communication device in the present application may also be implemented by software functionality running on hardware, or by virtualization functionality instantiated on a platform, such as a cloud platform.

At present, in a known communication system, in order to improve the reliability of transmission signals, signals transmitted on a plurality of transmission resources are transmitted in a manner of orthogonal transmission. Orthogonal transmission can be understood as processing signals transmitted on a plurality of transmission resources into mutually orthogonal signals for transmission, and the orthogonal signals are transmitted independently of each other without interfering with each other. In the scenario of orthogonal transmission, a certain transmission resource can only be used to transmit one signal at a certain time, resulting in low utilization of the transmission resource. On the other hand, when the total transmission resources are constant, if the number of transmission resources occupied by a certain signal (hereinafter, also referred to as "first signal") increases, it means that the number of transmission resources available for transmission of other signals (hereinafter, also referred to as "second signal") decreases, and other signals may not be transmitted in time.

Taking the first signal as a pilot signal and the second signal as a data signal as an example, the pilot signal and the data signal are orthogonally transmitted on different transmission resources. That is to say, for a certain transmission resource, it can only be used to transmit data signal or pilot signal at a certain time, resulting in a low utilization rate of the transmission resource. On the other hand, when the total transmission resources are constant, if the number of transmission resources occupied by the pilot signal increases, it means that the number of transmission resources available for transmitting the data signal decreases, and the data signal may not be transmitted in time. Alternatively, if the number of transmission resources occupied by the data signal increases, it means that the number of transmission resources available for transmitting the pilot signal decreases, which may lead to a decrease in the accuracy of channel estimation based on the pilot signal.

Therefore, in view of the above problems, embodiments of the present application provides a radio communication method in which non-orthogonal transmission can be performed between a first signal and a second signal on the same transmission resource (also referred to as a "target transmission resource") to improve the utilization rate of the transmission resource. Hereinafter, a radio communication method according to embodiments of the present application will be described with reference to FIG. 10. The radio communication method shown in FIG. 10 includes step S1010.

In step S1010, the first device transmits a target signal on the target transmission resource to the second device.

In some implementations, the target signal includes non-orthogonal first signal and second signal. That is, the target signal includes the first signal and the second signal that are transmitted non-orthogonally, or the second signal and the first signal are transmitted non-orthogonally on the target transmission resource.

Based on the above description, it can be seen that the first signal and the second signal that are non-orthogonally transmitted can be transmitted through the target transmission resource at the same time, and it can be understood that the first signal and the second signal are transmitted on the target transmission resource in a superposed manner. Therefore, in the embodiments of the present application, the target transmission resource can also be referred to as a "superposed transmission resource". Hereinafter, the superposition mode of the first signal and the second signal will be described with reference to FIGs. 11 to 58, and will not be repeatedly described here for the sake of simplicity.

In embodiments of the present application, the first signal and the second signal may be different types of signals. For example, the second signal may comprise a data signal, and correspondingly, the first signal may comprise a pilot signal. Here, the pilot signal is also referred to as a reference signal, and the reference signal may be, for example, a CSI-RS, a DMRS, a phase-tracking reference signal (PT-RS), a sounding reference signal (SRS), an SS/PBCH block (SSB synchronization signal block), a positioning reference signal (PRS), or the like. Of course, in the embodiments of the present application, the first signal and the second signal may be other different types of signals.

It should be noted that the solutions of the embodiments of the present application are also applicable to non-orthogonal transmission of a plurality of different types of signals on the target transmission resource. The first signal and the second signal described above can be understood as two signals among a plurality of different types of signals. The solutions of the embodiments of the present application do not limit the number of the above described plurality of signal types.

In some implementations, the first signal and the second signal may be data for the same user, and at this time, the target transmission resource may include a single-stream transmission resource. In other implementations, the first signal and the second signal may be data for different users, and at this time, the target transmission resource may include a multi-stream transmission resource.

The embodiments of the present application do not limit the transmission resource (e.g., target transmission resource). In some implementations, the transmission resource may include one or more of following: time domain resource, frequency domain resource, and code domain resource. For example, when the transmission resource includes a time domain resource, the target transmission resource may be a symbol (also referred to as a "time domain symbol"), a slot, a subframe, a frame, or the like. For example, when the transmission resource includes a frequency domain resource, the transmission resource may include a subcarrier, a bandwidth portion, a frequency band, and the like. For example, when the target transmission resource includes a code domain resource, the target transmission resource may include a codeword. For example, when the target transmission resource includes a time domain resource and a frequency domain resource, the target transmission resource may include a resource element (RE) or a resource block (RB).

In some implementations, the target transmission resource belongs to a transmission resource set. The transmission resource set may include one or more transmission resources. All of the transmission resources in the transmission resource set may be used for transmitting the second signal, and accordingly, part or all of the transmission resources in the transmission resource set may be used for transmitting the first signal. That is, some or all of the transmission resources in the transmission resource set are the target transmission resources. Here, the transmission resource set may be, for example, an RB, and the transmission resource may be, for example, an RE in the RB.

In some implementations, all of the transmission resources in the transmission resource set may be used to transmit the second signal, and accordingly, all of the transmission resources in the transmission resource set may be used to transmit the first signal. Alternatively, all the transmission resources used for transmitting the second signal are used for transmitting the first signal, or the first signal and the second signal are transmitted in a non-orthogonal transmission manner over all the transmission resources used for transmitting the second signal.

In order to facilitate understanding, the transmission methods of the first signal and the second signal in the embodiments of the present application are described below with reference to FIG. 11, taking all transmission resources in the transmission resource set for transmitting the first signal and the second signal as an example. Referring to FIG. 11, assuming that the transmission resource set is RB1, RB1 includes 12 subcarriers in the frequency domain, and RB1 includes 14 symbols in the time domain. Here, all the REs in RB1 are used for transmitting the first signal and the second signal, that is, the first signal and the second signal are superposed and transmitted in a non-orthogonal manner on all the REs in RB1. Therefore, all the REs in the RB 1 may also be referred to as superposed transmission resources.

In the embodiments of the present application, the solution of transmitting the first signal on all transmission resources for transmitting the second signal, or transmitting the first signal and the second signal on all transmission resources in the transmission resource set, compared with the solution of transmitting the first signal on part of the transmission resources for transmitting the second signal, helps to avoid signaling interaction between the second device and the transmitting end for unifying which transmission resources are required for superposing transmission resources. For example, the first device may no longer indicate the superposing transmission resource to the second device.

In other implementations, part of the above transmission resource set may be used for transmitting the second signal, and correspondingly, part of the transmission resource set may be used for transmitting the first signal. Alternatively, a part of the transmission resource used for transmitting the second signal is used for transmitting the first signal, or the first signal and the second signal are transmitted in a non-orthogonal transmission manner over a part of the transmission resource used for transmitting the second signal.

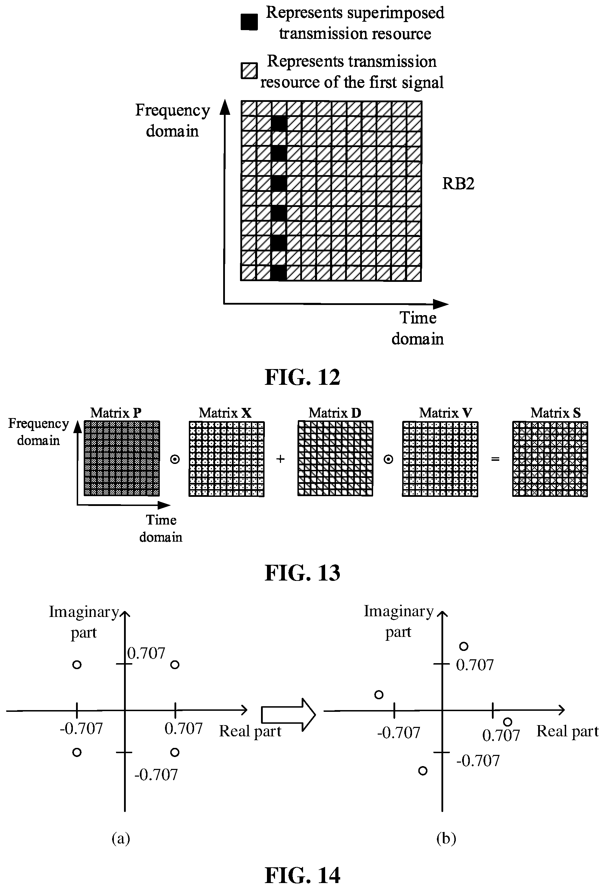

In order to facilitate understanding, the following describes a transmission mode of the second signal and the first signal in another embodiment of the present application with reference to FIG. 12, taking some transmission resources in the transmission resource set for transmitting the first signal and the second signal as an example. Referring to FIG. 12, it is assumed that the transmission resource set is RB2, and RB2 includes 12 subcarriers in the frequency domain, and RB2 includes 14 symbols in the time domain. Accordingly, among the plurality of REs corresponding to symbol 2 of RB2, the first signal is carried in RE0, RE2, RE4, RE6, RE8, and RE10. That is, the first signal and the second signal are superposed and transmitted on RE0, RE2, RE4, RE6, RE8, and RE10 in RB2 in a non-orthogonal manner. Therefore, RE0, RE2, RE4, RE6, RE8, and RE10 may be referred to as superposed transmission resources.

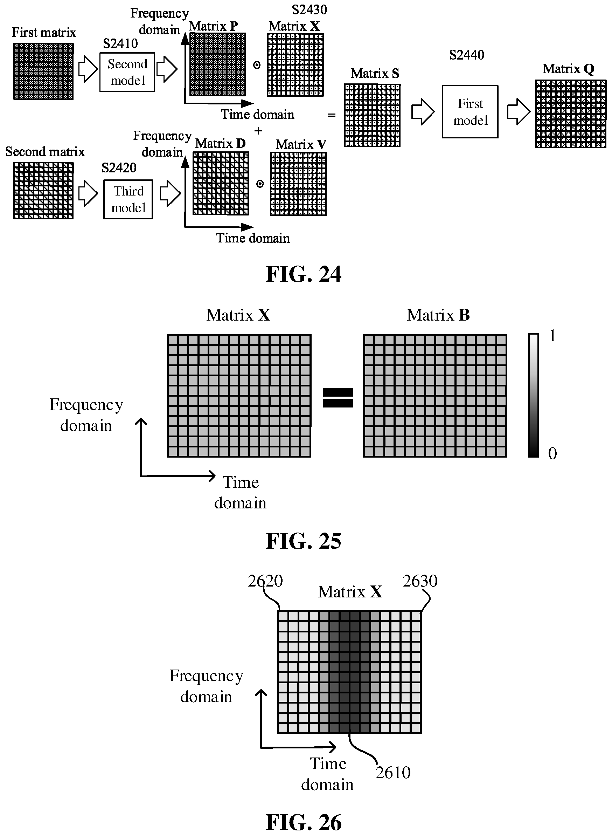

In the embodiments of the present application, the position of the transmission resource for transmitting the first signal is not limited, and taking the first signal being a pilot signal as an example, the position of the transmission resource for transmitting the first signal may be determined based on a transmission pattern of the pilot signal, and the transmission pattern of the pilot signal may be, for example, any of the patterns described above. Of course, in the embodiments of the present application, the determination of the position of the transmission resource for the first signal may also be performed based on the patterns described below with reference to FIGs. 25 to 58.

In the embodiments of the present application, the first signal does not need to occupy all the transmission resources used for transmitting the second signal, which is helpful to improve the flexibility of transmitting the first signal.

As described above, the first signal and the second signal may be transmitted in a non-orthogonal manner on the target transmission resource. In the embodiments of the present application, the non-orthogonal transmission can be divided into non-orthogonal transmission based on linear superposition and non-orthogonal transmission based on non-linear superposition. The following introduces the non-orthogonal transmission mode 1 and the non-orthogonal transmission mode 2 respectively.

**Non-orthogonal transmission mode 1,** the first signal and the second signal are non-orthogonally transmitted in a linear superposition manner on the target transmission resource, or the target signal is generated based on the linear superposition of the first signal and the second signal. In the embodiments of the present application, the non-orthogonal transmission is performed based on the linear superposition method, which, on the one hand, helps to simplify the complexity of the non-orthogonal transmission. On the other hand, performing non-orthogonal transmission based on linear superposition helps to simplify the complexity of identifying a plurality of signals transmitted non-orthogonally by the second device.

In some scenarios, when a signal is transmitted on a transmission resource, there is usually some restriction on the energy of the transmission signal. Therefore, in the embodiments of the present application, when the superposed first signal and second signal are transmitted through the target transmission resource, the energy of the signal transmitted on the target transmission resource may be adjusted by the first parameter and/or the second parameter (or the power of the signal transmitted on the target transmission resource may be adjusted by the first parameter and/or the second parameter). That is, the parameters associated with the above described linear superposition are determined based on the first parameter and/or the second parameter.

It should be noted that the parameter associated with the above described linear superposition method is determined based on the first parameter and/or the second parameter, and it can be understood that the parameter associated with the linear superposition method includes the first parameter and/or the second parameter, or the parameter associated with the linear superposition method is obtained by calculating the first parameter and/or the second parameter, and the embodiments of the present application do not limit this.

In some implementations, the above described first parameter is used to adjust the energy of the first signal transmitted on the target transmission resource. For example, the first parameter is used to increase the energy of the first signal transmitted on the target transmission resource. As another example, the first parameter is used to reduce the energy of the first signal transmitted on the target transmission resource.

In some implementations, the second parameter described above is used to adjust the energy of the second signal transmitted on the target transmission resource. For example, the second parameter is used to increase the energy of the second signal transmitted on the target transmission resource. As another example, the second parameter is used to reduce the energy of the second signal transmitted on the target transmission resource.

In some scenarios, it is stipulated that the signal energy of the signal transmitted on the transmission resource is less than or equal to an energy threshold corresponding to the transmission resource (for example, 1). Accordingly, in some implementations, the parameter (for example, the first parameter and/or the second parameter) associated with the linear superposition method described above are used to adjust the sum of the energy of the first signal transmitted on the target transmission resource and the energy of the second signal transmitted on the target transmission resource to be less than or equal to an energy threshold corresponding to the target transmission resource.

In some implementations, the value of the first parameter may be less than the value of the second parameter, and taking the first signal as a pilot signal and the second signal as a data signal as an example, the value of the first parameter is less than the value of the second parameter, which helps to reduce the influence of the pilot signal on the data signal and improve the success rate of data signal transmission. For example, the value of the first parameter may be 0.1 to 0.5, and correspondingly, the value of the second parameter may be 0.6 to 0.975.

In the embodiments of the present application, the above described energy threshold is not limited. In some implementations, the energy threshold may be determined based on an average energy corresponding to a target transmission resource. For example, the energy threshold may be equal to the average energy corresponding to the target transmission resource. For another example, the energy threshold may be less than the average energy corresponding to the target transmission resource.

In the embodiments of the present application, the above described energy threshold may be predefined, for example, it may be predefined by a communication protocol. Of course, the above energy threshold may be preconfigured, for example, by a network device. The embodiments of the present application are not limited thereto.

In order to facilitate understanding, the non-orthogonal transmission solution based on linear superposition in the embodiments of the present application will be described below in combination with the first parameter and the second parameter. As described above, the target transmission resource belongs to a transmission resource set, and the target signal transmitted on one or more target transmission resources in the transmission resource set is represented by a matrix **S**, and accordingly, the matrix **S** is determined by the formula **S** = **V**⊙**D** + **X**⊙**P,** or the matrix **S** satisfies **V**⊙**D** + **X**⊙**P.** The matrix **V** represents a second parameter associated with the target transmission resource in the transmission resource set. The matrix **X** represents a first parameter associated with a target transmission resource in a transmission resource set. The matrix **D** represents a second signal transmitted on a target transmission resource in the transmission resource set. The matrix **P** represents a first signal transmitted on a target transmission resource in a transmission resource set. ⊙ represents the Hadmard product.

In some implementations, assuming that the energy threshold corresponding to the target transmission resource is 1, the matrix **V** is determined based on the formula $V = sqrt(A)$, and the matrix **X** is determined based on the formula $X = sqrt(1 - A)$, where the matrix A ∈ [0,1], and $sqrt()$ represents the square root calculation.

It should be noted that, in the embodiments of the present application, the number of target transmission resources included in the transmission resource set is not limited, and accordingly, the dimensions of the matrices (for example, the matrix **S**, the matrix **V,** the matrix **D,** the matrix **P,** the matrix **A,** the matrix **V,** the matrix **X,** and the like) described above are associated with the dimensions (or the number) of the target transmission resources in the transmission resource set. For example, each element in the matrix may correspond to one transmission resource in the transmission resource set, and in some implementations, the dimension of the matrix is the same as the dimension of the target transmission resources in the transmission resource set. Taking the transmission resource set as an RB as an example, the RB may be expressed as including N rows and M columns of REs, and all the REs in the RB are superposed transmission resources. Accordingly, the matrix referred to above may be a matrix of N rows and M columns, where M and N are positive integers.

Generally, when the target transmission resources allocated by the system change, the dimension of the above matrix also changes. For example, if the target transmission resources allocated by the system are two RBs, the dimension of the matrix is the same as that of the RE in the two RBs. Assuming that an RB can be expressed as including N rows and M columns of REs, then two RBs include 2N rows and 2M columns of REs, and the dimensions corresponding to the two RBs are 2N rows and 2M columns. At this time, when all of the REs in the two RBs are superposed transmission resources, the dimension of the matrix described above may be a matrix of 2N rows and 2M columns.

The scheme of determining parameters associated with the linear superposition mode based on the first parameter and/or the second parameter in the embodiments of the present application is described above. In other implementations, the parameters associated with the linear superposition may be determined based on a symbol set corresponding to the first signal and a symbol set corresponding to the second signal.

The above symbol set associated with the first signal may include one or more symbols that may be used to transmit the first signal. In some scenarios, in order to improve transmission performance of the first signal, the first signal may be modulated. Accordingly, the above described symbol set associated with the first signal may include modulation symbols associated with modulation constellation points of the first signal. The modulation constellation points of the first signal are associated with the modulation mode of the first signal.

As described above, if the first signal is modulated, accordingly, the amplitude of the first signal indicated in the matrix **P** associated with the first signal may be the modulated amplitude, and/or the phase of the first signal indicated in the matrix **P** associated with the first signal may be the modulated phase. At this time, the matrix **P** associated with the first signal belongs to the modulation constellation point set associated with the modulation mode of the first signal. Taking the modulation mode of the first signal as BPSK as an example, the modulation constellation point set **B** associated with the BPSK can be expressed as **B**= {-1, 1}, and accordingly, the matrix **P** ∈ **B**(the matrix **P** is associated with the first signal).

The above described symbol set associated with the second signal may include one or more symbols that may be used to transmit the second signal. In some scenarios, in order to improve transmission performance of the second signal, the second signal may be modulated. Accordingly, the above described symbol set associated with the second signal may include modulation symbols associated with modulation constellation points of the second signal. The modulation constellation points of the second signal are associated with the modulation mode of the second signal.

As described above, if the second signal is modulated, accordingly, the amplitude of the second signal indicated in the matrix **D** associated with the second signal may be the modulated amplitude and/or the phase of the second signal indicated in the matrix **D** associated with the second signal may be the modulated phase. At this time, the matrix **D** associated with the second signal belongs to the modulation constellation point set associated with the modulation mode of the second signal. Taking the modulation mode of the second signal as 4QAM as an example, the modulation constellation point set **C** associated with the 4QAM can be expressed as **C** = {0.707 +0.707j, 0.707-0.707j, -0.707 +0.707j, -0.707-0.707j}, and accordingly, the matrix **D** ∈

**C** (the matrix **D** is associated with the second signal).

Of course, in the embodiments of the present application, linear superposition may be performed based on the first parameter, the second parameter, the symbol set corresponding to the first signal, and the symbol set corresponding to the second signal. In order to facilitate understanding, a scheme for transmitting the first signal and the second signal based on the linear superposition method provided by the embodiments of the present application will be described below with reference to FIG. 13. Assuming that the second signal is a data signal and the first signal is a pilot signal, the first signal and the second signal are transmitted non-orthogonally on all REs in the RB in a linear superposition manner.

Referring to FIG. 13, if the dimension of the REs in the RB can be expressed as N $\times$ M, the matrix **P** associated with the pilot signal and the matrix **D** associated with the data signal can be expressed as an N $\times$ M matrix, the first parameter can be expressed as a matrix **X** of N $\times$ M, and the second parameter can be a matrix **V** of N $\times$ M. Accordingly, the signal transmitted on each RE in the RB may be expressed as a matrix **S** of N $\times$ M.

From the view of the formula, it can be described as that the matrix **S** is determined by the formula: $\mathbf{S} = \mathbf{V} \odot \mathbf{D} + \mathbf{X} \odot \mathbf{P}$, where matrix $\mathbf{V} = sqrt(\mathbf{A}) \in [0, 1]^{N \times M}$, matrix $\mathbf{X} = sqrt(1 - \mathbf{A}) \in [0, 1]^{N \times M}$, $\mathbf{A} \in [0, 1]^{N \times M}$, matrix $\mathbf{D} \in \mathbf{C}^{N \times M}$, matrix $\mathbf{P} \in \mathbf{B}^{N \times M}$.

In the embodiments of the present application, in order to improve the transmission performance of the first signal, a symbol set associated with the first signal may be associated with a transmission condition of the first signal. Taking the symbol set associated with the first signal being the modulation symbol set associated with the first signal as an example, the modulation symbol set associated with the first signal may be associated with the transmission condition of the first signal. Alternatively, the modulation constellation points associated with the modulation symbol set associated with the first signal may be associated with the transmission condition of the first signal.

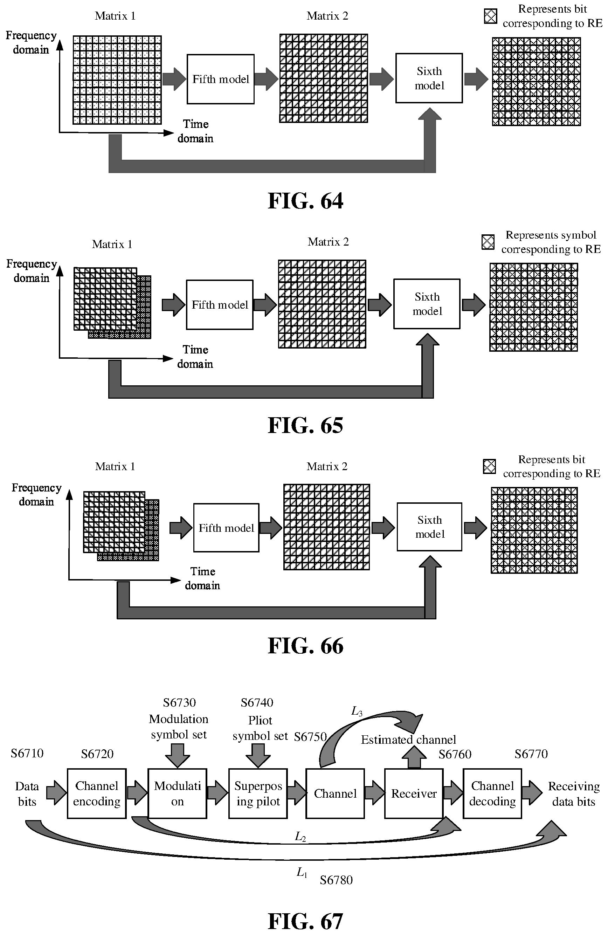

In the embodiments of the present application, the association relationship between the symbol set of the first signal and the transmission condition of the first signal is not limited. For example, the symbol set associated with the transmission condition of the first signal may be obtained after adjusting (or learning) based on a preset initial symbol set during the training process of the AI receiver. The training process can be shown in FIG. 67, and will not be repeatedly described here for the sake of simplicity. In addition, if the symbol set associated with the first signal is independent of the transmission condition, the symbol set associated with the first signal may be preset.

In addition, in order to improve the transmission performance of the second signal, the symbol set associated with the second signal may be associated with the transmission condition of the second signal. Taking the symbol set associated with the second signal being the modulation symbol set associated with the second signal as an example, the modulation symbol set associated with the second signal may be associated with the transmission condition of the second signal. Alternatively, the modulation constellation points associated with the modulation symbol set associated with the second signal may be associated with the transmission condition of the second signal. Of course, in the embodiments of the present application, in order to simplify the complexity of linear superposition, the symbol set associated with the second signal may be independent of the transmission condition.

In the embodiments of the present application, the association relationship between the symbol set of the second signal and the transmission condition of the second signal is not limited. For example, the symbol set associated with the transmission condition of the second signal may be obtained after adjusting (or learning) based on a preset initial symbol set during training of the model-based receiver. The training process can be shown in FIG. 67, and will not be repeatedly described here for the sake of simplicity. In addition, if the symbol set associated with the second signal is independent of the transmission condition, the symbol set associated with the second signal may be preset.

In the embodiments of the present application, the above described transmission conditions are not limited. In some implementations, the transmission condition is associated with one or more of the following: the number of antennas for signal transmission, a channel condition for signal transmission, radio frequency device characteristic for signal transmission, and signal transmission configuration. The signal may be the first signal and/or the second signal described above.

In some implementations, the signal transmission configuration may include the number of antennas for signal transmission. Of course, in the embodiments of the present application, the signal transmission configuration may also include other configurations.

In other implementations, the radio frequency device characteristic for signal transmission may affect the frequency of the signal, the transmission power of the signal, and the like, which are not specifically limited in the embodiments of the present application.

In order to facilitate understanding, with reference to FIG. 14, the scheme of the embodiment of the present application is described below by taking adjustment of the modulation constellation points associated with the second signal as an example. Referring to FIG. 14, assuming that the modulation mode of the second signal is 4QAM modulation, accordingly, as shown in FIG. 14 (a), the initial modulation constellation point set associated with the second signal can be expressed as **C** = {0.707 + 0.707j, 0.707 - 0.707j, -0.707 + 0.707j, -0.707 - 0.707j}. Accordingly, after learning, the learned modulation constellation point set associated with the second signal can be expressed as $\mathbf{C'} = \{(0.707 + x_1) + (0.707 + $

$x_2$)j, (0.707 + $x_3$) - (0.707 + $x_4$)j, -(0.707 + $x_5$) + (0.707 - $x_6$)j, -(0.707 + $x_7$) - (0.707 + $x_8$)j}, as shown in FIG. 14 (b).

Referring to FIGs. 14 (a) to 14 (b), the optimization of the modulation constellation point set of the second signal can be understood as set shaping optimization of the initial modulation constellation point set, which contributes to improving the transmission performance of the second signal.

In some scenarios, the transmission condition may be associated with the learning accuracy of the initial symbol set described above. In some implementations, if the transmission condition is good, it indicates that the transmission performance of the signal is relatively good. At this time, the learning accuracy of the initial symbol set associated with the signal may be low. On the contrary, if the transmission condition is poor, it indicates that the transmission performance of the signal is relatively poor. At this time, the learning accuracy of the initial symbol set associated with the signal may be high, which is helpful to improve the transmission performance of the signal.

Taking the transmission condition including the number of antennas used for signal transmission as an example, if the number of antennas for signal transmission is large, the transmission performance of the signal is relatively good, and at this time, the learning accuracy of the initial symbol set corresponding to the signal may be low. On the contrary, if the number of antennas for signal transmission is small, the transmission performance of the signal is relatively poor, and at this time, the learning accuracy of the initial symbol set corresponding to the signal may be high, which is helpful to improve the transmission performance of the signal.

Taking the transmission condition including the channel condition for signal transmission as an example, if the channel condition for signal transmission is good, it means that the transmission performance of the signal is relatively good, and at this time, the learning accuracy of the initial symbol set corresponding to the signal may be low. On the contrary, if the channel condition for signal transmission is poor, the transmission performance of the signal is relatively poor, and at this time, the learning accuracy of the initial symbol set corresponding to the signal may be high, which is helpful to improve the transmission performance of the signal.

Taking the transmission condition including the radio frequency device characteristic for signal transmission as an example, if the radio frequency device characteristic for signal transmission makes the transmission performance of the signal relatively good, at this time, the learning accuracy of the initial symbol set corresponding to the signal may be low. On the contrary, if the radio frequency device characteristic for signal transmission make the transmission performance of the signal relatively poor, at this time, the learning accuracy of the initial symbol set corresponding to the signal may be high, which is helpful to improve the transmission performance of the signal.

Taking the transmission condition including the transmission configuration of the signal as an example, if the signal transmission configuration is goods, it means that the transmission performance of the signal is relatively good, and at this time, the learning accuracy of the initial symbol set corresponding to the signal may be low. On the contrary, if the signal transmission configuration is bad, it means that the transmission performance of the signal is relatively poor, and at this time, the learning accuracy of the initial symbol set corresponding to the signal may be high, which is helpful to improve the transmission performance of the signal.

**Non-orthogonal transmission mode 2,** the first signal and the second signal are non-orthogonally transmitted in a non-linear superposition manner on the target transmission resource, or the target signal is generated based on the non-linear superposed first signal and second signal. In the embodiments of the present application, generating the target signal based on the non-linear superposition is helpful to improve the flexibility of superposing the first signal and the second signal.

In some implementations, the non-linear superposition may be performing non-linear superposition on the first signal and the second signal based on the first model, or the first model is used for non-linear superposition of the first signal and the second signal. The first model may be, for example, an AI model or a machine learning model. Taking the first model as an AI model as an example, the embodiments of the present application does not limit the field to which the AI model is adapted.

Generally, the weights of the first model may be updated based on the transmission condition of radio communication, and accordingly, the first signal and the second signal are non-linearly superposed using the first model with the updated weights, which contributes to improving the mapping between the target signal and the radio transmission condition, and contributes to improving the probability that the target signal is correctly transmitted.

In some implementations, the non-linear superposition of the first signal and the second signal using the first model may include non-linear superposition of the first signal and the second signal that are spliced, by using the first model.

In the embodiments of the present application, the splicing method is not specifically limited. In some implementations, the splicing method may include splicing the first signal and the second signal in the time domain, or splicing the transmission resources occupied by the first signal and the transmission resources occupied by the second signal in the time domain dimension, or splicing the transmission resources used for transmitting the first signal and the transmission resources used for transmitting the second signal in the time domain dimension.

For example, splicing in the time domain dimension may include that the last time domain resource corresponding to the transmission resources occupied by the first signal is earlier than the first time domain resource corresponding to the transmission resources occupied by the second signal, and the last time domain resources corresponding to the first signal is adjacent to the first time domain resources corresponding to the second signal in the time domain. In other words, the transmission resources occupied by the first signal and the transmission resources occupied by the second signal are continuous in the time domain, and the last time domain resource of the transmission resources occupied by the first signal is earlier than the first time domain resource corresponding to the transmission resources occupied by the second signal.

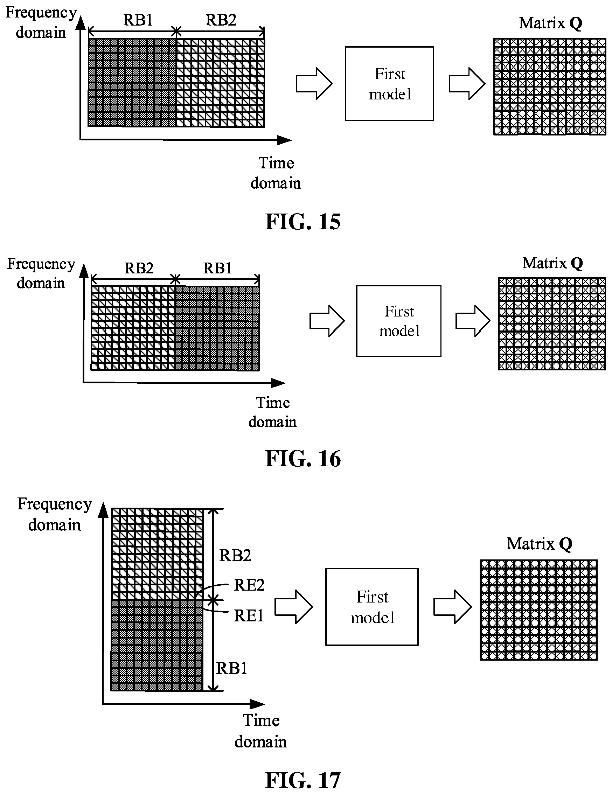

Referring to FIG. 15, taking the time domain resource as a symbol corresponding to the RE as an example, the transmission resources occupied by the first signal includes RB1, and the transmission resources occupied by the second signal includes RB2. Accordingly, the transmission resources occupied by the first signal and the transmission resources occupied by the second signal are spliced in the time domain, and it can be understood that the RE in the RB1 and the RE in the RB2 are spliced in the time domain. That is, the last symbol in RB1 and the first symbol in RB2 are spliced so that the last symbol in RB1 is a symbol next to the first symbol in RB2.

For another example, splicing in the time domain dimension may include that the last time domain resource corresponding to the transmission resources occupied by the first signal is earlier than the first time domain resource corresponding to the transmission resources occupied by the second signal, and the last time domain resource corresponding to the first signal is adjacent to the first time domain resource corresponding to the second signal. In other words, the transmission resources occupied by the first signal and the transmission resources occupied by the second signal are continuous in the time domain, and the last time domain resource of the transmission resources occupied by the second signal is earlier than the first time domain resources corresponding to the transmission resource occupied by the first signal.

As shown in FIG. 16, taking the time domain resource as a symbol corresponding to the RE as an example, the transmission resources occupied by the first signal includes RB1, and the transmission resources occupied by the second signal includes RB2. Accordingly, the transmission resources occupied by the first signal and the transmission resources occupied by the second signal are spliced in the time domain, and it can be understood that the RE in the RB2 and the RE in the RB1 are spliced in the time domain. That is, the last symbol in RB2 and the first symbol in RB1 are spliced so that the last symbol in RB2 is a symbol next to the first symbol in RB1.

In other implementations, the above splicing method may include splicing the first signal and the second signal in the frequency domain, or splicing the transmission resources occupied by the second signal and the transmission resources occupied by the first signal in the frequency domain dimension.

For example, the first frequency domain resource among the transmission resources occupied by the first signal is a frequency domain resource having the highest frequency among the transmission resources occupied by the first signal, and the second frequency domain resource among the transmission resources occupied by the second signal is a frequency domain resource having the lowest frequency among the transmission resources occupied by the second signal. Accordingly, splicing in the frequency domain dimension may include that the frequency of the first frequency domain resource is lower than the frequency of the second frequency domain resource, and the frequency of the first frequency domain resource is continuous with the frequency of the second frequency domain resource.

Referring to FIG. 17, the transmission resources occupied by the first signal includes RB1, and the first frequency domain resource is RE1 having the highest frequency in RB1. The transmission resources occupied by the second signal includes RB2, and the second frequency domain resource is RE2 having the lowest frequency in RB2. Accordingly, splicing the transmission resources occupied by the first signal and the transmission resources occupied by the second signal in the frequency domain can be understood as splicing RE1 and RE2 in the frequency domain so that the spliced RE1 and RE2 are continuous in the frequency domain, and the frequency corresponding to RE1 is lower than the frequency corresponding to RE2.

For another example, a third frequency domain resource among the transmission resources occupied by the first signal is a frequency domain resource having the lowest frequency among the transmission resources occupied by the first signal, and a fourth frequency domain resource among the transmission resources occupied by the second signal is a frequency domain resource having the highest frequency among the transmission resources occupied by the second signal. Accordingly, splicing in the frequency domain dimension may include that the frequency of the third frequency domain resource is higher than the frequency of the fourth frequency domain resource, and the frequency of the third frequency domain resource is continuous with the frequency of the fourth frequency domain resource.

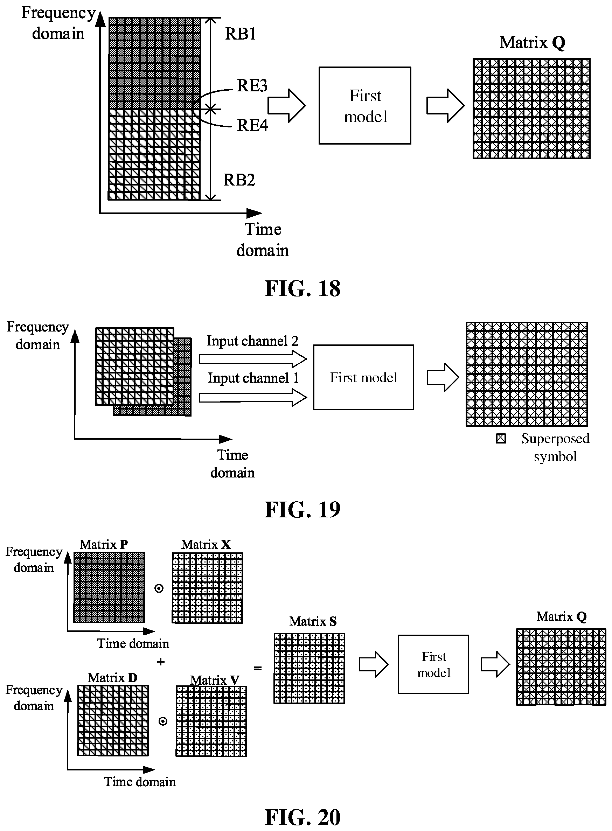

Referring to FIG. 18, the transmission resources occupied by the first signal includes RB1, and the third frequency domain resource is RE3 having the lowest frequency in RB1. The transmission resources occupied by the second signal includes RB2, and the fourth frequency domain resource is RE4 having the highest frequency in RB2. Accordingly, splicing the transmission resources occupied by the first signal and the transmission resources occupied by the second signal in the frequency domain can be understood as splicing RE3 and RE4 in the frequency domain so that the spliced RE3 and RE4 are continuous in the frequency domain, and the frequency corresponding to RE3 is higher than the frequency corresponding to RE4.

In other implementations, the above splicing method may include splicing based on an input channel of a first signal and an input channel of a second signal. The input channels are input channels of the first model. That is, the first model may include an input channel of the first signal and an input channel of the second signal. Accordingly, the splicing method may include splicing the first signal input through the input channel of the first signal with the second signal input through the input channel of the second signal.

It should be noted that in the above described splicing process based on input channels, signals input through different input channels may be associated with different weights. Of course, signals input through different input channels may be associated with the same weights. The embodiments of the present application do not limit this. Taking the weight associated with the input channel of the first signal being the weight 1 and the weight associated with the input channel of the second signal being the weight 2 as an example, the spliced signal may be determined based on the weight associated with the input channel 1, the weight associated with the first signal, the weight associated with the input channel 2, and the second signal. For example, the spliced signal may be determined based on the sum of the processed first signal and the processed second signal. The processed first signal may be determined based on the first weight and the first signal, and the processed second signal may be determined based on the second weight and the second signal.

Referring to FIG. 19, a first signal may be input to the first model through input channel 1, and a second signal may be input to the first model through input channel 2. Accordingly, before the first signal and the second signal are non-linearly superposed using the first model, the first signal and the second signal may be spliced based on the input channels to obtain the spliced signal.

In the embodiments of the present application, the splicing method based on the input channels is not specifically limited. In some implementations, the spliced signal may be determined based on the sum of the processed first signal and the processed second signal. The processed first signal may be determined based on the first signal and the first weight associated with the first input channel, and the processed second signal may be determined based on the second signal and the second weight associated with the second input channel.

In the embodiments of the present application, the generation method of the spliced signal is not specifically limited. For example, the spliced signal may be equal to the sum of the processed first signal and the processed second signal. For another example, the spliced signal may be obtained by processing the sum of the processed first signal and the processed second signal.

Further, the above processed first signal is determined based on the first weight and the first signal, and may include, for example, that the processed first signal is equal to the product of the first weight and the first signal. Another example may include that the processed first signal is obtained by processing the product of the first weight and the first signal. Accordingly, the above processed second signal is determined based on the second weight and the second signal, for example, may include that the processed second signal is equal to the product of the second weight and the second signal. Another example may include that the processed second signal is obtained by processing the product of the second weight and the second signal.

The scheme of non-linear superposition of the spliced first signal and the second signal using the first model has been described above. In the embodiments of the present application, the first signal and the second signal that are the linearly superposed may be non-linearly superposed using the first model. The scheme of linear superposition can refer to the scheme in the non-orthogonal transmission mode 1 described above, and will not be repeated here for the sake of simplicity.

Referring to FIG. 20, assuming that the dimension of REs in the RB can be expressed as $N \times M$, the matrix $P$ associated with pilot signal and the matrix $D$ associated with data signal can be expressed as matrices of $N \times M$, the first parameter can be expressed as matrix $X$ of $N \times M$, and the second parameter can be matrix $V$ of $N \times M$. Accordingly, the linear superposition matrix $S$ can be expressed as $S = V \odot D + X \odot P$ determination, where matrix $V = sqrt(A) \in [0, 1]^{N \times M}$, matrix $X = sqrt(1 - A) \in [0, 1]^{N \times M}$, $A \in [0, 1]^{N \times M}$, matrix $D \in C^{N \times M}$, and matrix $P \in B^{N \times M}$. After that, the matrix $S$ is input to the first model, and the linearly superposed matrix $S$ is non-linearly superposed using the first model to obtain a matrix $Q$ representing the target signal.

As described above, after the first signal and the second signal are non-linear superposed based on the first model, the size of the transmission resource set may exceed, or the dimension of the superposed first signal and second signal may be larger than the dimension corresponding to the transmission resource set. Accordingly, the first model may process the first signal as well as the second signal to match the size of the transmission resource set. In some implementations, the first model may include a down-sampling calculation process, and accordingly, the first model may use the down-sampling calculation process to process the first signal and the second signal to match the size of the transmission resource set. For example, if the first model is a CNN, the first model may use a down-sampling calculation process in a convolution process performed on the first signal and the second signal, so that a non-linear superposition result of the first signal and the second signal output by the first model matches the size of the transmission resource set. For another example, if the first model is a CNN, and the first signal and the second signal are spliced based on the input channels. In this case, the number of convolution channels in the first model may be adjusted so that the non-linear superposition result of the first signal and the second signal output by the first model matches the size of the transmission resource set.

In order to improve the adaptability between the signal to be transmitted and the characteristics of the radio environment, in some implementations, the first signal may be pre-processed with the second model before the linear or non-linear superposition based on the first signal. The second model is used to adjust the symbol set of the first signal. Taking the symbol set being a modulation constellation point set as an example, the second model can be used to adjust the modulation constellation points of the first signal.

In the embodiments of the present application, the method of obtaining the parameters in the second model is not limited. For example, the parameters in the second model may be learned based on modulation constellation points of different signals during the training phase. For another example, the parameters in the second model may be obtained based on learning the association between different signals in the time domain and/or the frequency domain during the training phase. Hereinafter, the training process of the embodiments of the present application will be described in detail, and for the sake of brevity, the training process will not be limited herein.

In other implementations, the second signal may be pre-processed with a third model before linear or non-linear superposition based on the second signal. The third model is used to adjust the symbol set of the second signal. Taking the symbol set being the modulation constellation point set as an example, the third model can be used to adjust the modulation constellation points of the second signal.

In the embodiments of the present application, the method of obtaining the parameters in the third model is not limited. For example, the parameters in the third model may be obtained by learning based on modulation constellation points of different signals in the training phase. For another example, the parameters in the third model may be obtained based on learning the association between different signals in the time domain and/or the frequency domain during the training phase. Hereinafter, the training process of the embodiments of the present application will be described in detail, and for the sake of brevity, the training process will not be limited herein.

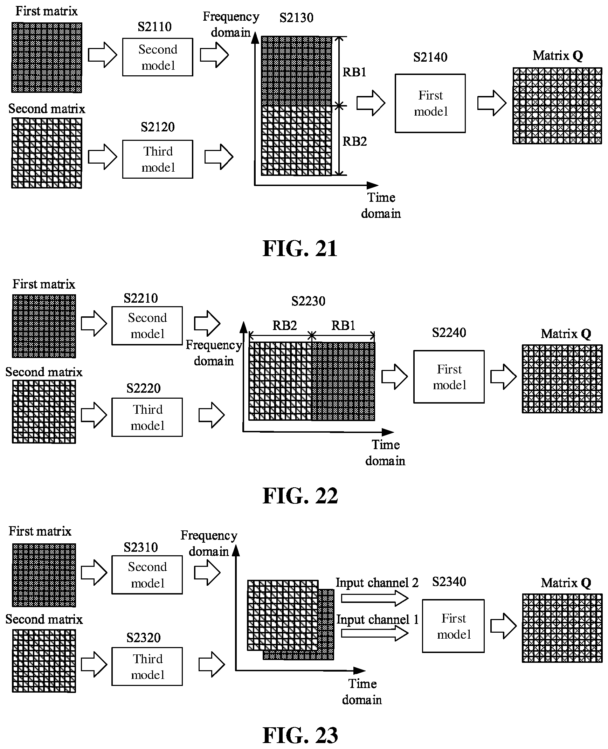

Of course, in the embodiments of the present application, in order to improve the adaptability of the first signal and the second signal that are transmitted non-orthogonally to the radio communication environment, the above-described second model and the third model may be used in combination. That is, the second model is used to process the symbol set corresponding to the first signal to obtain the processed first signal. The third model is used to process the symbol set corresponding to the second signal to obtain the processed second signal. Based on the processed first signal and the processed second signal, non-linear superposition is performed by using the first model. In order to facilitate understanding, a scheme of preprocessing a signal based on the second model and the third model in the embodiments of the present application will be described below with reference to FIGS. 21 to 25.

Referring to FIG. 21, it is assumed that the first matrix represents a first signal transmitted on each RE in RB1, and the second matrix represents a second signal transmitted on each RE in RB2. Referring to step S2110, the first matrix is input to the second model to adjust the constellation modulation points of the first matrix, and then the second model outputs the adjusted first matrix. Referring to step S2120, the second matrix is input to the third model to adjust the constellation modulation points of the second matrix, and then the third model outputs the adjusted second matrix. Referring to step S2130, the adjusted first matrix and the adjusted second matrix are spliced in the frequency domain to obtain the spliced matrix. Referring to step S2140, the spliced matrix is input to the first model for non-linear superposition, and the superposed matrix **Q** is output. The superposed matrix **Q** is used to represent the first signal and the second signal that are superposed on each RE in the RB.

Referring to FIG. 22, it is assumed that the first matrix represents a first signal transmitted on each RE in RB1, and the second matrix represents a second signal transmitted on each RE in RB2. Referring to step S2210, the first matrix is input to the second model to adjust the constellation modulation points of the first matrix, and then the second model outputs the adjusted first matrix. Referring to step S2220, the second matrix is input to the third model to adjust the constellation modulation points of the second matrix, and then the third model outputs the adjusted second matrix. Referring to step S2230, the adjusted first matrix and the adjusted second matrix are spliced in the time domain to obtain the spliced matrix. Referring to step S 2240, the spliced matrix is input to the first model for non-linear superposition, and the superposed matrix **Q** is output. The superposed matrix **Q** is used to represent the first signal and the second signal that are superposed on each RE in the RB.

Referring to FIG. 23, it is assumed that the first matrix represents a first signal transmitted on each RE in RB1, and the second matrix represents a second signal transmitted on each RE in RB2. Referring to step S2310, the first matrix is input to the second model to adjust the constellation modulation points of the first matrix, and then the second model outputs the adjusted first matrix. Referring to step S2320, the second matrix is input to the third model to adjust the constellation modulation points of the second matrix, and then the third model outputs the adjusted second matrix. Referring to step S2330, the adjusted first matrix and the adjusted second matrix are spliced based on the input channels of the first model to obtain the spliced matrix. Referring to step S2340, the spliced matrix is input to the first model for non-linear superposition, and the superposed matrix **Q** is output. The superposed matrix **Q** is used to represent the first signal and the second signal that are superposed on each RE in the RB.

Referring to FIG. 24, it is assumed that the first matrix represents a first signal transmitted on each RE in RB1, and the second matrix represents a second signal transmitted on each RE in RB2. Referring to step S2410, the first matrix is input to the second model to adjust the constellation modulation points of the first matrix, and then the second model outputs the adjusted first matrix. Referring to step S2420, the second matrix is input to the third model to adjust the constellation modulation points of the second matrix, and then the third model outputs the adjusted second matrix. Referring to step S2430, the adjusted first matrix and the second matrix are linearly superposed on the basis of the matrix associated with the first parameter and the matrix associated with the second parameter to obtain the linearly superposed matrix **S.** Referring to step S2440, the spliced matrix **S** is input to the first model for non-linear superposition, and the superposed matrix **Q** is output. The superposed matrix **Q** is used to represent the first signal and the second signal that are superposed on each RE in the RB.

The non-orthogonal transmission mode 1 and the non-orthogonal transmission mode 2 in the embodiments of the present application have been described above with reference to FIGS. 11 to 24. Of course, other non-orthogonal transmission modes may also be adopted in the embodiments of the present application, and the following description is based on the first parameter in combination with the non-orthogonal transmission modes 3 to 6.

In some implementations, the first parameter is associated with the target transmission resource for adjusting the energy of the first signal on the target transmission resource. Or the first parameter is used to adjust the power of the first signal on the target transmission resource. For example, the first parameter may be the first parameter in the above non-orthogonal transmission mode 1.

**In non-orthogonal transmission mode 3,** the first parameters associated with a plurality of target transmission resources located in the same time domain unit in the first resource set are the same. The first resource set may include one or more target transmission resources.

In some implementations, the first set of resources may include one or more time domain units. If the first resource set includes a plurality of time domain units, the first parameters associated with the target transmission resource in each time domain unit of the plurality of time domain units may be the same.

In the embodiments of the present application, the value range of the first parameter is not limited. In some implementations, the value range of the first parameter may be between 0 and 1. For example, the value of the first parameter may be 0.05, the value of the first parameter may be 0.1, the value of the first parameter may be 0.2, and the value of the first parameter may be 0.4. For another example, the setting of the first parameter may cause that the energy of the target signal transmitted on the target transmission resource is less than an energy threshold associated with the target transmission resource. In other implementations, the setting of the first parameter may cause that the power of the target signal transmitted on the target transmission resource is less than a power threshold associated with the target transmission resource.

In the embodiments of the present application, the time domain unit is not limited. For example, the time domain unit may be a symbol, a slot, a mini slot, a subframe, or the like. Taking the time domain unit being a symbol as an example, the RE in the symbol can be used as an example of the target transmission resource described above.

In order to facilitate understanding, the first parameters associated with the target transmission resources in the first resource set in the embodiments of the present application will be described below with reference to FIG. 25. Referring to FIG. 25, assuming that the first resource set is an RB and each RE in the RB is a target transmission resource, the target transmission resources in the first resource set may be expressed as an matrix of N $\times$ M. Accordingly, the first parameters associated with the target transmission resources in the first resource set may be expressed as a matrix **X** of N $\times$ M, where all elements in the matrix **X** are equal, i.e., $\mathbf{X}_{k,i} = \mathbf{X}_{k,j} = Y(i \neq j, i, jE[1, M], k \in [1, N])$, $\mathbf{X}_{k,i}$ represents the element of the k-th row and i-th column in the matrix **X**, and $\mathbf{X}_{k,j}$ represents the element of the k-th row and j-th column in the matrix **X**. The matrix **X** is determined based on the matrix **B**, where $\mathbf{B}_{k,i} = \mathbf{B}_{k,j} = Y(i \neq j, i, jE[1, M], kE[1, N])$, $\mathbf{B}_{k,i}$ denotes the element of the k-th row and the i-th column in the matrix **B**, and $\mathbf{B}_{k,j}$ denotes the element of the k-th row and the j-th column in the matrix **B.**

In some implementations, the setting manner of the first parameters described above may be determined based on the pattern. For example, the first parameters illustrated in FIG. 25 may serve as a pattern for determining the first parameters associated with the target transmission resources in the first resource set.

The setting method of the first parameter according to the embodiments of the present application is relatively simple, and helps to reduce the overhead of transmitting the configuration parameters required for configuring the first parameters. Further, since there are few configuration parameters required for configuring the first parameters, the setting method of the first parameters in the embodiments of the present application can be applied to a high-speed movement scene.

**In non-orthogonal transmission mode 4,** the first parameters associated with a plurality of target transmission resources located in different time domain units in the first resource set may be partially or completely different, where the first resource set may include one or more target transmission resources.

For example, the first set of resources may include a time domain unit 1 and a time domain unit 2. The first parameter(s) associated with the target transmission resource(s) in the time domain unit 1 are different from the first parameter(s) associated with the target transmission resource(s) in time domain unit 2. The time domain unit 1 and the time domain unit 2 are two time domain units in the first resource set, or the time domain unit 1 and the time domain unit 2 are any two time domain units in the first resource set.

For another example, the first resource set may include the time domain unit 1 to the time domain unit 5, the first parameter(s) associated with the target transmission resource(s) in the time domain unit 1 is different from the first parameter(s) associated with the target transmission resource(s) in the time domain unit 5, and the first parameters associated with the target transmission resources in the time domain units 2 to 4 are the same.

In the embodiments of the present application, there is no limitation on the way of the change of the first parameters associated with the target transmission resources in different time domain units in the first resource set. Hereinafter, based on the first time domain position and the second time domain position, the change rule of the first parameters in the embodiments of the present application is described in conjunction with Examples 4-1 to 4-4. The first time domain position and the second time domain position are two different time domain positions among the time domain positions where the target transmission resource in the first resource set is located.

In some implementations, the first time domain position may be the earliest time domain position in the first resource set, or the first time domain position may be earlier in the time domain than other time domain positions, in the first resource set, other than the first time domain position. When the first resource set is the RB, the first time domain position may be the time domain position of the first symbol in the RB. Of course, in the embodiments of the present application, the first time domain position may be the latest time domain position in the first resource set, or the first time domain position may be not earlier than other time domain positions, in the first resource set, other than the first time domain position. When the first resource set is the RB, the first time domain position may be the time domain position of the last symbol in the RB.

In other implementations, the second time domain location is a central time domain location of the first set of resources. The central time domain location may comprise one or more time domain units. When the first resource set includes RE1, RE2, and RE3 that are continuous in the time domain, the central time domain location of the first resource set may be the time domain location of RE2. For example, when the first resource set includes RE1, RE2, RE3, RE4, and RE5 that are continuous in the time domain, the central time domain position of the first resource set may be the time domain position of RE2 to RE4.

Of course, in the embodiments of the present application, the second time domain position may be the earliest time domain position in the first resource set, or the second time domain position may be earlier in the time domain than other time domain positions, in the first resource set, other than the second time domain position. When the first resource set is the RB, the second time domain position may be the time domain position of the first symbol in the RB. Of course, in the embodiments of the present application, the second time domain location may be the latest time domain location in the first resource set, or the second time domain location may be not earlier than other time domain locations, in the first resource set, other than the second time domain location. When the first resource set is the RB, the second time domain position may be the time domain position of the last symbol in the RB.

In the embodiments of the present application, the combination mode between the first time domain position and the second time domain position is not limited. For example, the first time domain location may be the earliest time domain location in the first resource set, and the second time domain location may be the latest time domain location in the first resource set. For another example, the first time domain position may be the earliest time domain position in the time domain of the first resource set, and the second time domain position may be a central time domain position of the first resource set. For another example, the first time domain position may be the latest time domain position in the time domain of the first resource set, and the second time domain position may be a central time domain position of the first resource set.

In some implementations, if the second time domain position is the central time domain position, the change trend of the first parameters in the first resource set may be axisymmetric, and the axisymmetry may be understood as axisymmetry with the central time domain position as the central axis. That is, if the second time domain position is the central frequency domain position, the change trends of the first parameters associated with the target transmission resources on both sides of the second time domain position are opposite. Of course, in the embodiments of the present application, if the second time domain position is the central time domain position, the change trends of the first parameters associated with the target transmission resources on both sides of the second time domain position may be the same, and the embodiments of the present application does not limit this.

**In Example 4-1,** the target transmission resources located between the first time domain location and the second time domain location satisfies Rule 4-1.

In some implementations, Rule 4-1 includes the first parameter associated with each target transmission resource is increased, in the order of time domain units from early to late in the time domain. For example, if the time domain unit 1 is earlier than the time domain unit 2 in the time domain, the value of the first parameter associated with the target transmission resource in the time domain unit 1 is smaller than the value of the first parameter associated with the target transmission resource in the time domain unit 2.

In some implementations, if the above described rule 4-1 is combined with the change of the first parameters in the first resource set described above in an axisymmetric change trend. See FIG. 26 and below description, the change trend of the first parameters associated with the target transmission resources in the first resource set decreases from the central time domain position to the edge time domain position. Such a change trend of the first parameter may be applicable to a scenario in which the communication device moves at a low speed.

It should be noted that, in the first resource set, the first parameters associated with the target transmission resources in the same time domain unit may be the same, or the first parameters associated with the target transmission resources corresponding to different frequencies in the same time domain unit may be the same. Of course, in the embodiments of the present application, the first parameters associated with the target transmission resources in the same time domain unit in the first resource set may be partially or completely different.

In the embodiments of the present application, the method of increasing the first parameter is not limited. For example, the first parameters associated with the first resource set may be incremented by a fixed step size, where the fixed step size may be a fixed value (e.g., 0.05) or a fixed proportional value (e.g., 0.5%). For another example, the first parameters associated with the first resource set may be incremented in a variable step size.

In order to facilitate understanding, the change mode of the first parameters in the embodiments of the present application will be described below with reference to FIG. 26. Assuming that the first resource set is an RB, the target transmission resources in the first resource set may be expressed as N × M REs.

Referring to FIG. 26, the second time domain position 2610 is the center time domain position of the RB, and the first time domain position 2620 is the time domain position of the earliest RE in the RB. Accordingly, the first parameters associated with the target transmission resources between the second time domain position 2610 and the first time domain position 2620 satisfies the above rule 4-1, that is, the first parameter associated with each target transmission resource is increased, in the order of the time domain unit from early to late in the time domain. In addition, the change trend of the first parameters associated with the time domain units in the first resource set is axisymmetric, that is, the change trend of the first parameters associated with the target transmission resources between the RE (see 2630) having the latest time domain position in the first resource set and the second time domain position is opposite to the change trend of the first parameters associated with the target transmission resources between the second time domain position 2610 and the first time domain position 2620. In such case, it can be understood that in the first resource set, the change trend of the first parameters associated with the target transmission resources decreases from the central time domain position to the edge time domain position.

**In Example 4-2,** the target transmission resources located between the first time domain location and the second time domain location satisfy rule 4-2.

In some implementations, rule 4-2 includes increasing the first parameter associated with the target transmission resource every q time domain units, in the order of the time domain units in the time domain from early to late, where q is a positive integer greater than or equal to 0. It should be understood that when the value of q is 0, the change trend of the first parameters associated with the target transmission resources in the first resource set can be referenced to the description in Example 4-1, and for the sake of brevity, the description will not be repeated here.

In some implementations, the value of q may be a fixed value. Of course, in other implementations, the value of q may be variable, for example, the value of q may vary randomly.

In addition, in the embodiments of the present application, the mode of the change of the first parameters is not limited. In some implementations, the first parameters may vary according to a first proportion. For example, the manner in which the first parameters are changed may include changing by a proportional coefficient r every q time domain units. In other implementations, the first parameters may vary according to a first step. For another example, the mode of changing the first parameters may include changing by the first step every q time domain units.

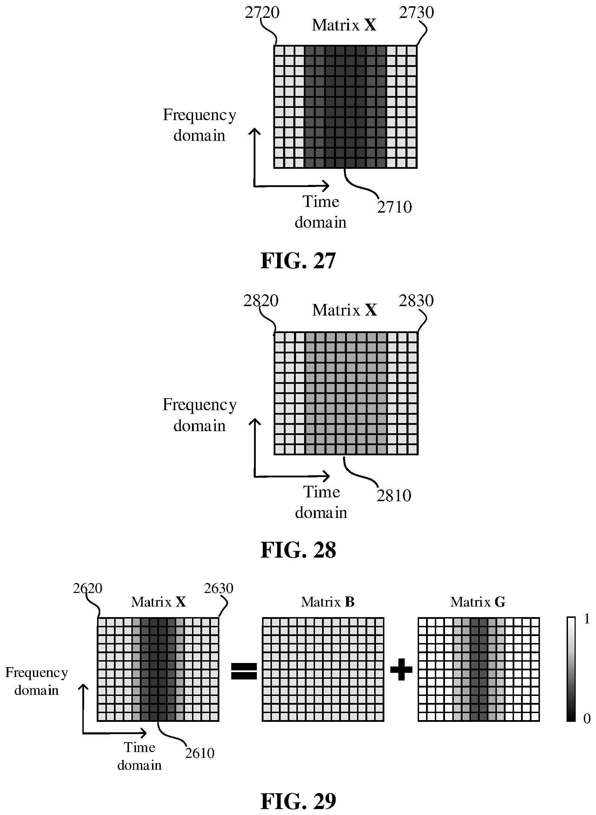

In some implementations, if the above described rule 4-2 is combined with the aforementioned change trend that the change of the first parameters in the first resource set is axisymmetric, see FIG. 27 or FIG. 28 and the below description, the change trend of the first parameters associated with the target transmission resources in the first resource set decrease from the central time domain position to the edge time domain position. Such a change trend of the first parameters may be applicable to a scenario in which the communication device moves at a low speed.

It should be noted that, the first parameters associated with target transmission resources in the same time domain unit in the first resource set may be the same, or the first parameters associated with target transmission resources corresponding to different frequencies in the same time domain unit may be the same. Of course, in the embodiments of the present application, the first parameters associated with the target transmission resources in the same time domain unit in the first resource set may be partially or completely different.

In the embodiments of the present application, the method of increasing the first parameters is not limited. For example, the first parameters associated with the first resource set may be incremented by a fixed step size, where the fixed step size may be a fixed value (e.g., 0.05) or a fixed proportional value (e.g., 0.5%). For another example, the first parameters associated with the first resource set may be incremented by a variable step size.

In order to facilitate understanding, the change mode of the first parameters in the embodiments of the present application will be described below with reference to FIGs. 27 and 28. Assuming that the first resource set is an RB, the target transmission resources in the first resource set may be expressed as N × M REs.

Referring to FIG. 27, it is assumed that the value of q is 2, the second time domain position 2710 is the central time domain position of the RB, and the first time domain position 2720 is the time domain position of the earliest RE in the RB. Accordingly, the first parameters associated with the target transmission resources between the second time domain position 2710 and the first time domain position 2720 satisfy the above rule 4-2, that is, the first parameters associated with the target transmission resources increase every 2 time domain units, in the order of time domain units from early to late in the time domain. In addition, the change trend of the first parameters associated with the time domain units in the first resource set is axisymmetric, that is, the change trend of the first parameters associated with the target transmission resources between the RE (see 2730) having the latest time domain position in the first resource set and the second time domain position is opposite to the change trend of the first parameters associated with the target transmission resources between the second time domain position 2710 and the first time domain position 2720. In such case, it can be understood that in the first resource set, the change trend of the first parameters associated with the target transmission resources decrease from the central time domain position to the edge time domain position.

Referring to FIG. 28, it is assumed that the value of q is 4, the second time domain position 2810 is the central time domain position of the RB, and the first time domain position 2820 is the time domain position of the earliest RE in the RB. Accordingly, the first parameters associated with the target transmission resources between the second time domain position 2810 and the first time domain position 2820 satisfy the above rule 4-2, that is, the first parameters associated with the target transmission resources increase every 4 time domain units, in the order of time domain units from early to late in the time domain. In addition, the change trend of the first parameters associated with the time domain units in the first resource set is axisymmetric, that is, the change trend of the first parameters associated with the target transmission resources between the RE (see 2830) having the latest time domain position in the first resource set and the second time domain position is opposite to the change trend of the first parameters associated with the target transmission resources between the second time domain position 2810 and the first time domain position 2820. In such case, it can be understood that in the first resource set, the change trend of the first parameters associated with the target transmission resources decrease from the central time domain position to the edge time domain position.

In some scenarios, the change trend of the first parameters introduced above in connection with Example 4-1 and Example 4-2 may be represented by two parameters (parameter 1 and parameter 2), where parameter 1 represents an initial value of the first parameter associated with each target transmission resource in the first resource set. Parameter 2 represents adjustment values of first parameters associated with target transmission resources in a first resource set. The setting of the parameter 2 may cause that the change of the first parameters associated with the target transmission resources in the first resource set satisfies the above described rule 4-1 and/or rule 4-2. That is, the first parameters are obtained by adjusting the initial values indicated by the parameter 1 according to the adjustment values indicated by the parameter 2. Therefore, it can be seen that the change trend of the first parameters associated with the target transmission resources in the first resource set is determined based on the change trend of the adjustment values in the parameter 2, or that the change trend of the first parameters associated with the target transmission resources in the first resource set matches the change trend of the adjustment values in the parameter 2, for example, the change trend of the first parameters associated with the target transmission resources in the first resource set is the same as the change trend of the adjustment values in the parameter 2.

Taking the target transmission resources included in the first resource set being an matrix of N × M as an example, the first parameters associated with the target transmission resources in the first resource set may be expressed as a matrix **X,** and the parameter 1 and the parameter 2 may be expressed by a matrix **B** of N × M and a matrix **G** of N × M, respectively. Accordingly, the matrix **X** is obtained by adjusting the initial values indicated by the matrix **B** according to the adjustment values indicated by the matrix **G**. For example, matrix **X** = matrix **B** + matrix **G**. Therefore, the matrix **B** can also be called the base matrix, and the matrix **G** can also be called the gradient matrix.

In some implementations, the initial values of the first parameters associated with the target transmission resources in the first resource set may be the same, helping to simplify the configuration process of the initial values. Taking the matrix **B** as an example, the matrix **B** satisfies $\mathbf{B}_{k,i} = \mathbf{B}_{k,j} = Y (i \neq j, i, j \in [1, M], k \in [1, N])$. Of course, in the embodiments of the present application, the initial values of the first parameters may be different.

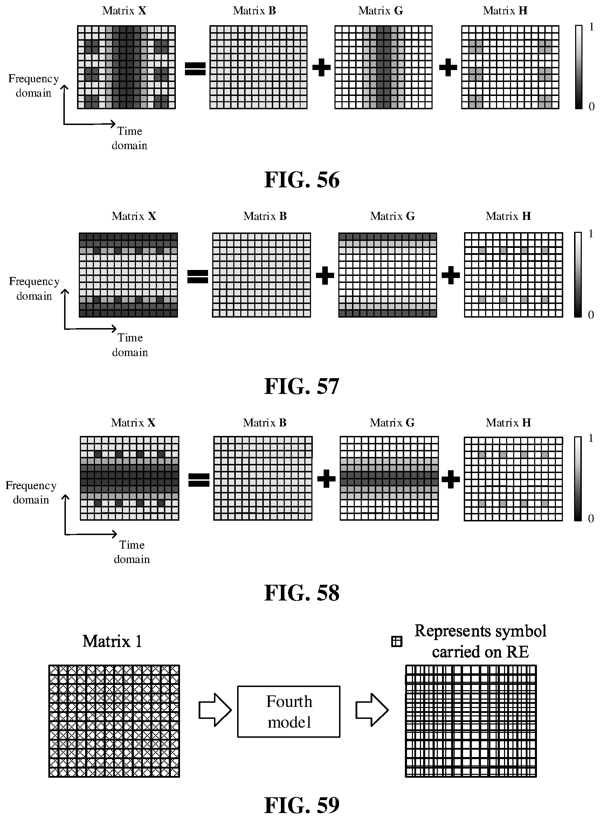

In order to facilitate understanding, the change trend of the first parameters in the first resource set will be described hereinafter with reference to the matrix **X,** the matrix **B,** and the matrix **G** in conjunction with FIGs. 58 to 60. It should be understood that in above description, the first parameters associated with the target transmission resources are increased in the order of the time domain units from early to late in the time domain, and after in combination with the change trend of the first parameters being axisymmetric, the change trend of the first parameters may be replaced by decreasing, in the matrix **X,** from the center position of the matrix **X** to the edge position of the matrix X. Accordingly, the change trend of the adjustment values in the matrix **G** may be that the center position of the matrix **G** decreases toward the edge position of the matrix **G**. For the convenience of description, the following introduction takes the changing trend after the above replacement as an example.

Assuming that matrix **X** is generated by the sum of matrix **B** and matrix **G,** i.e. matrix **X** = matrix **B** + matrix **G**. The initial values of the first parameters indicated in the matrix **B** are the same, i.e. the matrix **B** satisfies $B_{k,i} = B_{k,j} = Y(i \neq j, i, j \in [1, M], k \in [1, N])$. The change trend of the adjustment values in the matrix **G** is the same as the change trend of the first parameters in the matrix **X,** that is, the change of the adjustment values in the matrix **G** satisfies the following conditions: the adjustment values associated with the target transmission resources in different frequency domain positions in the same time domain unit in the matrix **G** are the same, and the adjustment values associated with the target transmission resources in different time domain units in the same frequency domain position are different. The adjustment values located at the left and right sides of the matrix **G** are less than or equal to the adjustment values located at the center position of the matrix, and the change trend of the adjustment values in the matrix **G** exhibits axisymmetry about the adjustment values associated with the center time domain positions being the central axis. Accordingly, the change of the adjustment values in the matrix **G** can be expressed as: $G_{k,i} = G_{k,M-i+1}$ ($i \in [1,$ $M], k \in [1,N])$, $G_{k,i} \leq G_{k,i+1}$ ($i \in [1, \lfloor M/2 \rfloor]$, $k \in [1, N])$, and if M is odd, $G_{k, \lceil M/2 \rceil} = P$ ($k \in [1, N])$, if M is even, $G_{k,M/2} = G_{k,M/2+1} = P(k \in [1, N])$, and P represents the value of the adjustment value located at the central axis of the matrix **G**. In addition, in the matrix **G,** the adjustment values are decreased in an F-rule from the central axial to the edge of the matrix G, and the remaining time-domain units are set to zero after S ( $S \leq \lfloor M/2 \rfloor$ ) time-domain units are decreased. The F-rule may include decrementing by a proportional coefficient r (r < 1), every q time domain units, and decrementing by a first step size $t(t \lceil S/q \rceil \leq 1)$, every q time domain units. The symbol $\lfloor \cdot \rfloor$ represents downward rounding.

Hereinafter, the construction scheme of the matrix **X** in the embodiments of the present application will be described with reference to FIGs. 29 to 31. It should be noted that the embodiments of the present application do not specifically limit the parameters described below. In some cases, some of the parameters described below may be included in the process of constructing the matrix **X**. In addition, the parameters referred to below may also be replaced by other parameters having similar effects.

Referring to FIG. 29, the matrix **X** shown in FIG. 26 can be constructed by the formula matrix **X** = matrix **B** + matrix **G**, where Y = 0.1, S = 3, P = 0.6, q = 1, r = 0.5. The rule F includes decrementing by a proportional coefficient r = 0.5, every q = 1 time domain unit, and after decrementing S = 3 columns, the values of the remaining columns are set to zero. That is, the initial value of the first parameter in the matrix **B** is 0.1. The variation law of the adjustment values in the matrix **G** includes: $G_{k,i} =$ $G_{k,M-i+1}$ ($i \in [1, M], k \in [1, N]),$ $G_{k,i} \leq G_{k,i+1}$ ($i \in [1, \lfloor M/2 \rfloor]$, $k \in [1,N]$); $G_{k,M/2} = G_{k,M/2+1} = P = 0.6$ ($k \in [1, N])$. That is, when the value of M is 14, the adjustment value of the 7th and 8th columns in the matrix **G** is 0.6, and after decrementing 3 columns to the left side of the matrix **G** according to the F-rule starting from the 7th column (that is, decrementing from the 7th column to the 5th column), the adjustment values in the remaining columns are 0. After decrementing 3 columns according to the F-rule to the right side of matrix **G** starting from the 8th column (that is, decrementing from the 8th column to the 10th column), the adjustment values in the remaining columns are 0.

Accordingly, continuing to refer to FIG. 29, the change trend of the matrix **X** obtained by superposing the matrix **B** and the matrix **G** may satisfy: $X_{k,i} = X_{k,M-i+1}$ ($i \in [1,$ $M], k \in [1, N])$, $X_{k,i} \leq X_{k,i+1}$ ($i \in [1, \lfloor M/2 \rfloor]$, $k \in [1, N]$); $X_{k,M/2} = X_{k,M/2+1} = P+Y = 0.7$ ($k \in [1, N])$, that is, when the value of M is 14, the values of the first parameters in the 7th column and the 8th column in the matrix **X** are 0.7, and after decrementing 3 columns from the 7th column to the left side of the matrix **X** according to the F-rule (that is, decrementing from the 7th column to the 5th column), the values of the first parameters in the remaining columns are 0. After decrementing 3 columns from the 8th column to the right side of the matrix **X** according to the F-rule (that is, decrementing from the 8th column to the 10th column), the values of the first parameters in the remaining columns are 0.

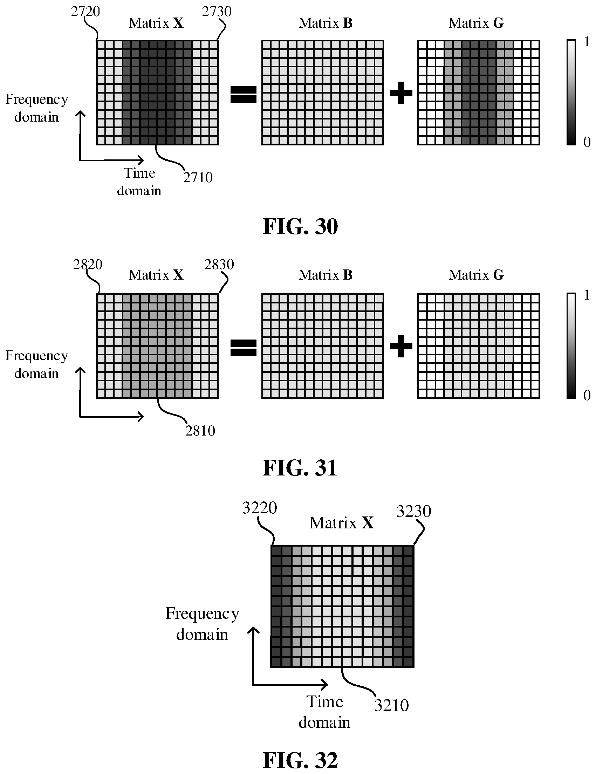

Referring to FIG. 30, the matrix X shown in FIG. 27 can be constructed by the formula matrix **X** = matrix **B** + matrix **G**, where Y = 0.1, S = 4, P = 0.6, q = 2, r = 0.4. The rule F includes decrementing by a proportional coefficient r = 0.4, every q = 2 time domain units, and after decrementing S = 4 columns, the values of the remaining columns are set to zero. That is, the initial value of the first parameter in the matrix B is 0.1. The variation law of the adjustment values in the matrix **G** includes: $G_{k,i} =$ $G_{k,M-i+1}$ ($i \in [1,M], k \in [1, N])$, $G_{k,i} \leq G_{k,i+1}$ ($i \in [1, \lfloor M/2 \rfloor]$,

$k \in [1, N]$); $G_{k,M/2} = G_{k,M/2+1} = P = 0.6$ ($k \in [1, N]$). That is, when the value of M is 14, the adjustment values of the 7th and 8th columns in the matrix **G** are 0.6., and after decrementing 4 columns from the 7th column to the left side of the matrix **G** according to the F-rule (that is, decrementing from the 7th column to the 4th column), the adjustment values in the remaining columns is 0. After decrementing 4 columns to the right side of matrix **G** according to the F-rule starting from the 8th column (that is, decrementing from the 8th column to the 11th column), the adjustment values in the remaining columns are 0.

Accordingly, continuing to refer to FIG. 30, the change trend of the matrix **X** obtained by superposing the matrix **B** and the matrix **G** may satisfy: $X_{k,i} = X_{k,M-i+1}$ ($i \in [1, M], k \in [1, N]$), $X_{k,i} \leq X_{k,i+1}$ ($i \in [1, \lceil M/2 \rceil]$, $k \in [1, N]$); $X_{k,M/2} = X_{k,M/2+1} = P + Y = 0.7$ ($k \in [1, N]$). That is, when the value of M is 14, the value of the first parameter in the 7th column and the 8th column in the matrix **X** is 0.7, and after decrementing 4 columns from the 7th column to the left side of the matrix **X** according to the F-rule (that is, decrementing from the 7th column to the 4th column), the values of the first parameters in the remaining columns are 0. After decrementing 4 columns from the 8th column to the right side of matrix **4** according to the F-rule (that is, decrementing from the 8th column to the 11th column), the values of the first parameter in the remaining columns are 0.

Referring to FIG. 31, the matrix **X** shown in FIG. 28 can be constructed by the formula matrix **X** = matrix **B** + matrix **G,** where Y = 0.1, S = 4, P = 0.6, q = 4. The rule F includes decrementing by a first step t = 1, every q = 4 time-domain units, and the values of the remaining columns after decrementing S = 4 columns are set to zero. That is, the initial value of the first parameter in the matrix B is 0.1. The variation law of the adjustment values in the matrix G includes: $G_{k,i} = G_{k,M-i+1}$ ($i \in [1, M], k \in [1, N]$), $G_{k,i} \leq G_{k,i+1}$ ($i \in [1, \lceil M/2 \rceil]$, $k \in [1, N]$); $G_{k,M/2} = G_{k,M/2+1} = P = 0.6$ ($k \in [1, N]$). That is, when the value of M is 14, the adjustment values of the 7th and 8th columns in the matrix **G** are 0.6, and after decrementing 4 columns from the 7th column to the left side of the matrix **G** according to the F-rule (that is, decrementing from the 7th column to the 4th column), the adjustment values in the remaining columns are 0. After decrementing 4 columns to the right side of matrix **G** according to the F-rule starting from the 8th column (that is, decrementing from 8th column to the 11th column), the adjustment values in the remaining columns are 0.

Accordingly, continuing to refer to FIG. 31, the change trend of the matrix **X** obtained by superposing the matrix **B** and the matrix **G** may satisfy: $X_{k,i} = X_{k,M-i+1}$ ($i \in [1, M]$, $k \in [1, N]$), $X_{k,i} \leq X_{k,i+1}$ ($i \in [1, \lceil M/2 \rceil]$, $k \in [1, N]$); $X_{k,M/2} = X_{k,M/2+1} = P + Y = 0.7$ ($k \in [1, N]$). That is, when the value of M is 14, the value of the first parameter in the 7th column and the 8th column in the matrix **X** is 0.7, and after decrementing 4 columns from the 7th column to the left side of the matrix **X** according to the F-rule (that is, decrementing from the 7th column to the 4th column), the values of the first parameters in the remaining columns are 0. After decrementing 4 columns from the 8th column to the right side of matrix **4** according to the F-rule (that is, decrementing from the 8th column to the 11th column), the values of the first parameters in the remaining columns are 0.

In Example 4-3, the target transmission resources located between the first time domain location and the second time domain location satisfy Rule 4-3.

In some implementations, rules 4-3 include decreasing the first parameter associated with each target transmission resource in the order of time domain units from early to late in the time domain. For example, when the time domain unit 1 is earlier than the time domain unit 2 in the time domain, the value(s) of the first parameter(s) associated with the target transmission resource(s) in the time domain unit 1 is greater than the value(s) of the first parameter(s) associated with the target transmission resource(s) in the time domain unit 2.

In some implementations, if the above described rule 4-3 is combined with the aforementioned axisymmetric change trend of the change of the first parameters in the first resource set, see FIG. 64 and the below description, the change trend of the first parameters associated with the target transmission resources in the first resource set increase from the central time domain position to the edge time domain position, or decrease from the edge time domain position to the central time domain position. Such a change trend of the first parameters may be applicable to a scenario in which the communication device moves at a low speed.

It should be noted that, the first parameters associated with target transmission resources in the same time domain unit in the first resource set may be the same, or the first parameters associated with target transmission resources corresponding to different frequencies in the same time domain unit may be the same. Of course, in the embodiments of the present application, the first parameters associated with the target transmission resources in the same time domain unit in the first resource set may be partially or completely different.

In the embodiments of the present application, the mode of changing the first parameters is not limited. For example, the first parameters associated with the first set of resources may be reduced by a fixed step size, where the fixed step size may be a fixed value (e.g., 0.05) or a fixed proportional value (e.g., 0.5%). For another example, the first parameters associated with the first resource set may be reduced by a variable step size.

In order to facilitate understanding, the change mode of the first parameters in the embodiments of the present application will be described below with reference to FIG. 64. Assuming that the first resource set is an RB, the target transmission resources in the first resource set may be expressed as N $\times$ M REs.

Referring to FIG. 32, the second time domain position 3210 is the center time domain position of the RB, and the first time domain position 3220 is the time domain position of the earliest RE in the RB. Accordingly, the first parameters associated with the target transmission resources between the second time domain position 3210 and the first time domain position 3220 satisfy the above rule 4-3, that is, the first parameter associated with each target transmission resource decreases in the order of the time domain units from early to late in the time domain. In addition, the change trend of the first parameters associated with the time domain unit in the first resource set is axisymmetric, that is, the change trend of the first parameters associated with the target transmission resources between the RE (see 3230) having the latest time domain position in the first resource set and the second time domain position is opposite to the change trend of the first parameters associated with the target transmission resources between the second time domain position 3210 and the first time domain position 3220. At this time, it can be understood that in the first resource set, the change trend of the first parameters associated with the target transmission resources decrease from the edge time domain position to the center time domain position.

**In Example 4-4,** the target transmission resources located between the first time domain location and the second time domain location satisfy rule 4-4.

In some implementations, rule 4-4 includes decreasing the first parameters associated with the target transmission resources every q time domain units in the order of the time domain units in the time domain from early to late, where q is a positive integer greater than or equal to 0. It should be understood that when the value of q is 0, the change trend of the first parameters associated with the target transmission resources in the first resource set can be referenced to the description of Example 4-3, and for the sake of brevity, the description will not be repeated here.

In some implementations, the value of q may be a fixed value. Of course, in other implementations, the value of q may be variable, for example, the value of q may vary randomly.

In addition, in the embodiments of the present application, the mode of changing the first parameters is not limited. In some implementations, the first parameters may vary according to a first proportion. For example, the adjustment manner of the first parameters may include changing by the proportional coefficient r every interval q time domain units. In other implementations, the first parameter may vary according to a first step. For another example, the mode of changing the first parameters may include changing the first step every q time domain units.

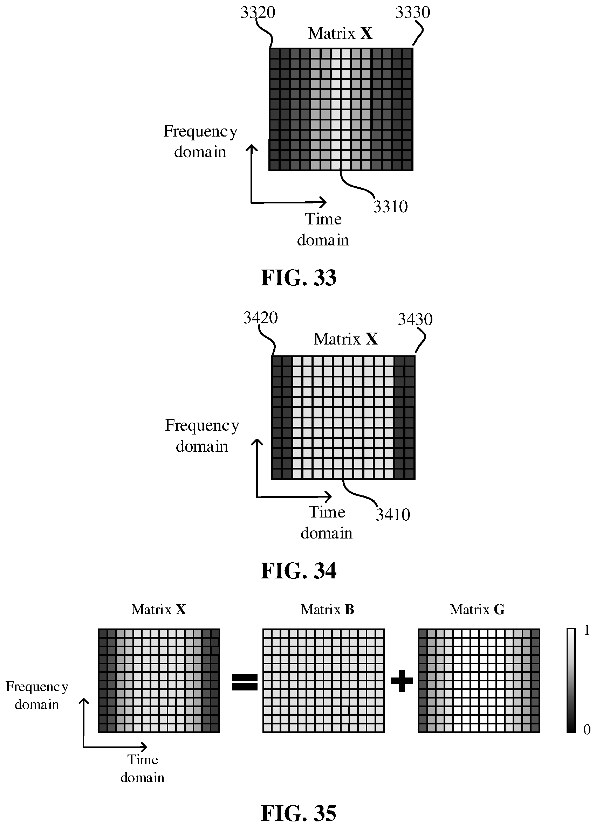

In some implementations, if the above described rule 4-4 is combined with the aforementioned change trend that the change trend of the first parameters in the first resource set is axisymmetric, see FIG. 33 or FIG. 34 and the below description, the change trend of the first parameters associated with the target transmission resources in the first resource set decrease from the edge time domain position to the center time domain position. Such a change trend of the first parameters may be applicable to a scenario in which the communication device moves at a low speed.

It should be noted that, the first parameters associated with target transmission resources in the same time domain unit in the first resource set may be the same, or the first parameters associated with target transmission resources corresponding to different frequencies in the same time domain unit may be the same. Of course, in the embodiments of the present application, the first parameters associated with the target transmission resources in the same time domain unit in the first resource set may be partially or completely different.

In the embodiments of the present application, the method of adjusting the first parameter is not limited. For example, the first parameters associated with the first resource set may be incremented by a fixed step size, where the fixed step size may be a fixed value (e.g., 0.05) or a fixed proportional value (e.g., 0.5%). For another example, the first parameters associated with the first resource set may be incremented by a variable step size.

In order to facilitate understanding, the change mode of the first parameters in the embodiments of the present application will be described below with reference to FIGs. 33 and 34. Assuming that the first resource set is an RB, the target transmission resources in the first resource set may be expressed as $N \times M$ REs.

Referring to FIG. 33, it is assumed that the value of q is 2, the second time domain position 3310 is the center time domain position of the RB, and the first time domain position 3320 is the time domain position of the earliest RE in the RB. Accordingly, the first parameters associated with the target transmission resources between the second time domain position 3310 and the first time domain position 3320 satisfy the above rule 4-4, that is, the first parameters associated with the target transmission resources decrease every 2 time domain units in the order of time domain units from early to late in the time domain. In addition, the change trend of the first parameters associated with the time domain units in the first resource set is axisymmetric, that is, the change trend of the first parameters associated with the target transmission resources between the RE (see 3330) having the latest time domain position in the first resource set and the second time domain position is opposite to the change trend of the first parameters associated with the target transmission resources between the second time domain position 3310 and the first time domain position 3320. In such case, it can be understood that in the first resource set, the change trend of the first parameters associated with the target transmission resources decrease from the edge time domain position to the center time domain position.

Referring to FIG. 34, it is assumed that the value of q is 2, the second time domain position 3410 is the center time domain position of the RB, and the first time domain position 3420 is the time domain position of the earliest RE in the RB. Accordingly, the first parameters associated with the target transmission resources between the second time domain position 3410 and the first time domain position 3420 satisfy the above rule 4-4, that is, the first parameters associated with the target transmission resources decrease every 2 time domain units in the order of time domain units from early to late in the time domain. In addition, the change trend of the first parameters associated with the time domain units in the first resource set is axisymmetric, that is, the change trend of the first parameters associated with the target transmission resources between the RE (see 3430) having the latest time domain position in the first resource set and the second time domain position is opposite to the change trend of the first parameters associated with the target transmission resources between the second time domain position 3410 and the first time domain position 3420. In such case, it can be understood that in the first resource set, the change trend of the first parameters associated with the target transmission resources decrease from the edge time domain position to the center time domain position.

In some scenarios, the change trend of the first parameters introduced above in connection with Examples 4-3 and 4-4 may be represented by two parameters (parameter 1 and parameter 2), where parameter 1 represents an initial value of the first parameter associated with each target transmission resource in the first resource set. Parameter 2 represents adjustment values of first parameters associated with target transmission resources in a first resource set. The setting of the parameter 2 may cause that the change of the first parameters associated with the target transmission resources in the first resource set satisfies the above described rule 4-3 and/or rule 4-4. That is, the first parameters are obtained by adjusting the initial values indicated by the parameter 1 according to the adjustment values indicated by the parameter 2. Therefore, it can be seen that the change trend of the first parameters associated with the target transmission resources in the first resource set is determined based on the change trend of the adjustment values in the parameter 2, or that the change trend of the first parameters associated with the target transmission resources in the first resource set matches the change trend of the adjustment values in the parameter 2, for example, the change trend of the first parameters associated with the target transmission resources in the first resource set is the same as the change trend of the adjustment values in the parameter 2.

Taking the target transmission resources included in the first resource set being an matrix of N × M as an example, the first parameters associated with the target transmission resources in the first resource set may be expressed as a matrix **X,** and the parameter 1 and the parameter 2 may be expressed by a matrix **B** of N × M and a matrix **G** of N × M, respectively. Accordingly, the matrix **X** is obtained by adjusting the initial values indicated by the matrix **B** according to the adjustment values indicated by the matrix **G.** For example, matrix **X** = matrix **B** + matrix **G.** Therefore, the matrix **B** can also be called the base matrix, and the matrix **G** can also be called the gradient matrix.

In some implementations, the initial values of the first parameters associated with the target transmission resources in the first resource set may be the same, helping to simplify the configuration process of the initial values. Taking the matrix **B** as an example, the matrix **B** satisfies $\mathbf{B}_{k,i}=\mathbf{B}_{k,j}=Y(i{\neq}j, i, j{\in}[1, M], k{\in}[1, N])$. Of course, in the embodiments of the present application, the initial values of the first parameters may be different.

In order to facilitate understanding, the change trend of the first parameters in the first resource set will be described below with reference to the matrix **X,** the matrix **B,** and the matrix **G** in conjunction with FIGs. 67 to 69. It should be understood that in above description, the first parameters associated with the target transmission resources are increased in the order of the time domain unit from early to late in the time domain, and after in combination with with the change trend of the first parameters being axisymmetric, the change trend of the first parameters includes decreasing, in the matrix **X,** from the edge position of the matrix X to the center position of the matrix X. Accordingly, the change trend of the adjustment values in the matrix **G** may be that the edge position of the matrix **G** decreases toward the center position of the matrix **G.** For the convenience of description, the following introduction takes the changing trend after the above replacement as an example.

Assuming that matrix **X** is generated by the sum of matrix **B** and matrix **G,** i.e. matrix **X** = matrix **B** + matrix **G.** The initial values of the first parameters indicated in the matrix **B** are the same, i.e. the matrix **B** satisfies $\mathbf{B}_{k,i=}\mathbf{B}_{k,j}=Y(i{\neq}j, i, j{\in}[1, M], k{\in}[1, N])$. The change trend of the adjustment values in the matrix **G** is the same as the change trend of the first parameters in the matrix **X,** that is, the change of the adjustment values in the matrix **G** satisfies the following conditions: the adjustment values associated with the target transmission resources in different frequency domain positions in the same time domain unit in the matrix **G** are the same, and the adjustment values associated with the target transmission resources in different time domain units in the same frequency domain position are different. The adjustment values located at the left and right sides of the matrix **G** are less than or equal to the adjustment values located at the center position of the matrix, and the change trend of the adjustment values in the matrix **G** exhibits axisymmetry about the adjustment values associated with the center time domain positions being the central axis. Accordingly, the change of the adjustment values in the matrix **G** can be expressed as: $\mathbf{G}_{k,i} = \mathbf{G}_{k,M-i+1}$ $(i{\in}[1,$ M], $k{\in}[1, N]), \mathbf{G}_{k,i}{\geq}\mathbf{G}_{k,i+1}$ $(i{\in}[1, \lceil M/2 \rceil], k{\in}[1, N]),$ and $\mathbf{G}_{k,l} = \mathbf{G}_{k,M}= P(k{\in}[1, N]),$ P represents the values of the adjustment values of the matrix **G** located in the edge column of the matrix. Further, in the matrix **G**, the adjustment values are decreased in an F-rule from the edge column of the matrix to the center column of the matrix **G**, and the remaining time domain units are set to zero after $S$ ( $S \leq \lfloor M/2 \rfloor$ ) time domain units are decreased. The F-rule may include decrementing by a proportional coefficient r (r < 1) every q time domain units, and decrementing by a first step size $t(t \lfloor S/q \rfloor \leq 1)$ every q time domain units. The symbol ⌊ ⌋ represents downward rounding.

Hereinafter, the construction scheme of the matrix **X** in the embodiments of the present application will be described with reference to FIGs. 35 to 37. It should be noted that the embodiments of the present application do not specifically limit the parameters described below. In some cases, some of the parameters described below may be included in the process of constructing the matrix **X**. In addition, the parameters referred to below may also be replaced by other parameters having similar effects.

Referring to FIG. 35, the matrix **X** shown in FIG. 32 can be constructed by the formula matrix **X** = matrix **B** + matrix **G**, where Y = 0.1, S = 4, P = 0.6, q = 1, r = 0.5. The rule F includes decrementing by a proportional coefficient r = 0.5, every q = 1 time domain unit. and after decrementing S = 4 columns, the values of the remaining columns are set to zero. That is, the initial value of the first parameter in the matrix B is 0.1. The variation law of the adjustment values in the matrix **G** includes: $G_{k,i}$ = $G_{k,M-i+1}$ ($i \in$ [1, *M*], $k \in$ [1, *N*]), $G_{k,i} \geq G_{k,i+1}$ ($i \in$ [1, $\lfloor M/2 \rfloor$], $k \in$ [1,*N*]); $G_{k,I} = G_{k,M} = P$ ($k E$ [1, *N*]). That is, the adjustment values of column 1 and column 14 in matrix **G** are 0.6, and after decrementing 4 columns to the left side of the matrix **G** according to the F-rule starting from the 14th column (that is, decrementing from the 14th column to the 11th column), the adjustment values in the remaining columns are 0. After decrementing 4 columns from the first column to the right side of matrix **G** according to the F-rule (that is, decrementing from the first column to the fourth column), the adjustment values in the remaining columns are 0.

Accordingly, continuing to refer to FIG. 35, the change trend of the matrix **X** obtained by superposing the above matrix **B** and the matrix **G** can satisfy: $X_{k,i} = X_{k,M-i+1}$ ($i \in$ [1, *M*], $k \in$ [1, *N*]), $X_{k,i} \geq X_{k,i+1}$ ($i \in$ [1, $\lfloor M/2 \rfloor$], $k \in$ [1, *N*]); $X_{k,I} = X_{k,M} = P+Y = 0.7$ ($k \in$ [1, *N*]), that is, the values of the first parameters of the first column and the 14th column in the matrix **X** are 0.7, and after decrementing 4 columns from the 14th column to the left side of the matrix **X** according to the F-rule (that is, decrementing from the 14th column to the 11th column), the values of the first parameters in the remaining columns are 0. After decrementing 4 columns from the first column to the right side of the matrix **X** according to the F-rule (that is, decrementing from the first column to the fourth column), the values of the first parameters in the remaining columns are 0.

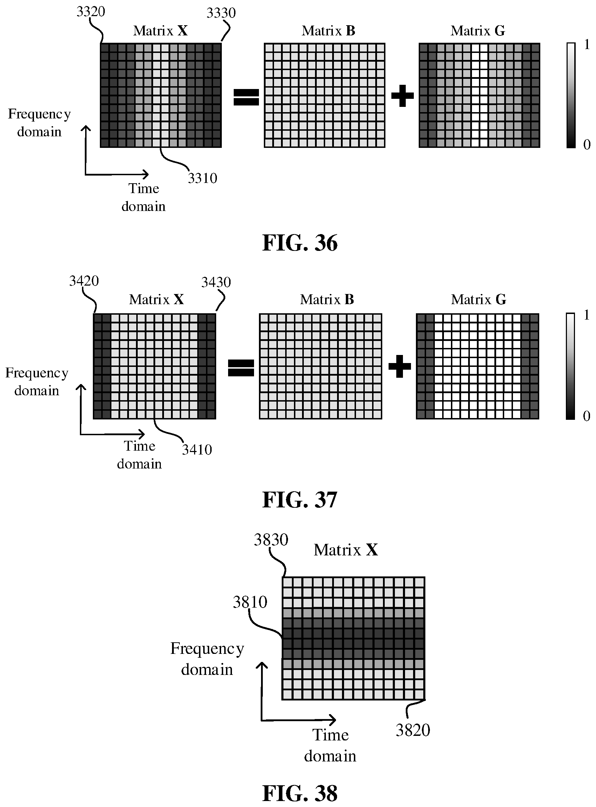

Referring to FIG. 36, the matrix **X** shown in FIG. 33 can be constructed by the formula matrix **X** = matrix **B** + matrix **G**, where Y = 0.1, S = 6, P = 0.6, q = 2, r = 0.5. The rule F includes decrementing by a proportional coefficient r = 0.4 every q = 2 time domain units, and after decrementing S = 6 columns, the values of the remaining columns are set to zero. That is, the initial value of the first parameter in the matrix B is 0.1. The variation law of the adjustment values in the matrix **G** includes: $G_{k,i}$ = $G_{k,M-i+1}$ ($i \in$ [1, *M*], $k \in$ [1, *N*]), $G_{k,i} \geq G_{k,i+1}$ ($i \in$ [1, $\lfloor M/2 \rfloor$], $k \in$ [1,*N*]); $G_{k,I} = G_{k,M} = P = 0.6$ ($k \in$ [1, *N*]). That is, the adjustment values of column 1 and column 14 in matrix **G** are 0.6, and after decrementing 6 columns to the left side of the matrix **G** according to the F-rule starting from the 14th column (that is, decrementing from the 14th column to the 9th column), the adjustment values in the remaining columns are 0. After decrementing 6 columns to the right side of matrix **G** according to the F-rule starting from the first column (that is, decrementing from the first column to the sixth column), the adjustment values in the remaining columns are 0.

Accordingly, continuing to refer to FIG. 36, the change trend of the matrix **X** obtained by superposing the matrix **B** and the matrix **G** can satisfy: $X_{k,i} = X_{k,M-i+1}$ ($i \in$ [1, *M*], $k \in$ [1, *N*]), $X_{k,i} \geq X_{k,i+1}$ ($i \in$ [1, $\lfloor M/2 \rfloor$], $k \in$ [1, *N*]); $X_{k,I} = X_{k,M} = P+Y = 0.7$ ($k \in$ [1 ,*N*]). That is, the values of the first parameters of the first column and the 14th column in the matrix **X** are 0.7, and after decrementing 6 columns from the 14th column to the left side of the matrix **X** according to the F-rule (that is, decrementing from the 14th column to the 9th column), the values of the first parameters in the remaining columns are 0. After decrementing 6 columns from the first column to the right side of the matrix **X** according to the F-rule (that is, decrementing from the first column to the sixth column), the values of the first parameters in the remaining columns are 0.

Referring to FIG. 37, the matrix **X** shown in FIG. 34 can be constructed by the formula matrix **X** = matrix **B** + matrix **G**, where Y = 0.1, S = 2, P = 0.6, q = 2. The rule F includes decrementing by a first step t = 1 every q = 2 time domain units, and after decrementing S = 2 columns, the values of the remaining columns are set to zero. That is, the initial value of the first parameter in the matrix B is 0.1. The variation law of the adjustment values in the matrix **G** includes: $G_{k,i} = G_{k,M-i+1}$ ($i \in$ [1, *M*], $k \in$ [1, *N*]), $G_{k,i} \geq G_{k,i+1}$ ($i \in$ [1, $\lfloor M/2 \rfloor$], $k \in$ [1, *N*]); $G_{k,I} = G_{k,M} = P = 0.6$ ($k \in$ [1, *N*]), that is, the adjustment values of column 1 and column 14 in matrix **G** are 0.6, and after decrementing 2 columns to the left side of the matrix **G** according to the F-rule starting from the 14th column (that is, decrementing from the 14th column to the 13th column), the adjustment values in the remaining columns are 0. After decrementing 2 columns from the first column to the right side of matrix **G** according to the F-rule (that is, decrementing from the first column to the second column), the adjustment values in the remaining columns are 0.

Accordingly, continuing to refer to FIG. 37, the change trend of the matrix **X** obtained by superposing the matrix **B** and the matrix **G** may satisfy: $X_{k,i} = X_{k,M-i+1}$ ($i \in [1, M]$, $k \in [1, N]$), $X_{k,i} \geq X_{k,i+1}$ ($i \in [1, \lfloor M/2 \rfloor]$, $k \in [1, N]$); $X_{k,1} = X_{k,M} = P+Y=0.7$ ($k \in [1, N]$). That is, the values of the first parameters of the first column and the 14th column in the matrix **X** are 0.7, and after decrementing 2 columns from the 14th column to the left side of the matrix **X** according to the F-rule (that is, decrementing from the 14th column to the 13th column), the values of the first parameters in the remaining columns are 0. After decrementing 2 columns from the first column to the right side of the matrix **X** according to the F-rule (that is, decrementing from the first column to the second column), the values of the first parameters in the remaining columns are 0.

**In a non-orthogonal transmission method 5,** the first parameters associated with a plurality of target transmission resources located in different frequency domain units in a second resource set may be partially or completely different, where the second resource set may include one or more target transmission resources.

For example, the second resource set may include a frequency domain unit 1 and a frequency domain unit 2. The first parameter(s) associated with the target transmission resource(s) in the frequency domain unit 1 is different from the first parameter(s) associated with the target transmission resource(s) in the frequency domain unit 2. The frequency domain unit 1 and the frequency domain unit 2 are two frequency domain units in the second resource set, or the frequency domain unit 1 and the frequency domain unit 2 are any two frequency domain units in the second resource set.

For another example, the second resource set may include the frequency domain unit 1 to the frequency domain unit 5, and the first parameter(s) associated with the target transmission resource(s) in the frequency domain unit 1 is different from the first parameter(s) associated with the target transmission resource(s) in the frequency domain unit 5, and the first parameters associated with the target transmission resources in the frequency domain unit 2 to 4 are the same.

In the embodiments of the present application, the change mode of the first parameters associated with the target transmission resources in different frequency domain units in the second resource set is not limited. Hereinafter, based on the first frequency domain position and the second frequency domain position, the change rule of the first parameters in the embodiments of the present application is described in conjunction with Examples 5-1 to 5-4. The first frequency domain position and the second frequency domain position are two different time domain positions among the time domain positions where the target transmission resources are located in the second resource set.

In some implementations, the first frequency domain position may be a frequency domain position of lowest frequency in the frequency range corresponding to the second resource set, or the frequency corresponding to the first frequency domain position in the frequency domain is smaller than that of other frequency domain positions, in the second resource set, other than the first frequency domain position. When the second resource set is the RB, the first frequency domain position may be the frequency domain position of the lowest frequency RE in the RB (or the RE with an index of 0). Here, the indexes of REs in the RB are sequentially numbered in a direction from low frequency to high frequency. Of course, in the embodiments of the present application, the first frequency domain position may be a frequency domain position of highest frequency in the frequency range corresponding to the second resource set, or the frequency corresponding to the first frequency domain position in the frequency domain may be higher than that of other frequency domain positions, in the second resource set, other than the first frequency domain position. When the second resource set is the RB, the first frequency domain position may be the frequency domain position of the RE with the highest frequency (or the RE with the largest index) in the RB. Here, indexes of REs in RBs are sequentially numbered in a direction from low frequency to high frequency.

In other implementations, the second frequency domain location is a central frequency domain location of the second set of resources. The central frequency domain location may include one or more frequency domain units. When the second resource set includes RE1, RE2, and RE3 that are continuous in the frequency domain, the center frequency domain position of the second resource set may be the frequency domain position of RE2. For example, when the second resource set includes RE1, RE2, RE3, RE4, and RE5 that are continuous in the frequency domain, the center frequency domain position of the second resource set may be the frequency domain position of RE2 to RE4.

Of course, in the embodiments of the present application, the second frequency domain position may be the frequency domain position of lowest frequency in the frequency range corresponding to the second resource set, or the frequency corresponding to the second frequency domain position in the frequency domain is smaller than that of other frequency domain positions, in the second resource set, other than the second frequency domain position. When the second resource set is RB, and the second frequency domain position may be the frequency domain position of the RE with the lowest frequency in the RB (or the RE with an index of 0). Here, the indexes of REs in the RB are sequentially numbered in a direction from low frequency to high frequency. Alternatively, the second frequency domain position may be a frequency domain position of highest frequency in the frequency range corresponding to the second resource set, or the frequency corresponding to the second frequency domain position in the frequency domain may be higher than that of other frequency domain positions, in the second resource set, other than the second frequency domain position. When the second resource set is RB, the second frequency domain position may be the frequency domain position of the RE of the highest frequency (or the RE with the largest index) in the RB. Here, the indexes of REs in the RB are sequentially numbered in the direction from low frequency to high frequency.

In the embodiments of the present application, the combination mode between the first frequency domain position and the second frequency domain position is not limited. For example, the first frequency domain position may be the frequency domain position of lowest frequency in the frequency range corresponding to the second resource set, and the second frequency domain position may be the highest frequency domain position in the frequency range corresponding to the second resource set. For another example, the first frequency domain position is the frequency domain position of lowest frequency in the frequency range corresponding to the second resource set, and the second frequency domain position may be the center frequency domain position of the second resource set. For another example, the first frequency domain position is a frequency domain position of the highest frequency in the frequency range corresponding to the second resource set, and the second frequency domain position may be a center frequency domain position of the second resource set.

In some implementations, if the second frequency domain position is the central frequency domain position, the change trend of the first parameters in the second resource set may be axisymmetric. The axisymmetry may be understood as axisymmetry about the central frequency domain position being the central axis, that is, if the second frequency domain position is the central frequency domain position, the change trends of the first parameters associated with the target transmission resources on both sides of the second frequency domain position are opposite. Of course, in the embodiments of the present application, if the second frequency domain position is the center frequency domain position, the change trends of the first parameters associated with the target transmission resources on both sides of the second frequency domain position may be the same, and the embodiments of the present application does not limit this.

**In Example 5-1,** the target transmission resources located between the first frequency domain location and the second frequency domain location satisfy Rule 5-1.

In some implementations, Rule 5-1 includes the first parameter associated with each target transmission resource is increased, in an order of frequency domain units from low to high in frequency domain. For example, if the frequency of the frequency domain unit 1 is lower than the frequency of the frequency domain unit 2 in the frequency domain, the value(s) of the first parameter(s) associated with the target transmission resource(s) in the frequency domain unit 1 is smaller than the value(s) of the first parameter(s) associated with the target transmission resource(s) in the frequency domain unit 2.

In some implementations, if the above described rule 4-1 is combined with the aforementioned change trend that the change of the first parameters in the second resource set is axisymmetric, see FIGS. 38 to 39 and the below description, the change trend of the first parameters associated with the target transmission resources in the second resource set decreases from the center frequency domain position to the edge frequency domain position.

It should be noted that, the first parameters associated with the target transmission resources in the same frequency domain unit in the second resource set may be the same, or the first parameters associated with the target transmission resources corresponding to different time domain units in the same frequency domain unit may be the same. Of course, in the embodiments of the present application, the first parameters associated with the target transmission resources in the same frequency domain unit in the second resource set may be partially or completely different.

In the embodiment of the present application, the method of increasing the first parameters is not limited. For example, the first parameters associated with the second resource set may be incremented by a fixed step size, where the fixed step size may be a fixed value (e.g., 0.05) or a fixed proportional value (e.g., 0.5%). For another example, the first parameters associated with the second resource set may be incremented in a variable step size.

In order to facilitate understanding, the change mode of the first parameters in the embodiments of the present application will be described below with reference to FIG. 38. Assuming that the second resource set is an RB, the target transmission resources in the second resource set may be expressed as $N \times M$ REs.

Referring to FIG. 38, the second frequency domain position 3810 is a center frequency domain position of the RB, and the first frequency domain position 3820 is a frequency domain position corresponding to the RE having the lowest frequency in the RB. Accordingly, the first parameters associated with the target transmission resources between the second frequency domain position 3810 and the first frequency domain position 3820 satisfy the above rule 5-1, that is, the first parameter associated with each target transmission resource is increased in the order of frequency from low to high in the frequency domain. In addition, the change trend of the first parameters associated with the frequency domain unit in the second resource set is axisymmetric, that is, the change trend of the first parameters associated with the target transmission resources between the RE (see 3830) having the highest frequency domain in the second resource set and the second frequency domain position is opposite to the change trend of the first parameters associated with the target transmission resources between the second frequency domain position 3810 and the first frequency domain position 3820. In such case, it can be understood that in the second resource set, the change trend of the first parameters associated with the target transmission resources decreases from the center frequency domain position to the edge frequency domain position.

**In Example 5-2,** the target transmission resources located between the first frequency domain location and the second frequency domain location satisfy rule 5-2.

In some implementations, rule 5-2 includes the first parameters associated with the target transmission resources is increased every q frequency domain units, in the order of the frequency domain units from low to high in the frequency domain, where q is a positive integer greater than or equal to 0. It should be understood that when the value of q is 0, the change trend of the first parameters associated with the target transmission resources in the second resource set can be described in Example 5-1, and for the sake of brevity, the description will not be repeated here.

In some implementations, the value of q may be a fixed value. Of course, in other implementations, the value of q may be variable, for example, the value of q may vary randomly.

In addition, in the embodiments of the present application, the mode of changing the first parameter is not limited. In some implementations, the first parameter may vary according to a first proportion. For example, the mode of changing the first parameters may include changing by a proportional coefficient r every q frequency domain units. In other implementations, the first parameter may vary according to a first step. For another example, the mode of changing the first parameters may include changing by a first step every q frequency domain units.

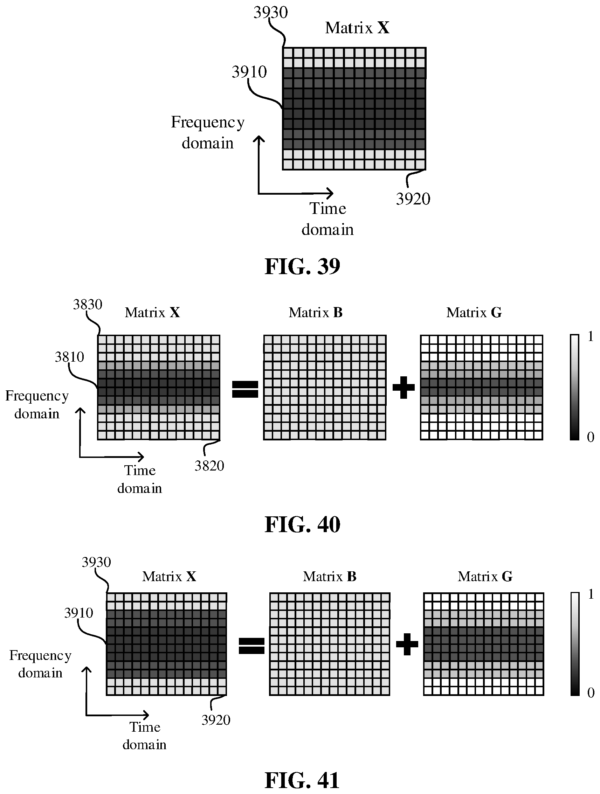

In some implementations, if the above described rule 5-2 is combined with the aforementioned change trend that the change of the first parameters in the second resource set is axisymmetric, see FIG. 39 and the below description, the change trend of the first parameters associated with the target transmission resources in the second resource set decreases from the center frequency domain position to the edge frequency domain position.

It should be noted that the first parameters associated with the target transmission resources in the same frequency domain unit in the second resource set may be the same, or the first parameters associated with the target transmission resources corresponding to different time domain units in the same frequency domain unit may be the same. Of course, in the embodiments of the present application, the first parameters associated with the target transmission resources in the same frequency domain unit in the second resource set may be partially or completely different.

In the embodiments of the present application, the method of increasing the first parameters is not limited. For example, the first parameters associated with the second resource set may be incremented by a fixed step size, where the fixed step size may be a fixed value (e.g., 0.05) or a fixed proportional value (e.g., 0.5%). For another example, the first parameters associated with the second resource set may be incremented in a variable step size.

In order to facilitate understanding, the change mode of the first parameters in the embodiments of the present application will be described below with reference to FIG. 38. Assuming that the second resource set is an RB, the target transmission resources in the second resource set may be expressed as $N \times M$ REs.

Referring to FIG. 39, it is assumed that the value of q is 2, the second frequency domain position 3910 is the center frequency domain position of the RB, and the first frequency domain position 3920 is the frequency domain position of the RE having the lowest frequency in the RB. Accordingly, the first parameters associated with the target transmission resources between the second frequency domain position 3910 and the first frequency domain position 3920 satisfy the above rule 5-2, that is, the first parameters associated with the target transmission resources of the frequency domain unit are increased every 2 frequency domain units in the order of the frequency domain units from low to high in the frequency domain. In addition, the change trend of the first parameters associated with the frequency domain unit in the second resource set is axisymmetric, that is, the change trend of the first parameters associated with the target transmission resources between the RE (see 3930) having the latest frequency domain position in the second resource set and the second frequency domain position is opposite to the change trend of the first parameters associated with the target transmission resources between the second frequency domain position 3910 and the first frequency domain position 3920. In such case, it can be understood that in the second resource set, the change trend of the first parameters associated with the target transmission resources decreases from the center frequency domain position to the edge frequency domain position.

In some scenarios, the change trend of the first parameters introduced above in connection with Example 5-1 and Example 5-2 may be represented by two parameters (parameter 1 and parameter 2). The parameter 1 represents an initial value of the first parameter associated with each target transmission resource in the second resource set. The parameter 2 represents adjustment values of the first parameters associated with the target transmission resources in the second resource set. The setting of the parameter 2 may cause that the change of the first parameters associated with the target transmission resources in the second resource set satisfy the above-described rule 5-1 and/or rule 5-2. That is, the first parameters are obtained by adjusting the initial values indicated by the parameter 1 according to the adjustment values indicated by the parameter 2. Therefore, it can be seen that the change trend of the first parameters associated with the target transmission resources in the second resource set is determined based on the change trend of the adjustment values in the parameter 2, or that the change trend of the first parameters associated with the target transmission resources in the second resource set matches the change trend of the adjustment values in the parameter 2, for example, the change trend of the first parameters associated with the target transmission resources in the second resource set is the same as the change trend of the adjustment values in parameter 2.

Taking the target transmission resources included in the second resource set being an N × M matrix as an example, the first parameters associated with the target transmission resources in the second resource set may be expressed as a matrix **X,** and the above described parameter 1 and parameter 2 may be expressed by a matrix **B** of N × M and a matrix **G** of N × M, respectively. Accordingly, the matrix **X** is obtained by adjusting the initial values indicated by the matrix **B** according to the adjustment values indicated by the matrix **G**. For example, matrix **X** = matrix **B** + matrix **G**. Therefore, the matrix **B** can also be called the base matrix, and the matrix **G** can also be called the gradient matrix.

In some implementations, the initial values of the first parameters associated with the target transmission resource in the second set of resources may be the same, helping to simplify the configuration process of the initial values. Taking the matrix **B** as an example, the matrix **B** satisfies $B_{k,i} = B_{k,j} = Y(i \neq j, i, j \in [1, M], k \in [1, N])$. Of course, in the embodiments of the present application, the initial values of the first parameters may be different.

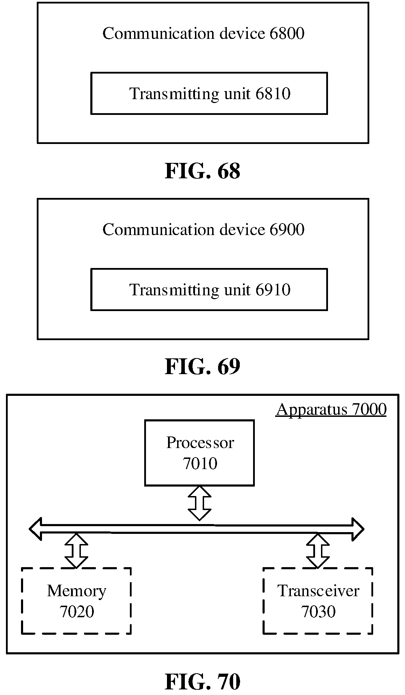

In order to facilitate understanding, the change trend of the first parameters in the second resource set will be described hereinafter with reference to matrix **X,** matrix **B,** and matrix **G** in combination with FIGs. 69 to 38. It should be understood that in the above description, the first parameters associated with the target transmission resources are increased in the order of the frequency domain units from low to high in the frequency domain, and after in combination with the change trend of the first parameters being axisymmetric, the change trend of the first parameters may be replaced by decreasing, in the matrix X ,from the center position of the matrix **X** to the edge position of the matrix X. Accordingly, the change trend of the adjustment values in the matrix **G** may be that the center position of the matrix **G** decreases toward the edge position of the matrix **G**. For the convenience of description, the following introduction takes the changing trend after the above replacement as an example.

Assuming that matrix **X** is generated by the sum of matrix **B** and matrix **G,** i.e. matrix **X** = matrix **B** + matrix **G**. The initial values of the first parameters indicated in the matrix **B** are the same, i.e. the matrix B satisfies $B_{k,i} = B_{k,j} = Y(i \neq j, i, j \in [1, M], k \in [1, N])$. The change trend of the adjustment values in the matrix **G** is the same as the change trend of the first parameters in the matrix **X,** that is, the change of the adjustment values in the matrix **G** satisfies the following conditions: the adjustment values associated with the target transmission resources in different time domain positions in the same frequency domain unit in the matrix **G** are the same, and the adjustment values associated with the target transmission resources in different frequency domain units in the same time domain position are different. The adjustment values at the top and bottom of the matrix **G** are less than or equal to the adjustment values located at the center position of the matrix, and the change trend of the adjustment values in the matrix **G** exhibits axisymmetry about the center frequency domain position being the center. Accordingly, the change of the adjustment values in the matrix **G** can be expressed as: $G_{k,i} = G_{N-k+1,i} (i \in [1, M], k \in [1, N])$, $G_{k,i} \leq G_{k+1,i} (i \in [1, \lfloor M \rfloor], k \in [1, N/2])$, and if N is odd, $G_{\lfloor N/2 \rfloor,i} = P(k \in [1, M])$, if M is even, $G_{N/2,i} = G_{N/2+1,i} = P (i \in [1, M])$, P represents the values of the adjustment values of the matrix **G** located at the central axis. In addition, in the matrix **G,** the adjustment values are decreased in an F-rule from the central axial to the edge of the matrix **G,** and the remaining frequency domain units are set to zero after decreasing S ( $S \leq \lfloor N/2 \rfloor$ ) frequency domain units. The F-rule may include decrementing by a proportional coefficient r (r < 1) every q time domain units, and decrementing by a first step size $t$ (t $\lceil S/q \rceil \leq 1$) every q time domain units. The symbol ⌊ ⌋ represents downward rounding.

Hereinafter, the construction scheme of the matrix **X** in the embodiments of the present application will be described with reference to FIGs. 40 to 41. It should be noted that the embodiments of the present application do not specifically limit the parameters described below. In some cases, some of the parameters described below may be included in the process of constructing the matrix **X**. In addition, the parameters referred to below may also be replaced by other parameters having similar effects.

Referring to FIG. 40, the matrix X shown in FIG. 38 can be constructed by the formula matrix X = matrix **B** + matrix **G,** where Y = 0.1, S = 3, P = 0.6, q = 1, r = 0.5. The rule F includes decrementing by a proportional coefficient r = 0.5, every q = 1 frequency domain unit, and after decrementing S = 3 rows, the values of the remaining rows are zero. That is, the initial value of the first parameter in the matrix **B** is 0.1. The variation rule of the adjustment values in the matrix **G** includes: $G_{k,i} = G_{N-k+1,i}$ $(i \in [1, M], k \in [1, N])$, $G_{k,i} \leq G_{k+1,i} (i \in [1, \lfloor M \rfloor], k \in [1, N/2])$; $G_{N/2,i} = G_{N/2+1,i} = P = 0.6 (i \in [1, M])$, that is, when the value of N is 12, the adjustment value of the 6th and 7th rows in the matrix **G** is 0.6, and after decrementing 3 rows to the bottom of the matrix **G** according to the F-rule starting from the sixth row (that is, decrementing from the 7th row to the 5th row), the adjustment values in the remaining rows are 0. After decrementing 3 rows according to the F-rule to the top of the matrix **G** starting from the 8th row (that is, decrementing from the 8th row to the 10th row), the adjustment values in the remaining rows are 0.

Accordingly, continuing to refer to FIG. 40, the change trend of the matrix **X** obtained by superposing the matrix **B** and the matrix **G** may satisfy: $X_{k,i} = X_{N-k+1,i}$ ($i \in [1, M]$, $k \in [1, N]$), $X_{k,i} \leq X_{k+1,i}$ ($i \in [1, \lfloor M \rfloor]$, $k \in [1, N/2]$); $X_{N/2,i} = X_{N/2+1,i} = P+Y=0.7$ ($i \in [1, M]$), that is, when the value of N is 12, the value of the first parameters in the sixth and seventh rows in the matrix **X** are 0.6, and after decrementing 3 rows from the sixth row to the bottom of the matrix **G** according to the F-rule (that is, decrementing from the seventh row to the fifth row), the values of the first parameters in the remaining rows are 0. After decrementing 3 rows from the 8th row to the top of the matrix **G** according to the F-rule (that is, decrementing from the 8th row to the 10th row), the values of the first parameters in the remaining rows are 0.

Referring to FIG. 41, the matrix **X** shown in FIG. 39 can be constructed by the formula matrix **X** = matrix **B** + matrix **G**, where Y = 0.1, S = 4, P = 0.6, q = 2, r = 0.5. The rule F includes decrementing by a proportional coefficient r = 0.5, every q = 2 frequency domain units, and after decrementing S = 4 rows, the values of the remaining rows are set to zero. That is, the initial value of the first parameter in the matrix **B** is 0.1. The variation rule of the adjustment values in the matrix **G** includes: $G_{k,i} = G_{N-k+1,i}$ ($i \in [1, M]$, $k \in [1, N]$), $G_{k,i} \leq G_{k+1,i}$ ($i \in [1, \lfloor M \rfloor]$, $k \in [1, N/2]$); $G_{N/2,i} = G_{N/2+1,i} = P=0.6$ ($i \in [1, M]$), that is, when the value of N is 12, the adjustment values of the 6th and 7th rows in the matrix **G** are 0.6, and after decrementing 4 rows from the sixth row to the bottom of the matrix **G** according to the F-rule (that is, decrementing from the seventh to fourth rows), the adjustment values in the remaining rows are 0. After decrementing 4 rows according to the F-rule to the top of the matrix **G** starting from the 8th row (that is, decrementing from the 8th row to the 11th row), the adjustment values in the remaining rows are 0.

Accordingly, continuing to refer to FIG. 41, the change trend of the matrix X obtained by superposing the above matrix **B** and the matrix **G** may satisfy: $X_{k,i} = X_{N-k+1,i}$ ($i \in [1, M]$, $k \in [1, N]$), $X_{k,i} \leq X_{k+1,i}$ ($i \in [1, \lfloor M \rfloor]$, $k \in [1, N/2]$); $X_{N/2,i} = X_{N/2+1,i} = P+Y=0.7$ ($i \in [1, M]$), that is, when the value of N is 12, the values of the first parameters in the sixth and seventh rows in the matrix **X** are 0.6, and after decrementing 4 rows from the sixth row to the bottom of the matrix **G** according to the F-rule (that is, decrementing from the seventh row to the fourth row), the values of the first parameters in the remaining rows are 0. After decrementing 4 rows from the 8th row to the top of the matrix **G** according to the F-rule (that is, decrementing from the 8th row to the 11th row), the values of the first parameters in the remaining rows are 0.

**In Example 5-3,** the target transmission resources located between the first frequency domain location and the second frequency domain location satisfy rule 5-3.

In some implementations, rule 5-3 includes the first parameter associated with each target transmission resource is decreased in the order of frequency domain units from low to high in the frequency domain. For example, if the frequency of the frequency domain unit 1 is smaller than the frequency of the frequency domain unit 2 in the frequency domain, the value(s) of the first parameter(s) associated with the target transmission resource(s) in the frequency domain unit 1 is larger than the value(s) of the first parameter(s) associated with the target transmission resource(s) in the frequency domain unit 2.

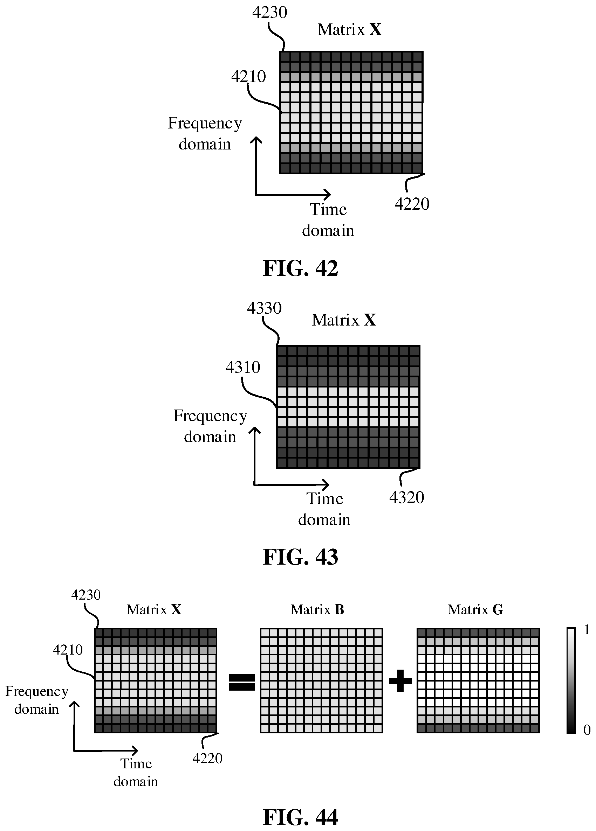

In some implementations, if the above described rule 5-3 is combined with the aforementioned change trend that the change of the first parameters in the second resource set is axisymmetric, see FIG. 42 and the below description, the change trend of the first parameters associated with the target transmission resources in the second resource set decreases from the edge frequency domain position to the center frequency domain position, or increases from the center frequency domain position to the edge frequency domain position.

It should be noted that, in the second resource set, the first parameters associated with the target transmission resources in the same frequency domain unit may be the same, or the first parameters associated with the target transmission resources corresponding to different time domain positions in the same frequency domain unit may be the same. Of course, in the embodiments of the present application, the first parameters associated with the target transmission resources in the same frequency domain unit in the second resource set may be partially or completely different.

In the embodiments of the present application, the mode of changing the first parameters is not limited. For example, the first parameters associated with the second resource set may vary according to a fixed step size, where the fixed step size may be a fixed value (e.g., 0.05) or a fixed proportional value (e.g., 0.5%). For another example, the first parameters associated with the second resource set may be changed according to a variable step size.

In order to facilitate understanding, the change mode of the first parameter in the embodiments of the present application will be described below with reference to FIG. 42. Assuming that the second resource set is an RB, the target transmission resources in the second resource set may be expressed as N $\times$ M REs.

Referring to FIG. 42, the second frequency domain position 4210 is the center frequency domain position of the RB, and the first frequency domain position 4220 is the frequency domain position of the RE having the lowest frequency in the RB. Accordingly, the first parameters associated with the target transmission resources between the second frequency domain position 4210 and the first frequency domain position 4220 satisfy the above rule 5-3, that is, the first parameter associated with each target transmission resource is decreased in the order of the frequency domain units from low to high in the frequency domain. In addition, the change trend of the first parameters associated with the frequency domain units in the second resource set is axisymmetric, that is, the change trend of the first parameters associated with the target transmission resources between the RE (see 4230) having the highest frequency in the second resource set and the second frequency domain position is opposite to the change trend of the first parameters associated with the target transmission resources between the second frequency domain position 4210 and the first frequency domain position 4220. In such case, it can be understood that in the second resource set, the change trend of the first parameters associated with the target transmission resources are decreased from the edge frequency domain position to the center frequency domain position.

**In Example 5-4,** the target transmission resources located between the first frequency domain location and the second frequency domain location satisfy rule 5-4.

In some implementations, rule 5-4 includes the first parameters associated with the target transmission resources are decreased every q frequency domain units, in order of frequency domain units from low to high in frequency domain, where q is a positive integer greater than or equal to 0. It should be understood that when the value of q is 0, the change trend of the first parameters associated with the target transmission resources in the second resource set can be referenced to the description of Example 5-3, and for the sake of brevity, the description will not be repeated here.

In some implementations, the value of q may be a fixed value. Of course, in other implementations, the value of q may be variable, for example, the value of q may vary randomly.

In addition, in the embodiment of the present application, the mode of changing the first parameters is not limited. In some implementations, the first parameters may vary according to a first proportion. For example, the adjustment manner of the first parameters may include changing by the proportional coefficient r every q frequency domain units. In other implementations, the first parameters may vary according to a first step. For another example, the mode of changing the first parameters may include changing by a first step every q frequency domain units.

In some implementations, if the above rule 5-4 is combined with the aforementioned change trend that the change of the first parameters in the second resource set is axisymmetric, see FIG. 43 and the below description, the change trend of the first parameters associated with the target transmission resources in the second resource set is decreasing from the edge frequency domain position to the center frequency domain position, or the change trend of the first parameters associated with the target transmission resources in the second resource set is decreasing from the center frequency domain position to the edge frequency domain position. Such a change trend of the first parameters may be applicable to a scenario in which the communication device moves at a low speed.

It should be noted that, in the second resource set, the first parameters associated with the target transmission resources in the same frequency domain unit may be the same, or the first parameters associated with the target transmission resources corresponding to different time domain positions in the same frequency domain unit may be the same. Of course, in the embodiments of the present application, the first parameters associated with the target transmission resources in the same frequency domain unit in the second resource set may be partially or completely different.

In the embodiments of the present application, the adjustment mode of the first parameters is not limited. For example, the first parameters associated with the second resource set may be adjusted according to a fixed step size, where the fixed step size may be a fixed value (e.g., 0.05) or a fixed proportional value (e.g., 0.5%). For another example, the first parameters associated with the second resource set may be adjusted according to a variable step size.

In order to facilitate understanding, the change mode of the first parameters in the embodiments of the present application will be described below with reference to FIG. 43. Assuming that the second resource set is an RB, the target transmission resources in the second resource set may be expressed as $N \times M$ REs.

Referring to FIG. 43, assuming that the value of q is 2, the second frequency domain position 4310 is the center frequency domain position of the RB, and the first frequency domain position 4320 is the frequency domain position of the RE having the lowest frequency in the RB. Accordingly, the first parameters associated with the target transmission resources between the second frequency domain position 4310 and the first frequency domain position 4320 satisfy the above rule 5-4, that is, the first parameters associated with the target transmission resources are decreased every 2 frequency domain units in the order of the frequency domain units from low to high in the frequency domain. In addition, the change trend of the first parameters associated with the frequency domain units in the second resource set is axisymmetric, that is, the change trend of the first parameters associated with the target transmission resources between the RE (see 4330) having the frequency domain position of highest frequency in the second resource set and the second frequency domain position is opposite to the change trend of the first parameter associated with the target transmission resources between the second frequency domain position 4310 and the first frequency domain position 4320. In such case, it can be understood that in the second resource set, the change trend of the first parameters associated with the target transmission resources decreases from the edge frequency domain position to the center frequency domain position.

In some scenarios, the change trend of the first parameters introduced above in combination with Examples 5-3 and 5-4 may be represented by two parameters (parameter 1 and parameter 2). The parameter 1 represents the initial value of the first parameter associated with each target transmission resource in the second resource set. The parameter 2 represents adjustment values of the first parameters associated with the target transmission resources in the second resource set. The setting of the parameter 2 may cause that the change of the first parameters associated with the target transmission resources in the second resource set satisfy the above described rule 5-3 and/or rule 5-4. That is, the first parameters are obtained by adjusting the initial values indicated by the parameter 1 according to the adjustment values indicated by the parameter 2. Therefore, it can be seen that the change trend of the first parameters associated with the target transmission resources in the second resource set is determined based on the change trend of the adjustment values in the parameter 2, or that the change trend of the first parameters associated with the target transmission resources in the second resource set matches the change trend of the adjustment values in the parameter 2, for example, the change trend of the first parameters associated with the target transmission resources in the second resource set is the same as the change trend of the adjustment values in the parameter 2.

Taking the target transmission resources included in the second resource set being an N × M matrix as an example, the first parameters associated with the target transmission resources in the second resource set may be expressed as a matrix **X,** and the above described parameter 1 and parameter 2 may be expressed by the a matrix **B** of N × M and a matrix **G** of N × M, respectively. Accordingly, the matrix **X** is obtained by adjusting the initial values indicated by the matrix **B** according to the adjustment values indicated by the matrix **G**. For example, matrix **X** = matrix **B** + matrix **G.** Therefore, the matrix **B** can also be called the base matrix, and the matrix **G** can also be called the gradient matrix.

In some implementations, the initial values of the first parameters associated with the target transmission resource in the second set of resources may be the same, helping to simplify the configuration process of the initial values. Taking the matrix **B** as an example, the matrix **B** satisfies $B_{k,i} = B_{k,j} = Y(i \neq j, i, j \in [1, M], k \in [1, N])$. Of course, in the embodiments of the present application, the initial values of the first parameters may be different.

In order to facilitate understanding, the change trend of the first parameters in the second resource set is described below with reference to the matrix **X,** the matrix **B,** and the matrix **G** in conjunction with FIGs. 43 to 44. It should be understood that in the above description, the first parameters associated with the target transmission resources are decreased in the order of the frequency domain units from low to high in the frequency domain, and after combined with the change trend of the first parameters being axisymmetric, the change trend of the first parameters includes decreasing, in the matrix **X,** from the edge position of the matrix X to the center position of the matrix X. Accordingly, the change trend of the adjustment values in the matrix **G** may be that the edge position of the matrix **G** decreases toward the center position of the matrix **G.** For the convenience of description, the following introduction takes the changing trend after the above replacement as an example.

Assuming that matrix **X** is generated by the sum of matrix **B** and matrix **G,** i.e. matrix X = matrix B + matrix G. The initial values of the first parameters indicated in the matrix B are the same, i.e. the matrix B satisfies $B_{k,i} = B_{k,j} = Y(i \neq j, i, j \in [1, M], k \in [1, N])$. The change trend of the adjustment values in the matrix **G** is the same as the change trend of the first parameters in the matrix **X,** that is, the change of the adjustment values in the matrix **G** satisfies the following conditions: the adjustment values associated with the target transmission resources in different time domain positions in the same frequency domain unit in the matrix **G** are the same, and the adjustment values associated with the target transmission resources in different frequency domain units in the same time domain position are different. The adjustment values located at the top and bottom of the matrix **G** are less than or equal to the adjustment values located at the central position of the matrix, and the change trend of the adjustment values in the matrix **G** exhibits axisymmetry about the central frequency domain position being the central axis. Accordingly, the change of the adjustment values in the matrix **G** can be expressed as: $G_{k,i} = G_{N-k+1,i}$

$(i \in [1, M], k \in [1, N])$, $G_{k,i} \geq G_{k+1,i}$ $(i \in [1, M], k \in [1, \lfloor N/2 \rfloor])$, and $G_{1,i} = G_{N,i} = P(i \in [1, M])$, P represents the values of the adjustment values of the matrix **G** located at the edge row of the matrix. In addition, the adjustment values in the matrix **G** are decreased from the edge row of the matrix to the center row of the matrix **G** in an F-rule, and the remaining frequency domain units are set to zero after decreasing S ( $S \leq \lfloor N/2 \rfloor$ ) frequency domain units. The F-rule may include decrementing by a proportional coefficient r (r < 1) every q time domain units, and decrementing by a first step size t ($t \lfloor S/q \rfloor \leq 1$) every q time domain units. The symbol ⌊ ⌋ represents downward rounding.

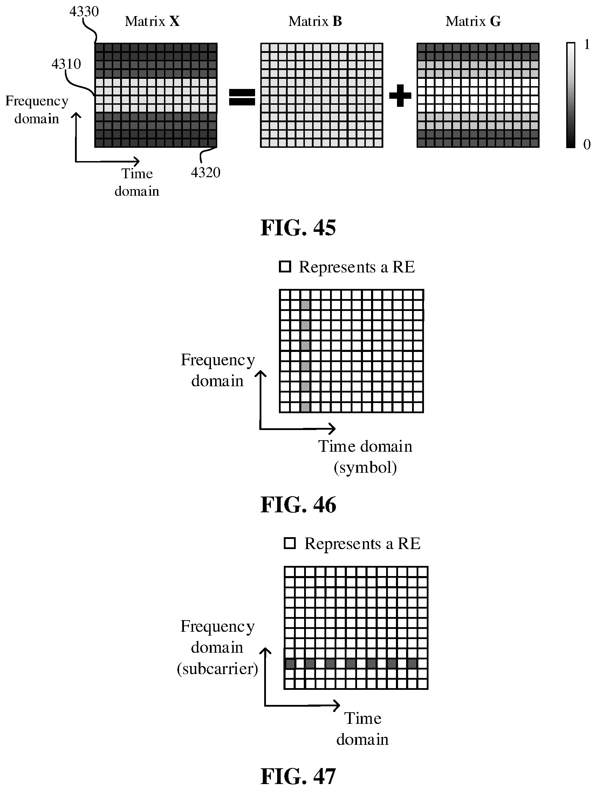

Hereinafter, the construction scheme of the matrix **X** in the embodiments of the present application is described with reference to FIGs. 44 and 45. It should be noted that the embodiments of the present application do not specifically limit the parameters described below, and in some cases, some of the parameters described below may be included in the process of constructing the matrix **X.** In addition, the parameters referred to below can also be replaced by other parameters having similar effects.

Referring to FIG. 44, the matrix X shown in FIG. 42 can be constructed by the formula matrix **X** = matrix **B** + matrix **G,** where Y = 0.1, S = 3, P = 0.6, q = 1, r = 0.5. The rule F includes decrementing by the proportional coefficient r = 0.5 every q = 1 frequency domain unit, and after decrementing S = 3 rows, the values of the remaining rows are set to zero. That is, the initial value of the first parameter in the matrix **B** is 0.1. The variation rule of the adjustment values in the matrix **G** includes: $\mathbf{G}_{k,i} = \mathbf{G}_{N-k+1,i}$ ($i \in [1, M]$, $k \in [1, N]$), $\mathbf{G}_{k,i} \geq \mathbf{G}_{k+1,i}$($i \in [1, M]$, $k \in [1, \lceil N/2 \rceil]$), and $\mathbf{G}_{1,i} = \mathbf{G}_{N,i} = P = 0.6$ ($i \in [1, M]$), that is, the adjustment values of the first row and the 12th row in the matrix **G** are 0.6, and after decrementing 3 rows to the bottom of the matrix **G** according to the F-rule starting from the 12th row (i.e. decrementing from the 12th row to the 10th row), the adjustment values in the remaining rows are 0. After decrementing 3 rows according to the F-rule to the top of the matrix **G** starting from the first row (that is, decrementing from the first row to the third row), the adjustment values in the remaining rows are 0.

Accordingly, continuing to refer to FIG. 44, the change trend of the matrix **X** obtained by superposing the matrix **B** and the matrix **G** can satisfy: $\mathbf{X}_{k,i} = \mathbf{X}_{N-k+1,i}$($i \in [1, M]$, $k \in [1, N]$), $\mathbf{X}_{k,i} \geq \mathbf{X}_{k+1,i}$ ($i \in [1, M]$, $k \in [1, \lceil N/2 \rceil]$), and $\mathbf{X}_{1,i} = \mathbf{X}_{N,i} = P+Y = 0.7$ ($i \in [1, M]$). That is, the value of the first parameters of the first row and the 12th row in the matrix **X** is 0.7, and after decrementing 3 rows from the 12th line to the bottom of the matrix **X** according to the F-rule (that is, decrementing from the 12th line to the 10th line), the values of the first parameters in the remaining lines are 0. After decrementing 3 rows from the first row to the top of the matrix **X** according to the F-rule (that is, decrementing from the first row to the third row), the values of the first parameters in the remaining rows are 0.

Referring to FIG. 45, the matrix X shown in FIG. 43 can be constructed by the formula matrix **X** = matrix **B** + matrix **G,** where Y = 0.1, S = 4, P = 0.6, q = 2, r = 0.5. The rule F includes decrementing by the proportional coefficient r = 0.4 every q = 2 frequency domain units, and after decrementing S = 4 rows, the values of the remaining rows are set to zero. That is, the initial value of the first parameter in the matrix B is 0.1. The variation rule of the adjustment values in the matrix **G** includes: $\mathbf{G}_{k,i} = \mathbf{G}_{N-k+1,i}$ ($i \in [1, M]$, $k \in [1, N]$), $\mathbf{G}_{k,i} \geq \mathbf{G}_{k+1,i}$($i \in [1, M]$, $k \in [1, \lceil N/2 \rceil]$), and $\mathbf{G}_{1,i} = \mathbf{G}_{N,i} = P = 0.6$ ($i \in [1, M]$), that is, the adjustment values of the first and 12th rows in the matrix **G** are 0.6, and after decrementing 4 rows to the lower part of the matrix **G** according to the F-rule starting from the 12th row (i.e. decrementing from the 12th row to the 9th row), the adjustment values in the remaining rows are 0. After decrementing 4 rows according to the F-rule to the top of the matrix **G** starting from the first row (that is, decrementing from the first row to the fourth row), the adjustment values in the remaining rows are 0.

Accordingly, continuing to refer to FIG. 45, the change trend of the matrix **X** obtained by superposing the matrix **B** and the matrix **G** can satisfy: $\mathbf{G}_{k,i} = \mathbf{G}_{N-k+1,i}$($i \in [1, M]$, $k \in [1, N]$), $\mathbf{G}_{k,i} \geq \mathbf{G}_{k+1,i}$ ($i \in [1, M]$, $k \in [1, \lceil N/2 \rceil]$), and $\mathbf{G}_{1,i} = \mathbf{G}_{N,i} = P+Y = 0.7$ ($i \in [1, M]$), That is, the values of the first parameters of the first row and the 12th row in the matrix **G** are 0.7, and after decrementing 4 rows from the 12th row to the bottom of the matrix **G** according to the F-rule (that is, decrementing from the 12th row to the 9th row), the values of the first parameters in the remaining rows are 0. After decrementing 4 rows from the first row to the top of the matrix **G** according to the F-rule (that is, decrementing from the first row to the fourth row), the values of the first parameters in the remaining rows are 0.

In combination with the non-orthogonal transmission mode 4 and the non-orthogonal transmission mode 5, the change mode of the first parameters in the embodiments of the present application has been described above. In the embodiments of the present application, the change mode of the first parameters is not limited. The following is described in combination with non-orthogonal transmission method 6.

**In the non-orthogonal transmission method 6,** the first parameter associated with the target transmission resource in the third resource set is determined based on the first adjustment value.

In some implementations, the first adjustment value may be used to increase the first parameter associated with a corresponding target transmission resource. That is, if the transmission resource(s) other than the target transmission resource(s) in the third resource set is other transmission resource(s), the first parameter(s) associated with the target transmission resource(s) in the third resource set is larger than the first parameter(s) associated with the other transmission resource(s). Of course, in the embodiments of the present application, the first parameter(s) associated with the target transmission resource(s) in the third resource set is smaller than the first parameter(s) associated with other transmission resource(s). Hereinafter, with reference to FIGs. 45 to 52, the first parameter(s) associated with the target transmission resource(s) in the third resource set being larger than the first parameter(s) associated with other transmission resource(s) is taken as an example, and for the sake of brevity, the description will not be repeated here.

It should be understood that in the embodiments of the present application, the change trend of the first parameters may be combined with the change trend of any of the first parameters described above, for example, it may be combined with the change trend of the first parameters associated with the first resource set. In this case, the target transmission resource(s) in the third resource set may be a part of the target transmission resources in the first resource set, and in this case, the third resource set may be understood as a subset of the first resource set. For another example, it may be combined with the change trend of the first parameters associated with the second resource set, in this case, the target transmission resource(s) in the third resource set may be a part of the target transmission resources in the second resource set, and in this case, the third resource set may be understood as a subset of the second resource set. Of course, in the embodiments of the present application, the change trend of the first parameters can be used alone. In this case, the third resource set is an independent resource set. In order to facilitate understanding, the mode of changing the first parameter(s) in the third resource set will be described below in combination with the non-orthogonal transmission mode 6.

In some implementations, the target transmission resources in the third set of resources are arranged according to a first rule. The first rule includes one or more of the following: the target transmission resources within the target time domain unit are arranged at intervals in the frequency domain; the target transmission resources within the target frequency domain unit are arranged at intervals in the frequency domain the target transmission resources in the target time domain unit belong to a plurality of transmission resource groups, the plurality of transmission resource groups are arranged at intervals in the frequency domain, and the target transmission resources in a first transmission resource group among the plurality of transmission resource groups are continuous in the frequency domain; and, the target transmission resources in the target frequency domain unit belong to a plurality of transmission resource groups, the plurality of transmission resource groups are arranged at intervals in the time domain, and the target transmission resources in the second transmission resource group among the plurality of transmission resource groups are continuous in the time domain.

If the first rule includes that the target transmission resources in the target time domain unit are arranged at intervals in the frequency domain. The target time domain unit may include a plurality of frequency domain units consecutive in the frequency domain. Accordingly, the target transmission resources in the plurality of frequency domain units are arranged at intervals in the frequency domain. In other words, the target transmission resources, of which values are assigned by the first adjustment values associated with the third resource set, satisfy that the target transmission resources in the plurality of frequency domain units are arranged at intervals in the frequency domain.

In the embodiments of the present application, there is no limitation on the manner in which the target transmission resources are arranged at intervals in the frequency domain. For example, the above described being arranged at intervals in the frequency domain can be understood as one frequency domain unit being spaced among target transmission resources in a plurality of frequency domain units consecutive in the frequency domain. As another example, the above described being arranged at intervals in the frequency domain may be understood as a plurality of frequency domain units being spaced among target transmission resources in a plurality of frequency domain units consecutive in the frequency domain.

For convenience of understanding, the target transmission resources in the embodiments of the present application will be described below with reference to FIG. 46. Referring to FIG. 46, the plurality of frequency domain resources consecutive in the frequency domain include a plurality of REs within the third symbol in the RB, and the target transmission resources are arranged, on the plurality of Res, at intervals of one RE. Accordingly, values of the target transmission resources within the third symbol are assigned by the first adjustment values to determine first parameters associated with the target transmission resources within the third symbol.

If the first rule includes that the target transmission resources within the target time domain unit are arranged at intervals in the time domain. The target time domain unit may include a plurality of time domain units consecutive in the time domain. Accordingly, the target transmission resources in the plurality of time domain units are arranged at intervals in the time domain. In other words, the target transmission resources, of which values are assigned by the first adjustment values associated with the third resource set, satisfy that the target transmission resources in a plurality of time domain units consecutive in time domain are arranged at intervals in the time domain.

In the embodiments of the present application, there is no limitation on the manner in which the target transmission resources are arranged at intervals in the time domain. For example, the above described being arranged at intervals in the time domain can be understood as one time domain unit being sapced among target transmission resources in a plurality of time domain units consecutive in the time domain. For another example, the above described being arranged at intervals in the time domain can be understood as a plurality of time domain units being spaced among target transmission resources in a plurality of time domain units consecutive in the time domain.

For convenience of understanding, the target transmission resources in the embodiments of the present application will be described below with reference to FIG. 47. Referring to FIG. 47, a plurality of frequency domain resources consecutive in the frequency domain include a plurality of REs in a third subcarrier in the RB, and the target transmission resources are arranged at intervals of one RE, on the plurality of REs. Accordingly, values of the target transmission resource within the third subcarrier are assigned by the first adjustment values to determine the first parameters associated with the target transmission resources within the third symbol.

If the first rule includes that the target transmission resources in the target time domain unit belong to a plurality transmission resource groups, the plurality of transmission resource groups are arranged at intervals in the frequency domain, and the target transmission resources in the first transmission resource group among the plurality of transmission resource groups are continuous in the frequency domain.

It should be noted that the target transmission resources in a certain transmission resource group (that is, the first transmission resource group) among the plurality of transmission resource groups are continuous in the frequency domain, or the target transmission resources in each transmission resource group (including the first transmission resource group) of the plurality of transmission resource groups are continuous in the frequency domain, and the embodiments of the present application do not limit this.

In addition, the number of target transmission resources included in each transmission resource group of the plurality of transmission resource groups may be the same, or the number of target transmission resources included in some or all of the transmission resource groups in the plurality of transmission resource groups may be different, and the embodiments of the present application are not limited thereto.

In the embodiments of the present application, there is no limitation on the manner in which the plurality of transmission resource groups are arranged at intervals in the frequency domain. For example, the above described being arranged at intervals in the frequency domain can be understood as one frequency domain unit being spaced among the plurality of transmission resource groups in a plurality of frequency domain units consecutive in the frequency domain. As another example, the above described being arranged at intervals in the frequency domain may be understood as a plurality of frequency domain units being spaced among a plurality of transmission resource groups in a plurality of frequency domain units consecutive in the frequency domain.

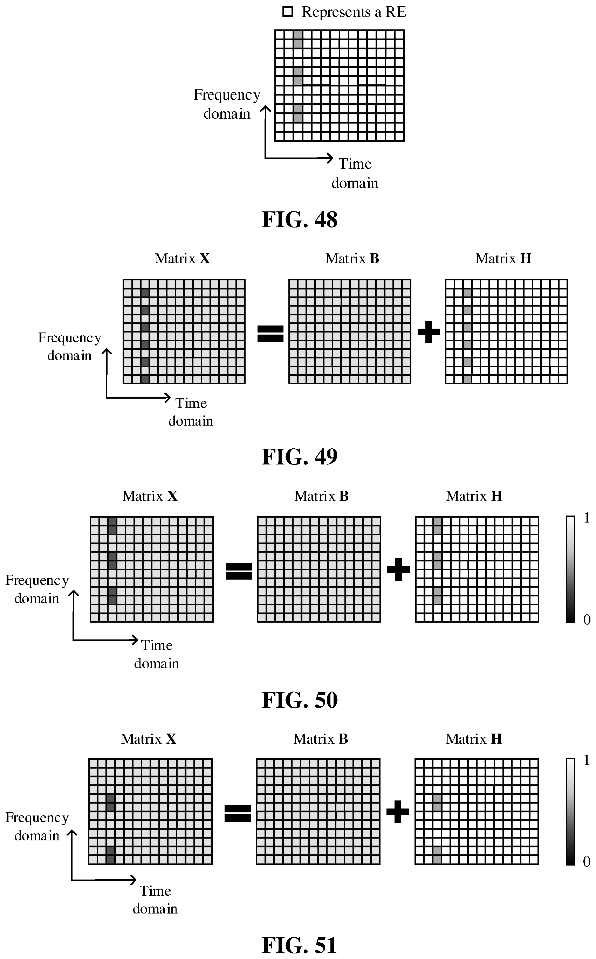

For convenience of understanding, the target transmission resources in the embodiments of the present application will be described below with reference to FIG. 48. Referring to FIG. 48, the plurality of transmission resource groups include a transmission resource group 1, a transmission resource group 2, and a transmission resource group 3. Each transmission resource group includes two target transmission resources consecutive in the frequency domain. Two frequency domain units are spaced between the transmission resource group 1 and the transmission resource group 2 in the frequency domain, and two frequency domain units are spaced between the transmission resource group 2 and the transmission resource group 3 in the frequency domain. Accordingly, values of the target transmission resources in the transmission resource group 1, the transmission resource group 2, and the transmission resource group 3 are assigned by the first adjustment values to determine the first parameters associated with the target transmission resources in the third symbol.

If the first rule includes that the target transmission resources in the target time domain unit belongs to a plurality of transmission resource groups, the plurality of transmission resource groups are arranged at intervals in the time domain, and the target transmission resources in the first transmission resource group among the plurality of transmission resource groups are continuous in the time domain.

It should be noted that the target transmission resources in a certain transmission resource group (that is, the second transmission resource group) among the plurality of transmission resource groups are continuous in the time domain, or the target transmission resources in each transmission resource group (including the second transmission resource group) among the plurality of transmission resource groups are continuous in the time domain, and the embodiments of the present application do not limit this.

In addition, the number of target transmission resources included in each transmission resource groups in the plurality of transmission resource groups may be the same, or the number of target transmission resources included in some or all of the transmission resource groups in the plurality of transmission resource groups may be different, and the embodiments of the present application are not limited thereto.

In the embodiments of the present application, there is no limitation on the manner in which the plurality of transmission resource groups are arranged at intervals in the time domain. For example, the above described being arranged at intervals in the time domain can be understood as one time domain unit being spaced among a plurality of transmission resource groups in a plurality of time domain units consecutive in the time domain. For another example, the above described being arranged at intervals in the time domain can be understood as a plurality of time domain units being spaced among a plurality of transmission resource groups in a plurality of time domain units consecutive in the time domain.

In order to facilitate understanding, the target transmission resources in the embodiments of the present application are described below with reference to FIG. 48. Referring to FIG. 48, the plurality of transmission resource groups include a transmission resource group 1, a transmission resource group 2, and a transmission resource group 3, and each transmission resource group includes two target transmission resources consecutive in the time domain. Two time domain units are spaced between the transmission resource group 1 and the transmission resource group 2 in the time domain, and two time domain units are spaced between the transmission resource group 2 and the transmission resource group 3 in the time domain. Accordingly, values of the target transmission resources in the transmission resource group 1, the transmission resource group 2, and the transmission resource group 3 are assigned by the first adjustment values to determine the first parameters associated with the target transmission resources in the third symbol.

In some scenarios, if the first adjustment values are used to adjust the first parameters of the target transmission resources in the target resource set, and the target transmission resources in the target resource set may be expressed as an matrix of N × M, accordingly, the first adjustment values may be expressed as an matrix **H** of N × M, where the first adjustment values associated with the target transmission resources in the third resource set in the matrix **H** may be a first value, and the first adjustment values associated with other target transmission resources in the matrix **H** may be a second value. The first value is different from the second value, for example, the first value may be a non-zero value, and accordingly, the second value is 0. For another example, the first value may be 0, and accordingly, the second value is a non-zero value.

In some implementations, the matrix **H** has a rasterization feature (also referred to as a "raster matrix"), that is, the first adjustment values associated with REs corresponding to part of time domain units and/or part of frequency domain units are U, and the first adjustment values associated with the remaining REs are 0. The time domain unit can be selected according to the index set $V$

$\{i| \ i\in[1, \ M]\}$, and the frequency domain unit can be selected according to the starting point index $a(a\in[1, N])$, length $l$ ($l\in[1,N]$), and interval $d$ ($d\in[1, \ N]$). Here, the frequency domain units may be sequentially indexed in order of from high frequency to low frequency. Further, the index of the frequency domain unit is indexed from 1.

In order to facilitate understanding, the matrix **H** is taken as an example, and a scheme of combining the change trend of the first parameters in the non-orthogonal transmission mode 6 and other non-orthogonal transmission modes in the embodiments of the present application is described in combination with the following Examples 1 to 3.

**In Example 1,** matrix **H** and non-orthogonal transmission mode 3 are combined with each other to obtain matrix X.

In some implementations, matrix **X** may be constructed by the formula matrix **X** = matrix **B** + matrix **H.** For matrix B, $\mathbf{B}_{k,i} = \mathbf{B}_{k,j}=Y(i\neq j, \ i, \ j\in[1, \ M], \ k\in[1, \ N])$. For the matrix **H,** the first adjustment values associated with the REs corresponding to the part of time domain units and/or the part of frequency domain units are U, and the first adjustment values associated with the remaining RE are 0. The time domain unit can be selected according to the index set $V \ \{i \ | \ i\in[1, \ M]\}$, the frequency domain unit can be selected according to the starting point index $a$ ($a\in[1, \ N]$), the frequency domain and/or time domain length $l$ ($l\in[1, \ N]$), and the interval $d$ ($d\in[1, \ N]$), and the first parameters associated with the corresponding selected target transmission resources are set based on the first adjustment values.

Referring to FIG. 49, the matrix **X** can be constructed by the formula matrix **X** = matrix **B** + matrix **H,** where Y = 0.1, V = {3}, U = 0.2, a = 2, 1 = 1, d = 1. That is, the initial value of the first parameter in the matrix **B** is 0.1. The target transmission resources adjusted by the first adjustment values in the matrix **H** satisfy the following conditions: being located in a time domain unit having an index of 3, the starting frequency of the corresponding frequency domain unit is a frequency domain unit corresponding to a subcarrier having an index of a = 2, the frequency domain length 1 = 1, and the target transmission resource interval d corresponding to the first adjustment value is 1 frequency domain unit. Accordingly, the value of the first adjustment values associated with the target transmission resource in the matrix **H** is 0.2, and the value of the first adjustment values associated with the other target transmission resource is 0. Accordingly, with reference to FIG. 49, the value of the first parameters associated with the target transmission units satisfying the above described condition in the constructed matrix X is Y + U = 0.3, and the value of the first parameters associated with the target transmission units not satisfying the above described condition is Y = 0.1.

Referring to FIG. 50, the matrix **X** can be constructed by the formula Matrix **X** = Matrix **B** + Matrix **H,** where Y = 0.1, V = {3}, U = 0.2, a = 1, 1 = 2, and d = 2. That is, the initial value of the first parameter in the matrix **B** is 0.1. The target transmission resources adjusted by the first adjustment values in the matrix **H** satisfy the following conditions: being located in a time domain unit having an index of 3, the starting frequency of the corresponding frequency domain unit is a frequency domain unit corresponding to a subcarrier having an index of a = 1, the frequency domain length 1 = 2, and the target transmission resource interval d corresponding to the first adjustment value is 2 frequency domain units. Accordingly, the values of the first adjustment values associated with the target transmission resources in the matrix **H** are 0.2, and the values of the first adjustment values associated with the other target transmission resources are 0. Accordingly, with continued reference to FIG. 50, the values of the first parameters associated with the target transmission units satisfying the above described condition in the constructed matrix **X** are Y + U = 0.3, and the values of the first parameters associated with the target transmission units not satisfying the above described condition are Y = 0.1.

Referring to FIG. 51, the matrix **X** can be constructed by the formula Matrix **X** = Matrix **B** + Matrix **H,** where Y = 0.1, V = {3}, U = 0.2, a = 5, 1 = 2, and d = 4. That is, the initial value of the first parameter in the matrix **B** is 0.1. The target transmission resources adjusted by the first adjustment values in the matrix **H** satisfy the following conditions: being located in a time domain unit having an index of 3, the starting frequency of the corresponding frequency domain unit is a frequency domain unit corresponding to a subcarrier having an index of a = 5, the frequency domain length 1 = 2, and the target transmission resource interval d corresponding to the first adjustment value is 4 frequency domain units. Accordingly, the values of the first adjustment values associated with the target transmission resources in the matrix **H** are 0.2, and the values of the first adjustment values associated with the other target transmission resources are 0. Accordingly, with reference to FIG. 51, the values of the first parameters associated with the target transmission units satisfying the above described condition in the constructed matrix **X** are Y + U = 0.3, and the values of the first parameters associated with the target transmission units not satisfying the above described condition are Y = 0.1.

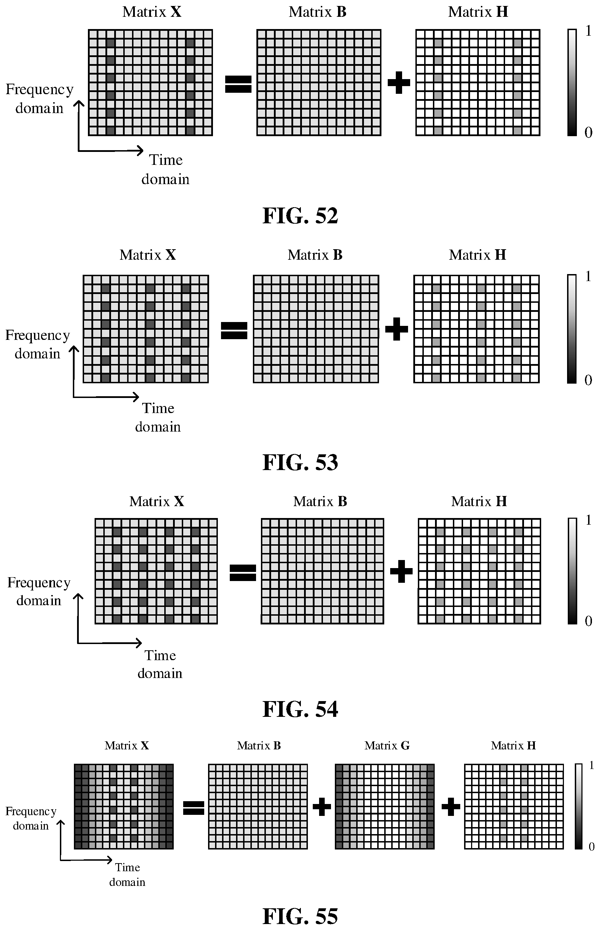

Referring to FIG. 52, the matrix **X** can be constructed by the formula Matrix **X** = Matrix **B** + Matrix **H,** where Y = 0. 1, V = {3, 12}, U = 0.2, a = 2, 1 = 1, and d = 1. That is, the initial value of the first parameter in the matrix **B** is 0.1. The target transmission resources adjusted by the first adjustment values in the matrix **H** satisfy the following conditions: being located in the time domain units with indices 3 and 12, the starting frequency of the corresponding frequency domain unit is the frequency domain unit corresponding to the subcarrier with the index a = 2, the frequency domain length 1 = 1, and the target transmission resource interval d corresponding to the first adjustment value is 1 frequency domain unit. Accordingly, the values of the first adjustment values associated with the target transmission resources in the matrix **H** are 0.2, and the values of the first adjustment values associated with the other target transmission resources are 0. Accordingly, with continued reference to FIG. 52, the values of the first parameters associated with the target transmission units satisfying the above described condition in the constructed matrix **X** are Y + U = 0.3, and the values of the first parameters associated with the target transmission units not satisfying the above described condition are Y = 0.1.

Referring to FIG. 53, the matrix **X** can be constructed by the formula Matrix **X** = Matrix **B** + Matrix **H,** where Y = 0.1, V = {3, 8, 12}, U = 0.2, a = 2, 1 = 1, d = 1. That is, the initial value of the first parameter in the matrix **B** is 0.1. The target transmission resources adjusted by the first adjustment values in the matrix **H** satisfy the following conditions: being located in time domain units having indexes 3, 8, and 12, the starting frequency of the corresponding frequency domain unit is a frequency domain unit corresponding to the subcarrier having index a = 2, the frequency domain length 1 = 1, and the target transmission resource interval d corresponding to the first adjustment value is 1 frequency domain unit. Accordingly, the values of the first adjustment values associated with the target transmission resources in the matrix **H** are 0.2, and the values of the first adjustment values associated with the other target transmission resources are 0. Accordingly, with continued reference to FIG. 53, the values of the first parameters associated with the target transmission units satisfying the above described condition in the constructed matrix **X** are Y + U = 0.3, and the values of the first parameters associated with the target transmission units not satisfying the above described condition are Y = 0.1.

Referring to FIG. 54, the matrix **X** can be constructed by the formula Matrix **X** = Matrix **B** + Matrix **H,** where Y = 0.1, V = {3, 6, 9, 12}, U = 0.2, a = 2, 1 = 1, d = 1. That is, the initial value of the first parameter in the matrix **B** is 0.1. The target transmission resources adjusted by the first adjustment values in the matrix H satisfy the following conditions: being located in time domain units having indexes 3, 6, 9, and 12, the starting frequency of the corresponding frequency domain unit is a frequency domain unit corresponding to the subcarrier having index a = 2, the frequency domain length 1 = 1, and the target transmission resource interval d corresponding to the first adjustment value is 1 frequency domain unit. Accordingly, the values of the first adjustment values associated with the target transmission resources in the matrix **H** are 0.2, and the values of the first adjustment values associated with the other target transmission resources are 0. Accordingly, with reference to FIG. 54, the values of the first parameters associated with the target transmission units satisfying the above described condition in the constructed matrix **X** are Y + U = 0.3, and the values of the first parameters associated with the target transmission units not satisfying the above described condition are Y = 0.1.

**In Example 2,** matrix **H** and non-orthogonal transmission mode 4 (e.g., Examples 4-4) are combined with each other to obtain matrix **X.**

In some implementations, matrix **X** may be constructed by the formula matrix **X** = matrix **B** + matrix **G** + matrix **H.** For matrix **B,** $\mathbf{B}_{k,i} = \mathbf{B}_{k,j} = Y (i \neq j,\ i,\ j \in [1,\ M],\ k \in [1,\ N])$.

For the matrix **G,** the change of the adjustment value 2 in the matrix **G** satisfies the following conditions: $\mathbf{G}_{k,i} = \mathbf{G}_{k,M-i+1}$ $(i \in [1,\ M],\ k \in [1,\ N])$, $\mathbf{G}_{k,i} \geq \mathbf{G}_{k,i+1}$ $(i \in [1,\ \lfloor M/2 \rfloor],\ k \in [1,\ N])$, and $\mathbf{G}_{k,1} = \mathbf{G}_{k,M} = P$ $(k \in [1,\ N])$, P represents the value of the adjustment value 2 of the edge column of the matrix **G**. Further, in the matrix **G,** the adjustment value 2 is decreased from the edge column of the matrix toward the center column of the matrix **G** in an F-rule, and after decrementing S ( $S \leq \lfloor M/2 \rfloor$ ) time-domain units, the remaining time-domain units are set to zero. The F-rule may include decrementing by a proportional coefficient r (r < 1) every U time domain units.

For the matrix **H,** the first adjustment values associated with the target transmission resources corresponding to the part of time domain units and/or part of frequency domain units is U, and the first adjustment values associated with the remaining target transmission resources are 0. The time domain unit can be selected according to the index set $V \sqsubseteq \{i \mid i \in [1,\ M]\}$, the frequency domain unit can be selected according to the starting point index a (a∈[1, N]), the frequency domain length and/or time domain length l (l∈[1, N]), and the interval d (d∈[1, N]), and the first parameter associated with the corresponding selected target transmission resource is set based on the first adjustment value.

Referring to FIG. 55, the matrix **X** can be constructed by the formula Matrix **X** = Matrix **B** + Matrix **G** + Matrix **H,** where Y = 0.1, S = 4, P = 0.6, r = 0.5, V = {6, 9}, U = 0.2, a = 1, 1 = 1, d = 1. That is, the initial value of the first parameter in the matrix **B** is 0.1. The target transmission resources adjusted by the first adjustment values in the matrix **H** satisfy the following conditions: being located in time domain units having indexes of 6 and 9, the starting frequency of the corresponding frequency domain unit is a frequency domain unit corresponding to a subcarrier having an index a = 1, the frequency domain length 1 is 1, and the target transmission resource interval d corresponding to the first adjustment value is 1 frequency domain unit. Accordingly, the values of the first adjustment values associated with the target transmission resources in the matrix **H** are 0.2, and the values of the first adjustment values associated with other target transmission resources are 0. The change of the adjustment value 2 in the matrix **G** can be expressed as: $\mathbf{G}_{k,i} = \mathbf{G}_{k,M-i+1}$ ($i \in [1, M]$, $k \in [1, N]$), $\mathbf{G}_{k,i} \geq \mathbf{G}_{k,i+1}$ ($i \in [1, \lfloor M/2 \rfloor]$, $k \in [1, N]$), and $\mathbf{G}_{k,l} = \mathbf{G}_{k,M} = P = 0.6$ ($k \in [1, N]$), P represents the value of the adjustment value 2 of the edge column of the matrix **G**. Further, in the matrix **G,** the adjustment value 2 is decreased in an F-rule from the edge column of the matrix toward the center column of the matrix **G,** and after decreasing S = 4 time-domain cells, the remaining time-domain units are set to zero. The F-rule may include decrementing by a proportional coefficient r = 0.5 every U = 1 time domain unit.

Accordingly, continuing to refer to FIG. 55, in the constructed matrix **X,** the values of the first parameters associated with the target transmission units associated with the first adjustment values in the matrix **H** are Y+U+P= 0.9, and the values of the first parameters associated with the remaining target transmission units are determined by the matrix **B** + the matrix **G.**

**In Example 3,** matrix **H** and non-orthogonal transmission mode 4 (e.g., Example 4-2) are combined with each other to obtain matrix **X.**

In some implementations, matrix **X** may be constructed by the formula matrix **X** = matrix **B** + matrix **G** + matrix **H.** For matrix **B**, $\mathbf{B}_{k,i} = \mathbf{B}_{k,j} = Y(i \neq j, i, j \in [1, M]$, $k \in [1, N]$).

For the matrix **G,** the change of the adjustment value 2 in the matrix **G** satisfies the following conditions: $\mathbf{G}_{k,i} = \mathbf{G}_{k,M-i+1}$ ($i \in [1, M]$, $k \in [1, N]$), $\mathbf{G}_{k,i} \geq \mathbf{G}_{k,i+1}$ ($i \in [1, \lfloor M/2 \rfloor]$, $k \in [1, N]$), and if M is odd, $\mathbf{G}_{k, \lceil M/2 \rceil} = P$ ($k \in [1, N]$), if M is even, $\mathbf{G}_{k,M/2} = \mathbf{G}_{k,M/2+1} = P$ ($k \in [1, N]$), and P represents the values of the adjustment values located at the central axis of the matrix **G**. In addition, in the matrix **G,** the adjustment values are decreased in an F-rule from the central axial to the edge of matrix G, and after decrementing S ($S \leq \lfloor M/2 \rfloor$) time domain units, the remaining time domain units are set to zero. The F-rule may include decrementing by a proportional coefficient r (r < 1) every U time domain units.

For the matrix **H,** the first adjustment values associated with the target transmission resources corresponding to part of time domain units and/or the part of frequency domain units are U, and the first adjustment values associated with the remaining target transmission resources are 0. The time domain unit can be selected according to the index set $V\{i \mid i \in [1, M]\}$, the frequency domain unit can be selected according to the starting point index a ($a \in [1, N]$), the frequency domain length and/or time domain length $l$ ($l \in [1, N]$), and the interval d ($d \in [1, N]$), and the first parameter associated with the corresponding selected target transmission resource is set based on the first adjustment value.

Referring to FIG. 56, the matrix **X** can be constructed by the formula Matrix **X** = Matrix **B** + Matrix **G** + Matrix **H,** where Y = 0.1, S = 3, P = 0.6, r = 0.5, V = {2, 3, 12, 13}, U = 0.2, a = 3, 1 = 2, d = 2. That is, the initial value of the first parameter in the matrix **B** is 0.1. The target transmission resources adjusted by the first adjustment values in the matrix **H** satisfy the following conditions: being located in time domain units having indexes of 2, 3, 12, and 13, the starting frequency of the corresponding frequency domain unit is a frequency domain unit corresponding to a subcarrier having an index a = 3, the frequency domain length 1 = 1, and the target transmission resource interval d corresponding to the first adjustment value is 2 frequency domain units. Accordingly, the values of the first adjustment values associated with the target transmission resources in the matrix **H** are 0.2, and the values of the first adjustment values associated with other target transmission resources are 0. The change of adjustment value 2 in matrix **G** can be expressed as: $\mathbf{G}_{k,i} = \mathbf{G}_{k,M-i1}$ ($i \in [1, M]$, $kE[1, N])$, $\mathbf{G}_{k,i} \geq \mathbf{G}_{k,i+1}$ ($i \in [1, \lfloor M/2 \rfloor]$, $k \in [1, N]$), $\mathbf{G}_{k,M/2} = \mathbf{G}_{k,M/2+1} = P = 0.6$ ($k \in [1, N]$), P represents the value of adjustment value 2 in the edge column of matrix **G.** Further, in the matrix **G,** the adjustment value 2 is decreased from the center column of the matrix toward the edge column of the matrix **G** in an F-rule, and the remaining time domain units are set to zero after decrementing S = 3 time domain units. The F rule may include decrementing by a proportional coefficient r = 0.5 every U = 1 time domain unit.

Accordingly, continuing to refer to FIG. 56, in the constructed matrix **X,** the values of the first parameters associated with the target transmission units associated with the first adjustment values in the matrix **H** are Y + U + P = 0.9, and the values of the first parameters associated with the remaining target transmission units are determined by the matrix **B** + the matrix **G.**

**In Example 4,** matrix **H** is combined with non-orthogonal transmission mode 5 (e.g., Example 5-3) to obtain matrix **X.**

In some implementations, matrix **X** may be constructed by the formula matrix **X** = matrix **B** + matrix **G** + matrix **H.** For matrix **B**, $\mathbf{B}_{k,i} = \mathbf{B}_{k,j} = Y(i \neq j, i, j \in [1, M]$, $k \in [1, N]$).

For the matrix **G,** the change of the adjustment value 2 in the matrix **G** satisfies the following conditions: $\mathbf{G}_{k,i} = \mathbf{G}_{N-k+1,i}$ ($i \in [1, M]$, $k \in [1, N]$), $\mathbf{G}_{k,i} \geq \mathbf{G}_{k+1,i}$ ($i \in [1, M]$, $k \in [1, \lfloor N/2 \rfloor]$), and $\mathbf{G}_{1,i} = \mathbf{G}_{N,i} = P$ ($i \in [1, M]$), P represents the values of the adjustment values of the edge row of the matrix **G**. In addition, the adjustment values in the matrix **G** are decreased from the edge row of the matrix to the center row of the matrix **G** in an F-rule, and the remaining frequency domain units are set to zero after decrementing $S$ ( $S \leq \lfloor N/2 \rfloor$ ) frequency domain units. The F-rule may include decrementing by a proportional coefficient r (r < 1) every q frequency domain units. The symbol ⌊ ⌋ means downward rounding.

For the matrix **H,** the first adjustment values associated with the target transmission resources corresponding to part of time domain units and/or part of frequency domain units are U, and the first adjustment values associated with the remaining target transmission resources are 0. The time domain unit can be selected according to the index set $V \lfloor \{i \mid i \in [1, M]\}$, the frequency domain unit can be selected according to the starting point index $a$ ($a \in [1, N]$), the frequency domain length and/or time domain length $l$ ($l \in [1, N]$), and the interval $d$ ($d \in [1, N]$), and the first parameter associated with the corresponding selected target transmission resource is set based on the first adjustment value.

Referring to FIG. 57, the matrix **X** can be constructed by the formula Matrix **X** = Matrix **B** + Matrix **G** + Matrix **H,** where Y = 0.1, S = 3, P = 0.6, U = 0.2, r = 0.5, V = {3, 6, 9, 12}, a = 3, 1 = 1, d = 6. That is, the initial value of the first parameter in the matrix **B** is 0.1. The target transmission resources adjusted by the first adjustment values in the matrix **H** satisfy the following conditions: being located in time domain units having indexes of 3, 6, 9, and 12, the starting frequency of the corresponding frequency domain unit is a frequency domain unit corresponding to a subcarrier having an index a = 3, the frequency domain length 1 = 1, and the target transmission resource interval d corresponding to the first adjustment value is 2 frequency domain units. Accordingly, the values of the first adjustment values associated with the target transmission resources in the matrix **H** are 0.2, and the values of the first adjustment values associated with other target transmission resources are 0. The change of adjustment value 2 in matrix **G** can be expressed as: $\mathbf{G}_{k,i} = \mathbf{G}_{k,M-i+1}$ ($i \in [1, M]$, $k \in [1, N]$), $\mathbf{G}_{k,i} \geq \mathbf{G}_{k,i+1}$ ($i \in [1, M/2]$, $k \in [1, N]$), $\mathbf{G}_{k,M/2} = \mathbf{G}_{k,M/2+1} = P=0.6$ ($k \in [1, N]$), P represents the value of adjustment value 2 in the edge column of matrix **G**. Further, in the matrix **G,** the adjustment value 2 is decreased from the center column of the matrix to the edge column of the matrix **G** in an F-rule, and the remaining time domain units are set to zero after decrementing S = 3 time domain units. The F rule may include decrementing by a proportional coefficient r = 0.5 every U = 1 time domain unit.

Accordingly, continuing to refer to FIG. 57, in the constructed matrix **X,** the values of the first parameters associated with the target transmission units associated with the first adjustment values in the matrix **H** are Y + U + P = 0.9, and the values of the first parameters associated with the remaining target transmission units are determined by the matrix **B** + the matrix **G.**

**In Example 5,** matrix **H** is combined with non-orthogonal transmission mode 5 (e.g., Example 5-1) to obtain matrix **X.**

In some implementations, matrix X may be constructed by the formula matrix **X** = matrix **B** + matrix **G** + matrix **H,** For matrix **B,** $\mathbf{B}_{k,i} = \mathbf{B}_{k,j} = Y(i \neq j$, $i, j \in [1, M]$, $k \in [1, N]$).

For the matrix **G,** the change of the adjustment value 2 in the matrix **G** satisfies the following conditions: $\mathbf{G}_{k,i} = \mathbf{G}_{N-k+1,i}$ ($i \in [1, M]$, $k \in [1, N]$), $\mathbf{G}_{k,i} \geq \mathbf{G}_{k+1,i}$ ($i \in [1, M]$, $kE$ $[1, \lfloor N/2 \rfloor]$), and $\mathbf{G}_{1,i} = \mathbf{G}_{N,i} = P$ ($i \in [1, M]$). P represents the values of the adjustment values of the edge row of the matrix **G.** In addition, the adjustment values in the matrix **G** are decreased from the edge row of the matrix to the center row of the matrix **G** in an F-rule, and the remaining frequency domain units are set to zero after decrementing $S$ ( $S \leq \lfloor N/2 \rfloor$ ) frequency domain units. The F-rule may include decrementing by a proportional coefficient $r$ (r<1) every q frequency domain units. The symbol ⌊ ⌋ means downward rounding.

For the matrix **H,** the first adjustment values associated with the target transmission resources corresponding to part of time domain units and/or part of frequency domain units are U, and the first adjustment values associated with the remaining target transmission resources associations are 0. The time domain unit can be selected according to the index set $V \lfloor \{i \mid i \in [1, M]\}$, the frequency domain unit can be selected according to the starting point index $a$ ($a \in [1, N]$), the frequency domain length and/or time domain length $l$ ($l \in [1, N]$), and the interval $d$ ($d \in [1, N]$), and the first parameter associated with the corresponding selected target transmission resource is set based on the first adjustment value.

Referring to FIG. 58, the matrix **X** can be constructed by the formula Matrix **X** = Matrix **B** + Matrix **G** + Matrix **H,** where Y = 0.1, S = 3, P = 0.2, U = 0.6, r = 0.5, V = {3, 6, 9, 12}, a = 3, 1 = 1, d = 6. That is, the initial value of the first parameter in the matrix **B** is 0.1. The target transmission resources adjusted by the first adjustment values in the matrix **H** satisfy the following conditions: being located in time domain units having indexes of 3, 6, 9, and 12, the starting frequency of the corresponding frequency domain unit is a frequency domain unit corresponding to a subcarrier having an index a = 3, the frequency domain length 1 = 1, and the target transmission resource interval d corresponding to the first adjustment value is 2 frequency domain units. Accordingly, the values of the first adjustment values associated with the target transmission resources in the matrix **H** are 0.2, and the values of the first adjustment values associated with other target transmission resources are 0. The change of adjustment value 2 in matrix **G** can be expressed as: $\mathbf{G}_{k,i} = \mathbf{G}_{k,M-i+1}$ ($i \in [1, M]$, $k \in [1, N]$), $\mathbf{G}_{k,i} \geq \mathbf{G}_{k,i+1}$ ($i \in [1, M/2]$, $k \in [1, N]$), $\mathbf{G}_{k,M/2} = \mathbf{G}_{k,M/2+1} = P=0.6$ ($k \in [1, N]$). P represents the value of adjustment value 2 of the edge column of the matrix **G.** Further, in the matrix **G,** the adjustment value 2 is decreased from the center column of the matrix to the edge column of the matrix **G** in an F-rule, and the remaining time-domain units are set to zero after the decrementing S = 3 time domain units. The F-rule may include decrementing by a proportional coefficient r = 0.5 every U = 1 time domain unit.

Accordingly, continuing to refer to FIG. 58, in the constructed matrix **X,** the values of the first parameters associated with the target transmission units associated with the first adjustment values in the matrix **H** are Y + U + P = 0.9, and the values of the first parameters associated with the remaining target transmission units are determined by the matrix **B** + the matrix **G.**

It should be noted that the target transmission resources associated with the matrix **H** and the target transmission resources associated with the matrix **G** may include overlapping transmission resources. Of course, in the embodiments of the present application, in the target transmission resources associated with the matrix **H** and the target transmission resources associated with the matrix **G,** some or all of the target time domain resources may be different.

The setting modes of the first parameters in the embodiments of the present application is described above with reference to FIGs. 25 to 58, and the first parameter in the setting modes of the first parameters described above can be presented in a pattern, for example, as shown by any one of the above matrices **X**, $X \in [0, 1]^{N \times M}$. In some scenarios, different aforementioned setting modes of the first parameters may be indicated by indication information. When the setting mode of the first parameters are presented in a pattern, and accordingly, different parameter values carried in the indication information may indicate different patterns. For example, if the parameter value in the indication information is 00, it may be used to indicate that the first parameters are determined based on the matrix **X** in the non-orthogonal transmission method 3. For another example, if the parameter value in the indication information is 01, it may be used to indicate that the first parameters are determined based on the matrix **X** in the non-orthogonal transmission mode 4-1. For another example, if the parameter value in the indication information is 10, it may be used to indicate that the first parameters are determined based on the matrix **X** in the non-orthogonal transmission mode 4-2. For another example, if the parameter value in the indication information is 11, it may be used to indicate that the first parameters are determined based on the matrix **X** in the non-orthogonal transmission mode 4-3. For another example, if the parameter value in the indication information is 0000, it may be used to indicate that the first parameters are determined based on the matrix **X** in the non-orthogonal transmission mode 4-4. For another example, if the parameter value in the indication information is 0000, it may be used to indicate that the first parameters are determined based on the matrix **X** in the non-orthogonal transmission mode 4-4. For another example, if the parameter value in the indication information is 0001, it may be used to indicate that the first parameters are determined based on the matrix **X** in the non-orthogonal transmission mode 5-1. For another example, if the parameter value in the indication information is 0010, it may be used to indicate that the first parameters are determined based on the matrix **X** in the non-orthogonal transmission mode 5-2. For another example, if the parameter value in the indication information is 0100, it may be used to indicate that the first parameters are determined based on the matrix **X** in the non-orthogonal transmission mode 5-3. For another example, if the parameter value in the indication information is 1000, it may be used to indicate that the first parameters are determined based on the matrix **X** in the non-orthogonal transmission mode 5-4. For another example, if the parameter value in the indication information is 1100, it may be used to indicate that the first parameters are determined based on the matrix **X** in the non-orthogonal transmission mode 6.

In the embodiments of the present application, the setting modes of the first parameters may be determined based on a first model in addition to the above description. The first model is used to adjust the initial parameter according to the transmission condition of the first signal. That is, the method further includes that the first device adjusts the initial parameter by using the target model to obtain the first parameter.

Generally, in order to improve the plausibility of the first parameter output by the target model, the first model may be trained using training data associated with the transmission condition of the first signal. That is, the transmission condition of the first signal is associated with training data of the first model, and the training data is used to train the first model.

In some implementations, the transmission condition is associated with one or more of the following: an antenna number of antennas for transmission of the first signal ; a channel condition of a channel for transmission of the first signal; radio frequency device characteristic for transmission of the first signal.

In order to facilitate understanding, the scheme of generating the first parameters in the embodiments of the present application will be described below with reference to FIG. 67. Referring to FIG. 67, in S6710, the data bitstream is generated. In S6720, Channel encoding is performed on the data bits. In S6730, the channel-encoded bitstream is symbol mapped according to the modulation symbol set to complete the modulation process. In S6740, pilots are superposed based on the pilot symbol set to obtain superposed symbols. In S6750, the superposed signal is transmitted to the receiving end after passing through the channel. In S6760, the superposed signal transmitted through the channel is received by the receiver, and the superposed signal is channel decoded. In S6770, the received data bits are obtained through channel decoding.

It should be noted that the parameter (first parameter) used by superposing pilot in the above link, and the model parameters in the receiver may be learnable, and the remaining modules may not be learnable.

In addition, end-to-end training optimization according to three types of loss functions may be considered in the training process. The loss function L1 is the cross entropy between the generated data bits and the received data bits. The loss function L2 is the cross entropy between the channel-encoded bits and the bits recovered by the AI receiver. The loss function L3 is the mean square error between the real channel matrix and the estimated channel matrix. In the training process, the learnable parameters in the link are optimized according to the total loss function $L = \alpha L1 + \beta L2 + \gamma L3$, where $\alpha$, $\beta$ and $\gamma$ represent weight parameters. The first parameter (e.g., a pilot pattern) and the corresponding receiver parameter obtained after the training can be actually deployed in the subsequent specified communication scenario.

In the embodiments of the present application, the value range of the first parameter is not limited. In some implementations, the value range of the first parameter may be between 0 and 1. For example, the value of the first parameter may be 0.05, the value of the first parameter may be 0.1, the value of the first parameter may be 0.2, and the value of the first parameter may be 0.4. For another example, the setting of the first parameter may cause that the energy of the target signal transmitted on the target transmission resource is less than an energy threshold associated with the target transmission resource. In other implementations, the setting of the first parameter may cause that the power of the target signal transmitted on the target transmission resource is less than a power threshold associated with the target transmission resource.

Based on the above description, it can be seen that the scheme of adopting non-orthogonal transmission of the first signal and the second signal is helpful to improve the utilization rate of transmission resources. However, the scheme of non-orthogonal transmission brings a challenge to the second device to distinguish the first signal from the second signal, and the traditional receiver cannot well distinguish the first signal and the second signal that are transmitted orthogonally.

Therefore, in view of the above problems, the embodiments of the present application further provide a model-based receiver. The model (also referred to as a "fourth model") is used for processing a received signal to predict bits corresponding to the received signal. In the embodiments of the present application, the fourth model is not specifically limited. In some implementations, the fourth model may be a neural network model, for example, any of the neural network models described above, and therefore, the receiver of the example of the present application may also be referred to as an "AI receiver". Of course, the fourth model may also be another model, for example, a machine learning model or the like.

In some implementations, the fourth model may recover bits corresponding to symbols of the received signal by predicting symbols corresponding to the received signal. For example, referring to FIG. 59, the first signal and the second signal are transmitted on the RB 1 in a non-orthogonal transmission manner, and the matrix 1 represents the energy of the signals (including the first signal and the second signal that are transmitted non-orthogonally) carried in each RE in the RB 1. The matrix 1 is input to the fourth model, and accordingly, the fourth model may predict a symbol (e.g., a constellation modulation symbol) corresponding to each RE in the RB 1 based on the matrix 1, and then recover the bits carried on each RE in the RB 1 based on the correspondence between the symbols and the bits.

The solution of the embodiments of the present application can be applied to a scenario in which the correspondence relationship between symbols and bits is known. In some implementations, the solutions of the embodiments of the present application may be applied to a scenario in which symbols cannot be learned (for example, a scenario in which constellation modulation symbols cannot be learned) described above, and in this scenario, the correspondence relationship between symbols and bits is known.

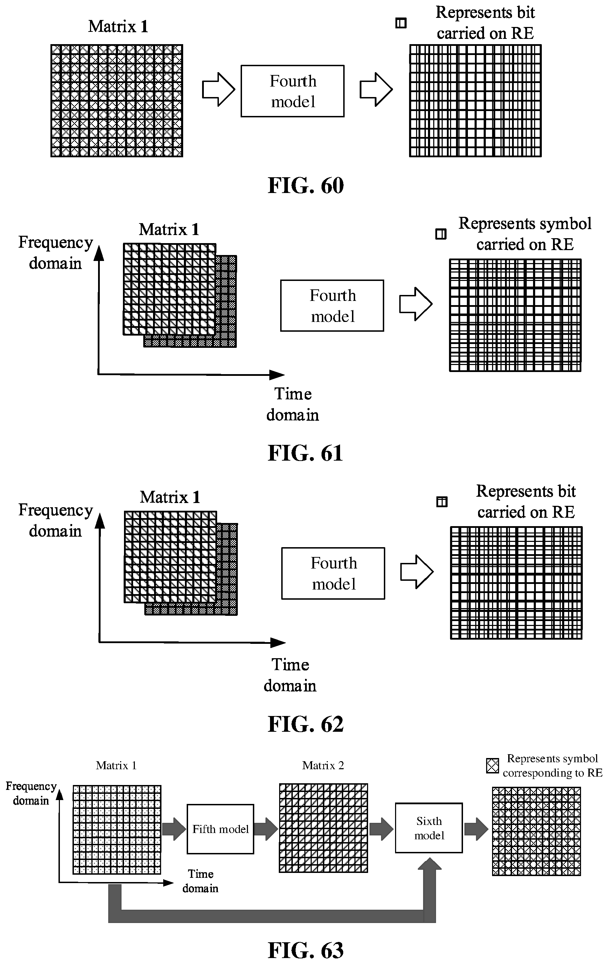

In other implementations, the fourth model may directly predict the received signal corresponding bits. For example, referring to FIG. 60, the first signal and the second signal are transmitted on the RB 1 in a non-orthogonal transmission manner, and the matrix 1 represents the energy of the signals (including the first signal and the second signal that are transmitted non-orthogonally) carried in each RE in the RB 1. The matrix 1 is input to the fourth model, and accordingly, the fourth model can predict the bits corresponding to each RE in the RB1 based on the matrix 1, that is, recover the bits carried on each RE in the RB1.

The solutions of the embodiments of the present application can be applied to a scenario in which the correspondence relationship between symbols and bits is unknown. In some implementations, the solutions of the embodiments of the present application may be applied to a scenario in which symbols can be learned (for example, a scenario in which constellation modulation symbols can be learned) described above. In this scenario, the correspondence between symbols and bits changes with the learning of the second model and/or the third model, that is, the correspondence between symbols and bits is unknown. Of course, the embodiments of the present application can also be applied to the scenario in which the symbols described above cannot be learned.

Taking the second signal being a data signal and the first signal being a pilot signal as an example, the association between the symbols and bits may include the association between the symbols of the data signal and the bits of the data signal, and the association is correlated with the modulation mode of the data signal. Accordingly, the recovered bits are data bits of the recovered data signal.

It should be noted that the receiver provided in the embodiments of the present application can be used to receive any of the non-orthogonally transmitted signals described above. In order to facilitate understanding, the following describes a scheme of receiving a signal by a receiver in the embodiments of the present application by taking a splicing method based on a signal input channel as an example. The reception scheme for other non-orthogonally transmitted signals is similar, and will not be repeated hereinafter for the sake of brevity.

Referring to FIG. 61, the first signal and the second signal are non-linearly superposed based on the channel for input signal to achieve non-orthogonal transmission on RB 1, and matrix 1 represents the energy of the signals (including the first signal and the second signal that are transmitted non-orthogonally) carried in each RE in RB 1. The matrix 1 is input to the fourth model, and accordingly, the fourth model may predict a symbol (e.g., a constellation modulation symbol) corresponding to each RE in the RB 1 based on the matrix 1, and then recover the bits carried on each RE in the RB 1 based on the correspondence between the symbols and the bits.

Referring to FIG. 62, the first signal and the second signal are non-linearly superposed based on the channel for input signal to achieve non-orthogonal transmission on RB 1, and matrix 1 represents the energy of the signals (including the first signal and the second signal transmitted non-orthogonally) carried in each RE in RB 1. The matrix 1 is input to the fourth model, and accordingly, the fourth model can predict the bits corresponding to each RE in the RB1 based on the matrix 1, that is, recover the bits carried on each RE in the RB1.

In some scenarios, the process of receiving a signal by a receiver may be divided into a plurality of sub-processes. For example, based on the signal reception scheme described in FIG. 1, the process of receiving a signal may include a channel estimation process, a data recovery process, and the like, that is, channel estimation may be performed based on the received signal, and data recovery may be performed on the received data based on the result of the channel estimation. Based on the foregoing description, it can be seen that the receiver can recover the received signal based on the fourth model, that is, the fourth model can be used to perform the channel estimation process and the data recovery process. Therefore, the receiver described above may also be referred to as an "integrated receiver".

Of course, in the embodiments of the present application, the function of the model may be set based on the process of receiving a signal by the receiver, and accordingly, the receiver may include a plurality of models. Therefore, the receiver according to the embodiments of the present application may be referred to as a "modular receiver". In order to facilitate understanding, the AI receiver according to the embodiments of the present application is described below by taking the second signal being a data signal and the first signal being a pilot signal as an example. Accordingly, the above-described process of receiving a signal may include a channel estimation process and a data recovery process.

In some implementations, the receiver may include a fifth model as well as a sixth model. The fifth model is used to estimate the channel state based on the first signal. The sixth model is used to recover the second signal based on the estimated channel state. Here, the embodiments of the present application do not limit the type of the fifth model and/or the sixth model, and for example, the fifth model and/or the sixth model may be an AI model. Of course, the fifth model and/or the sixth model may also be other models, for example, the fifth model and/or the sixth model may be a machine learning model.

In some implementations, the sixth model may recover bits corresponding to symbols of the received signal by predicting symbols corresponding to the received signal. For example, referring to FIG. 63, the first signal and the second signal are transmitted on the RB 1 in a non-orthogonal transmission manner, and the matrix 1 represents the energy of the signals (including the first signal and the second signal that are transmitted non-orthogonally) carried in each RE in the RB 1. The matrix 1 is input to the fifth model, and accordingly, the fifth model may output a matrix 2 based on the matrix 1, the matrix 2 being used to indicate the channel state corresponding to each RE in the RB1. Then, the matrix 2 and the matrix 1 are input to the sixth model, and accordingly, the sixth model can predict the symbol (e.g., constellation modulation symbol) corresponding to each RE in the RB 1 based on the matrix 1 and the matrix 2, and then recover the bits carried on each RE in the RB 1 based on the correspondence between the symbols and the bits.

The receiver according to the embodiments of the present application can be applied to a scenario in which the correspondence between symbols and bits is known. In some implementations, the solutions of the embodiments of the present application may be applied to a scenario in which symbols cannot be learned (for example, a scenario in which constellation modulation symbols cannot be learned) described above, and in this scenario, the correspondence relationship between symbols and bits is known.

In other implementations, the sixth model may directly predict the received signal corresponding bits. For example, referring to FIG. 64, the first signal and the second signal are transmitted on the RB 1 in a non-orthogonal transmission manner, and the matrix 1 represents the energy of the signals (including the first signal and the second signal that are transmitted non-orthogonally) carried on each RE in the RB 1. The matrix 1 is input to the fifth model, and accordingly, the fifth model may output a matrix 2 based on the matrix 1, the matrix 2 being used to indicate the channel state corresponding to each RE in the RB1. Then, the matrix 2 and the matrix 1 are input to the sixth model, and accordingly, the sixth model may predict the bits carried on each RE in the RB1 based on the matrix 1 and the matrix 2 to recover the second signal.

The receiver according to the embodiments of the present application can be applied to a scenario in which the correspondence relationship between symbols and bits is unknown. In some implementations, the solutions of the embodiments of the present application may be applied to a scenario in which symbols can be learned (for example, a scenario in which constellation modulation symbols can be learned) described above. In this scenario, the correspondence between symbols and bits changes with the learning of the second model and/or the third model, that is, the correspondence between symbols and bits is unknown. Of course, the embodiments of the present application can also be applied to the scenario in which the symbols described above cannot be learned.

It should be noted that the receiver provided in the embodiments of the present application can be used to receive any of the non-orthogonally transmitted signals described above. In order to facilitate understanding, the following describes a scheme of receiving a signal by a receiver in the embodiments of the present application by taking a splicing method based on a signal input channel as an example. The reception scheme for other non-orthogonally transmitted signals is similar, and will not be repeated hereinafter for the sake of brevity.

Referring to FIG. 65, assuming that the first signal and the second signal are non-linearly superposed based on the channel for input signal to achieve non-orthogonal transmission on RB 1, matrix 1 represents the energy of the signals (including the first signal and the second signal transmitted non-orthogonally) carried in each RE in RB 1. The matrix 1 is input to the fifth model, and accordingly, the fifth model may output a matrix 2 based on the matrix 1, the matrix 2 being used to indicate the channel state corresponding to each RE in the RB1. Then, the matrix 2 and the matrix 1 are input to the sixth model, and accordingly, the sixth model can predict the symbol (e.g., constellation modulation symbol) corresponding to each RE in the RB 1 based on the matrix 1 and the matrix 2, and then recover the bits carried on each RE in the RB 1 based on the correspondence between the symbols and the bits.

Referring to FIG. 66, the first signal and the second signal are non-linearly superposed based on the channel for input signal to achieve non-orthogonal transmission on RB 1, the matrix 1 representing the energy of the signals (including the non-orthogonally transmitted first signal and the second signal) carried in each RE in RB 1. The matrix 1 is input to the fifth model, and accordingly, the fifth model may output a matrix 2 based on the matrix 1, the matrix 2 being used to indicate the channel state corresponding to each RE in the RB1. Then, the matrix 2 and the matrix 1 are input to the sixth model, and accordingly, the sixth model may predict the bits carried on each RE in the RB1 based on the matrix 1 and the matrix 2 to recover the second signal.

The non-orthogonal transmission modes and the receiver according to the embodiments of the present application are described above, and the training process according to the embodiments of the present application is described below with reference to FIG. 65. In some implementations, the method includes: processing, by using a first model, training data to be transmitted to obtain processed training data; transmitting the processed first training data through the target transmission resource, where the training data includes a first signal and a second signal that are non-orthogonally transmitted. Accordingly, the second device recovers the processed first training data to obtain recovered data for the first training data. The first model is trained using the difference between the recovered data and the first training data.

As described above, in some implementations, the second device may utilize the model in the receiver to transmit non-orthogonally transmitted signals. Thus, during the process of training the first model, the model in the receiver may be trained together. Here, the model in the receiver (hereinafter also referred to as "target model") may include a fourth model, or the model in the receiver may include a fifth model and a sixth model. Of course, in the embodiments of the present application, the target model and the first model may be associated with different training processes. Therefore, in the training process described below, only the first model may be trained, or only the target model may be trained.

That is, the second apparatus recovers the processed first training data to obtain the recovered data for the first training data, which includes that the second apparatus recovers the processed first training data by using the target model to obtain recovered data for the first training data, and trains the first model and/or the target model by using the difference between the recovered data and the first training data.

In some implementations, taking the second signal being a data signal and the first signal being a pilot signal as an example, the training of the first model and/or the target model may be determined based on one or more of the following: a difference between data bits to be transmitted by the first device and data bits received by the second device; a difference between the bits after channel encoding and the bits recovered by the receiver (undecoded bits); and a difference between the real channel state and the channel state estimated by the second device.

In the embodiments of the present application, the realization of the above differences is not limited. In some implementations, the above described differences may be calculated by a loss function, for example, the above described differences may be calculated by cross entropy in the loss function.

In order to facilitate understanding, the training process of the embodiments of the present application is described below with reference to FIG. 67. It should be understood that the introduction of FIG. 67 takes a signal transmission process including a signal modulation process and a signal encoding process as an example. Other signal processing processes, such as signal precoding, signal interleaving process, and the like, may be introduced in the training process, which is not limited in the embodiments of the present application. In addition, the following describes the training process of the embodiments of the present application from the perspective of a transmitting end and a receiving end. The transmitting end may be the first device described above, and of course, the transmitting end may be another device other than the first device. The receiving end may be the second device described above, and of course, the receiving end may be another device other than the second device.

FIG. 67 is a schematic diagram of a training process according to the embodiments of the present application. The method illustrated in FIG. 67 includes steps S6710 to S6780.

Referring to FIG. 67, in S6710, the transmitting end generates data bits.

In some implementations, the transmitting end may randomly generate data bits, but of course, in the embodiments of the present application, the transmitting end may also use the pre-stored data bits.

In S6720, the transmitting end performs channel encoding on the generated data bits to obtain the encoded data bits.

In S6730, the transmitting end modulates the encoded data bits to obtain a modulation symbol.

In some implementations, the transmitting end may map the encoded data bits to symbols according to the modulation symbol set to complete the modulation process.

In S6740, the transmitting end superimposes a preset pilot symbol and a modulation symbol using the first model to obtain a superposed signal (also referred to as a "superposed symbol"), where the preset pilot symbol may belong to a pilot symbol set.

In some implementations, the pilot signal and the modulation symbol may be superposed using the non-linear superposition method and/or the linear superposition method described above. For specific implementation methods, please refer to the above introduction, and will not be repeated here for the sake of brevity.

In S6750, the superposed signal is transmitted to the receiving end through the channel.

In S6760, the receiving end inputs the received superposed signal to the receiver, and accordingly, the receiver outputs the recovered data bits using the target model.

In S6770, the receiving end performs channel decoding on the recovered data bits to obtain received data bits.

It should be noted that, as described above, in p S6730, the transmitting end may modulate the signal based on the modulation symbol set. The modulation symbol set may be learnable, for example, may be learned based on the second model. Of course, in the embodiment of the present application, the modulation symbol set may be unlearnable.

Further, in S6740, the pilot symbol used by the transmitting end may be selected from the pilot symbol set. The pilot symbol set may be learnable, for example, may be learned based on the third model. Of course, in the embodiments of the present application, the pilot symbol set may be unlearnable.

In S6780, the first model and the target model are jointly trained based on the loss function.

In some implementations, the loss function includes one or more of a loss function L1, a loss function L2, and a loss function L3. The loss function L1 comprises the cross entropy between the generated data bits and the received data bits. The loss function L2 is the cross entropy between the channel-encoded bits and the bits recovered by the receiver. The loss function L3 is the mean square error between the real channel matrix and the estimated channel matrix.

If training is performed based on the above three loss functions, the total loss function in the training process can be expressed as $L = \alpha \cdot L1 + \beta \cdot L2 + \gamma \cdot L3$, where $\alpha$, $\beta$ and $\gamma$ represent weight parameters. Accordingly, if the total loss function satisfies a condition (for example, the total loss function is less than a threshold value), the training process of the first model and the target model may be considered to be completed. If the total loss function does not satisfy the condition (for example, the total loss function is less than the threshold value), it may be considered that the training process of the first model and the target model has not ended.

Method embodiments of the present application are described in detail above with reference to FIGs. 1 to 67, and apparatus embodiments of the present application are described in detail below with reference to FIGs. 68 to 70. It should be understood that the description of the method embodiments and the description of the device embodiments correspond to each other, and thus, the portions not described in detail can be referred to the foregoing method embodiments.

FIG. 68 is a schematic diagram of a communication device according to the embodiments of the present application. The communication device 6800 illustrated in FIG. 68 is a first device, and the communication device 6800 includes a transmission unit 6810.

The transmitting unit 6810 is configured to transmit a target signal on a target transmission resource to the second device. The target signal includes a first signal and a second signal that are transmitted non-orthogonally.

In some implementations, the target transmission resource is part or all of the transmission resources used for transmitting the first signal.

In some implementations, the target signal is generated based on the first signal and the second signal that are linearly superposed.

In some implementations, the first signal and the second signal are linearly superposed based on one or more of the following parameters: a symbol set corresponding to the first signal; a symbol set corresponding to the second signal; a first parameter used for adjusting an energy of a first signal transmitted on the target transmission resource; and a second parameter used for adjusting an energy of a second signal transmitted on the target transmission resource.

In some implementations, when the first signal and the second signal are linearly superposed based on the first parameter and/or the second parameter, the first parameter and/or the second parameter are used to adjust a sum of the energy of the first signal transmitted on the target transmission resource and the energy of the second signal transmitted on the target transmission resource to be less than or equal to an energy threshold corresponding to the target transmission resource.

In some implementations, the target transmission resource belongs to a transmission resource set, the transmission resource set comprises one or more of the target transmission resources, the target signal transmitted on a target transmission resource in the transmission resource set is expressed as a matrix **S,** and the matrix **S** is determined by the formula $S = V \odot D + X \odot P$. The matrix **V** represents the second parameter associated with the target transmission resource in the transmission resource set. The matrix X represents the first parameter associated with the target transmission resource in the transmission resource set. The matrix **D** represents a second signal transmitted on the target transmission resource in the transmission resource set. The matrix **P** represents a first signal transmitted on the target transmission resource in the transmission resource set. $\odot$ represents the Hadmard product.

In some implementations, the matrix **V** is determined based on the formula $V = sqrt(A)$, and/or, the matrix **X** is determined based on the formula $X = sqrt(1 - A)$, where $A \in [0, 1]$, and $sqrt()$ represents a square root calculation.

In some implementations, the number of the target transmission resources included in the transmission resource set is associated with matrix size(s) of target matrix(es) including one or more of the matrix **S,** the matrix **V,** the matrix **X,** and the matrix **P.**

In some implementations, the symbol set corresponding to the first signal is associated with a transmission condition of the first signal, and/or, a symbol set corresponding to the second signal is associated with a transmission condition of the second signal.

In some implementations, the transmission condition is associated with one or more of the following: the antenna number of antennas for signal transmission; a channel condition of a channel for signal transmission; and radio frequency device characteristic for signal transmission.

In some implementations, the symbol set corresponding to the first signal comprises available modulation symbols of the first signal, and/or, the symbol set corresponding to the second signal comprises available modulation symbols of the second signal.

In some implementations, the target signal is generated based on non-linear superposition of the first signal and the second signal.

In some implementations, the target signal is generated by non-linear superposition of the first signal and the second signal using a first model.

In some implementations, the first model is used to perform non-linear superposition on the first signal and the second signal that are spliced.

In some implementations, the first signal and the second signal that are spliced are obtained based on one or more of the following splicing methods: splicing transmission resources occupied by the first signal and transmission resources occupied by the second signal in a time domain; splicing transmission resources occupied by the first signal and transmission resources occupied by the second signal in a frequency domain; performing splicing based on an input channel of the first signal and an input channel of the second signal.

In some implementations, the first model is used to perform non-linear superimposition on the first signal and the second signal that are linearly superposed.

In some implementations, the communication device further includes a processing unit. The processing unit is configured to: process the first signal by using a second model to obtain the processed first signal, and the second model is used for adjusting a symbol set corresponding to the first signal; process the second signal by using a third model to obtain the processed second signal, and the third model is used for adjusting a symbol set corresponding to the second signal; and generate the target signal based on the processed first signal and the processed second signal.

In some implementations, the second signal comprises a data signal and/or the first signal comprises a pilot signal.

FIG. 69 is a schematic diagram of a communication device according to the embodiments of the present application. The communication device 6900 shown in FIG. 69 is a second device, and the communication device 6900 includes a receiving unit 6910.

The receiving unit 6910 is configured to receive a target signal transmitted on a target transmission resource by the first device. The target signal includes a first signal and a second signal that are transmitted non-orthogonally.

In some implementations, the target transmission resource is part or all of transmission resources used for transmitting the first signal.

In some implementations, the target signal is generated based on the first signal and the second signal that are linearly superposed.

In some implementations, the first signal and the second signal are linearly superposed based on one or more of the following parameters: a symbol set corresponding to the first signal; a symbol set corresponding to the second signal; a first parameter used for adjusting an energy of a first signal transmitted on the target transmission resource; and a second parameter used for adjusting an energy of a second signal transmitted on the target transmission resource.

In some implementations, when the first signal and the second signal are linearly superposed based on the first parameter and/or the second parameter, the first parameter and/or the second parameter are used to adjust a sum of the energy of the first signal transmitted on the target transmission resource and the energy of the second signal transmitted on the target transmission resource to be less than or equal to an energy threshold corresponding to the target transmission resource.

In some implementations, the target transmission resource belongs to a transmission resource set, the transmission resource set comprises one or more of the target transmission resources, the first signal and the second signal transmitted on the target transmission resource in the transmission resource set are expressed as a matrix S, the matrix S is determined by the formula $S = V \odot D + X \odot P$. The matrix V represents the second parameter associated with the target transmission resource in the transmission resource set. The matrix **X** represents the first parameter associated with the target transmission resource in the transmission resource set. The matrix D represents a second signal transmitted on the target transmission resource in the transmission resource set. The matrix P represents a first signal transmitted on the target transmission resource in the transmission resource set. $\odot$ represents the Hadmard product.

In some implementations, the matrix **V** is determined based on the formula $V = sqrt(A)$, and/or, the matrix **X** is determined based on the formula $X = sqrt(1 - A)$, where $A \in [0, 1]$, and $sqrt()$ represents a square root calculation.

In some implementations, the number of the target transmission resources included in the transmission resource set is associated with matrix size(s) of target matrix(es) including one or more of the matrix **S,** the matrix **V,** the matrix **X,** and the matrix **P.**

In some implementations, the symbol set corresponding to the first signal is associated with a transmission condition of the first signal; and/or a symbol set corresponding to the second signal is associated with a transmission condition of the second signal.

In some implementations, the transmission condition is associated with one or more of the following: the antenna number of antennas for signal transmission; a channel condition of a channel for signal transmission; and radio frequency device characteristic for signal transmission.

In some implementations, the symbol set corresponding to the first signal comprises available modulation symbols of the first signal, and/or, the symbol set corresponding to the second signal comprises available modulation symbols of the second signal.

In some implementations, the target signal is generated based on non-linear superposition of the first signal and the second signal.

In some implementations, the target signal is generated by non-linear superposition of the first signal and the second signal using a first model.

In some implementations, the first model is used to perform a non-linear superposition on the first signal and the second signal that are spliced.

In some implementations, the first signal and the second signal that are spliced are obtained based on one or more of the following splicing methods: splicing transmission resources occupied by the first signal and transmission resources occupied by the second signal in a time domain; splicing transmission resources occupied by the first signal and transmission resources occupied by the second signal in a frequency domain; and performing splicing based on an input channel of the first signal and an input channel of the second signal.

In some implementations, the first model is used to non-linear superimposition on the first signal and the second signal that are linearly superposed.

In some implementations, the first signal is a data signal, and the receiving unit is configured to receive the target signal by using a first receiver, and the first receiver is configured to recover the data signal in the target signal.

In some implementations, the first receiver is configured to recover data bits or data symbols corresponding to the data signal in the target signal based on a fourth model.

In some implementations, the first signal comprises a data signal, the second signal comprises a pilot signal, and the first receiver comprises a fifth model and a sixth model. The fifth model is used for estimating a channel state based on the pilot signal, and the sixth model is used for recovering data bits or data symbols corresponding to the data signal based on the estimated channel state.

In one possible implementation, the second signal comprises a data signal and/or the first signal comprises a pilot signal.

In an alternative embodiment, the transmitting unit 6810 may be a transceiver 7030. The communication device 6800 may also include a processor 7010 and a memory 7020, as specifically shown in FIG. 70.

In an alternative embodiment, the receiving unit 6910 may be a transceiver 7030. The communication device 6900 may also include a processor 7010 and a memory 7020, as specifically shown in FIG. 70.

FIG. 70 is a schematic configuration diagram of a communication device according to an embodiment of the present application. The dashed line in FIG. 70 indicates that the unit or module is optional. The apparatus 7000 may be used to implement the method described in the method embodiments described above. The apparatus 7000 may be a chip, a terminal device, or a network device.

The apparatus 7000 may include one or more processors 7010. The processor 7010 may support the apparatus 7000 to implement the methods described in the above method embodiments. The processor 7010 may be a general-purpose processor or a specialized processor. For example, the processor may be a central processing unit (CPU). Alternatively, the processor may also another general purpose processor, a digital signal processor (DSP), an application specific integrated circuit (ASIC), an off-the-shelf programmable gate array (FPGA) or other programmable logic device, a discrete gate or transistor logic device, a discrete hardware component, or the like. The general purpose processor may be a microprocessor or the processor may be any conventional processor or the like.

The apparatus 7000 may also include one or more memories 7020. The memory 7020 has stored a program that can be executed by the processor 7010 to cause the processor 7010 to perform the methods described in the above method embodiments. The memory 7020 may be independent of the processor 7010 or may be integrated in the processor 7010.

The apparatus 7000 may also include a transceiver 7030. The processor 7010 may communicate with other devices or chips through the transceiver 7030. For example, the processor 7010 may transmit and receive data with other devices or chips through the transceiver 7030.

Embodiments of the present application also provide a computer-readable storage medium for storing a program. The computer-readable storage medium can be applied to a terminal or a network device provided by the embodiments of the present application, and the program causes a computer to execute a method executed by the terminal or the network device in each embodiment of the present application.

Embodiments of the present application also provide a computer program product. The computer program product includes a program. The computer program product can be applied to a terminal or a network device provided by the embodiments of the present application, and the program causes a computer to execute a method executed by the terminal or the network device in each embodiment of the present application.

Embodiments of the present application also provide a computer program. The computer program can be applied to a terminal or a network device provided by the embodiments of the present application, and the computer program causes a computer to execute a method executed by the terminal or the network device in each embodiment of the present application.

It is to be understood that the terms "system" and "network" may be used interchangeably in this application. In addition, the terminology used in the present application is for explanation of specific embodiments of the present application only, and is not intended to limit the present application. The terms "first," "second," "third," and "fourth," etc. in the specification and claims of the present application and the accompanying drawings are used to distinguish different objects, and are not used to describe a specific order. Furthermore, the terms "comprising" and "having" and any variations thereof are intended to cover non-exclusive inclusions.

In the embodiments of the present application, the reference to "indication" may be a direct indication, an indirect indication, or an associated relationship. For example, A indicates B, which may mean that A directly indicates B, for example, B can be acquired by A. It may also mean that A indicates B indirectly, for example A indicates C, and B can be acquired through C. It may also indicate that there is an association relationship between A and B.

In the embodiments of the present application, "B corresponding to A" means that B is associated with A, from which B can be determined. However, it should also be understood that determining B from A does not mean that B is determined from A alone, and that B may also be determined from A and/or other information.

In the embodiments of the present application, the term "correspondence" may indicate that there is a direct correspondence or indirect correspondence between the two, may indicate that there is a correlation relationship between the two, or may indicate a relationship between indicating and being instructed, configuring and being configured, or the like.

In the embodiments of the present application, "predefined" or "preconfigured" may be realized by storing corresponding codes, tables, or other ways that can be used to indicate relevant information in advance in devices (including, for example, terminal devices and network devices), and the present application does not limit specific implementation methods thereof. For example, predefined may refer to defined in the protocol.

In the embodiments of the present application, the "protocol" may refer to a standard protocol in the field of communication, and may include, for example, an LTE protocol, an NR protocol, and related protocols applied to future communication systems, which are not limited in the present application.

The term "and/or" in the embodiments of the present application is only an association relationship describing associated objects, and indicates that there may be three kinds of relationships. For example, A and/or B, which may indicate that there is A alone, A and B at the same time, and B alone. In addition, the character "/" in this article generally indicates that the related objects before and after are in an "or" relationship.

In various embodiments of the present application, the size of the sequence number of the above described processes does not mean the sequence of execution, and the sequence of execution of each process should be determined by its function and internal logic, and should not constitute any limitation on the implementation of the embodiments of the present application.

In several embodiments provided herein, it should be understood that the disclosed systems, devices, and methods may be implemented in other ways. For example, the apparatus embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be indirect coupling or communication connection through some interface, device or unit, which may be electrical, mechanical or otherwise.

The units described as separate units may or may not be physically separated, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that can be read by a computer or a data storage device such as a server, a data center, or the like that incorporates one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is only a specific embodiment of the present application, but the scope of protection of the present application is not limited thereto. Any change or substitution, within the technical scope disclosed in the present application, that can be easily thought by a person skilled should be covered within the scope of protection of the present application. Therefore, the scope of protection of the present application should be based on the scope of protection of the claims.

## Claims

1. A radio communication method, comprising: transmitting, by a first device, a target signal on a target transmission resource to a second device, wherein the target signal comprises a first signal and a second signal that are transmitted non-orthogonally.

2. The method of claim 1, wherein the target transmission resource is part or all of transmission resources used for transmitting the first signal.

3. The method of claim 1 or 2, wherein the target signal is generated based on the first signal and the second signal that are linearly superposed.

4. The method of claim 3, wherein the first signal and the second signal are linearly superposed based on one or more of following parameters:

   a symbol set corresponding to the first signal;
   a symbol set corresponding to the second signal;
   a first parameter, wherein the first parameter is used for adjusting an energy of a first signal transmitted on the target transmission resource; and
   a second parameter, wherein the second parameter is used for adjusting an energy of a second signal transmitted on the target transmission resource.

5. The method of claim 4, wherein when the first signal and the second signal are linearly superposed based on the first parameter and/or the second parameter, the first parameter and/or the second parameter are used to adjust a sum of the energy of the first signal transmitted on the target transmission resource and the energy of the second signal transmitted on the target transmission resource to be less than or equal to an energy threshold corresponding to the target transmission resource.

6. The method of claim 4 or 5, wherein the target transmission resource belongs to a transmission resource set, the transmission resource set comprises one or more of the target transmission resources, the target signal transmitted on a target transmission resource in the transmission resource set is expressed as a matrix **S,** and the matrix **S** is determined by a formula $S = V \odot D + X \odot P$, wherein the matrix **V** represents the second parameter associated with the target transmission resource in the transmission resource set, the matrix **X** represents the first parameter associated with the target transmission resource in the transmission resource set, the matrix **D** represents a second signal transmitted on the target transmission resource in the transmission resource set, the matrix **P** represents a first signal transmitted on the target transmission resource in the transmission resource set, and $\odot$ represents a Hadmard product.

7. The method of claim 6, wherein the matrix **V** is determined based on a formula $V = sqrt(A)$, and/or, the matrix **X** is determined based on a formula $X = sqrt(1 - A)$, wherein $A \in [0, 1]$, and $sqrt()$ represents a square root calculation.

8. The method of claim 6 or 7, wherein a number of the target transmission resources comprised in the transmission resource set is associated with matrix size(s) of target matrix(es), and the target matrix(es) comprises one or more of the matrix **S,** the matrix **V,** the matrix **X,** and the matrix **P.**

9. The method of any one of claims 4-8, wherein a symbol set corresponding to the first signal is associated with a transmission condition of the first signal; and/or
a symbol set corresponding to the second signal is associated with a transmission condition of the second signal.

10. The method of claim 9, wherein the transmission condition is associated with one or more of:

an antenna number of antennas for signal transmission;
a channel condition of a channel for signal transmission; and
radio frequency device characteristic for signal transmission.

11. The method of claim 9 or 10, wherein the symbol set corresponding to the first signal comprises available modulation symbols of the first signal, and/or, the symbol set corresponding to the second signal comprises available modulation symbols of the second signal.

12. The method of claim 2, wherein the target signal is generated based on the first signal and the second signal that are non-linear superposed.

13. The method of claim 12, wherein the target signal is generated by non-linear superposition of the first signal and the second signal using a first model.

14. The method of claim 13, wherein the first model is used to perform non-linear superposition on the first signal and the second signal that are spliced.

15. The method of claim 14, wherein the first signal and the second signal that are spliced are obtained based on one or more of following splicing methods:

splicing transmission resources occupied by the first signal and transmission resources occupied by the second signal in a time domain;
splicing transmission resources occupied by the first signal and transmission resources occupied by the second signal in a frequency domain; and
performing splicing based on an input channel of the first signal and an input channel of the second signal.

16. The method of claim 13, wherein the first model is used to perform non-linear superposition on the first signal and the second signal that are linearly superposed.

17. The method of any one of claims 1-16, further comprising:

processing, by the first device, the first signal by using a second model to obtain the processed first signal, and the second model is used for adjusting a symbol set corresponding to the first signal;
processing, by the first device, the second signal by using a third model to obtain the processed second signal, and the third model is used for adjusting a symbol set corresponding to the second signal; and
generating, by the first device, the target signal based on the processed first signal and the processed second signal.

18. The method of any one of claims 1-17, wherein the first signal comprises a pilot signal and/or the second signal comprises a data signal.

19. A radio communication method, comprising:
receiving, by a second device, a target signal transmitted on a target transmission resource by a first device, wherein the target signal comprises a first signal and a second signal that are transmitted non-orthogonally.

20. The method of claim 19, wherein the target transmission resource is part or all of transmission resources used for transmitting the first signal.

21. The method of claim 19 or 20, wherein the target signal is generated based on the first signal and the second signal that are linearly superposed.

22. The method of claim 21, wherein the first signal and the second signal are linearly superposed based on one or more of following parameters:

a symbol set corresponding to the first signal;
a symbol set corresponding to the second signal;
a first parameter, wherein the first parameter is used for adjusting an energy of a first signal transmitted on the target transmission resource; and
a second parameter, wherein the second parameter is used for adjusting an energy of a second signal transmitted on the target transmission resource.

23. The method of claim 22, wherein when the first signal and the second signal are linearly superposed based on the first parameter and/or the second parameter, the first parameter and/or the second parameter are used to adjust a sum of the energy of the first signal transmitted on the target transmission resource and the energy of the second signal transmitted on the target transmission resource to be less than or equal to an energy threshold corresponding to the target transmission resource.

24. The method of claim 22 or 23, wherein the target transmission resource belongs to a transmission resource set, the transmission resource set comprises one or more of the target transmission resources, the target signal transmitted on a target transmission resource in the transmission resource set is expressed as a matrix $S$, and the matrix $S$ is determined by a formula $S = V \odot D + X \odot P$, wherein the matrix $V$ represents the second parameter associated with the target transmission resource in the transmission resource set, the matrix $X$ represents the first parameter associated with the target transmission resource in the transmission resource set, the matrix $D$ represents a second signal transmitted on the target transmission resource in the transmission resource set, the matrix $P$ represents a first signal transmitted on the target transmission resource in the transmission resource set, and $\odot$ represents a Hadmard product.

25. The method of claim 24, wherein the matrix $V$ is determined based on a formula $V = sqrt(A)$, and/or, the matrix $X$ is determined based on a formula $X = sqrt(1 - A)$, wherein $A \in [0, 1]$, and $sqrt()$ represents a square root calculation.

26. The method of claim 24 or 25, wherein a number of the target transmission resources comprised in the transmission resource set is associated with matrix size(s) of target matrix(es), and the target matrix(es) comprises one or more of the matrix $S$, the matrix $V$, the matrix $X$, and the matrix $P$.

27. The method of any one of claims 22-26, wherein a symbol set corresponding to the first signal is associated with a transmission condition of the first signal; and/or
a symbol set corresponding to the second signal is associated with a transmission condition of the second signal.

28. The method of claim 27, wherein the transmission condition is associated with one or more of:

an antenna number of antennas for signal transmission;
a channel condition of a channel for signal transmission; and
radio frequency device characteristic for signal transmission.

29. The method of claim 27 or 28, wherein the symbol set corresponding to the first signal comprises available modulation symbols of the first signal, and/or, the symbol set corresponding to the second signal comprises available modulation symbols of the second signal.

30. The method of claim 20, wherein the target signal is generated based on the first signal and the second signal that are non-linear superposed.

31. The method of claim 30, wherein the target signal is generated by non-linear superposition of the first signal and the second signal using a first model.

32. The method of claim 31, wherein the first model is used to perform non-linear superposition on the first signal and the second signal that are spliced.

33. The method of claim 32, wherein the first signal and the second signal that are spliced are obtained based on one or more of following splicing methods:

splicing transmission resources occupied by the first signal and transmission resources occupied by the second signal in a time domain;
splicing transmission resources occupied by the first signal and transmission resources occupied by the second signal in a frequency domain; and
performing splicing based on an input channel of the first signal and an input channel of the second signal.

34. The method of claim 31, wherein the first model is used to perform non-linear superposition on the first signal and the second signal that are linearly superposed.

35. The method of any one of claims 19-34, wherein the first signal is a data signal, and receiving, by the second device, the target signal transmitted by the first device on the target transmission resource comprises:

receiving, by the second device, the target signal by using a first receiver, wherein the first receiver is configured to recover the data signal in the target signal.

36. The method of claim 35, wherein the first receiver is configured to recover data bits or data symbols corresponding to the data signal in the target signal based on a fourth model.

37. The method of claim 35, wherein the first signal comprises a data signal, the second signal comprises a pilot signal, the first receiver comprises a fifth model and a sixth model, the fifth model is used for estimating a channel state based on the pilot signal, and the sixth model is used for recovering data bits or data symbols corresponding to the data signal based on the estimated channel state.

38. The method of any one of claims 19-37, wherein the second signal comprises a data signal and/or the first signal comprises a pilot signal.

39. A communication device, wherein the communication device is a first device and the communication device comprising:

a transmitting unit, configured to transmit a target signal on a target transmission resource to the second device, wherein the target signal comprises a first signal and a second signal that are transmitted non-orthogonally.

40. The communication device of claim 39, wherein the target transmission resource is part or all of transmission resources used for transmitting the first signal.

41. The communication device of claim 39 or 40, wherein the target signal is generated based on the first signal and the second signal that are linearly superposed.

42. The communication device of claim 41, wherein the first signal and the second signal are linearly superposed based on one or more of following parameters:

a symbol set corresponding to the first signal;
a symbol set corresponding to the second signal;

a first parameter, wherein the first parameter is used for adjusting an energy of a first signal transmitted on the target transmission resource; and
a second parameter, wherein the second parameter is used for adjusting an energy of a second signal transmitted on the target transmission resource.

43. The communication device of claim 42, wherein when the first signal and the second signal are linearly superposed based on the first parameter and/or the second parameter, the first parameter and/or the second parameter are used to adjust a sum of the energy of the first signal transmitted on the target transmission resource and the energy of the second signal transmitted on the target transmission resource to be less than or equal to an energy threshold corresponding to the target transmission resource.

44. The communication device of claim 42 or 43, wherein the target transmission resource belongs to a transmission resource set, the transmission resource set comprises one or more of the target transmission resources, the target signal transmitted on a target transmission resource in the transmission resource set is expressed as a matrix $\mathbf{S}$, and the matrix $\mathbf{S}$ is determined by a formula $\mathbf{S} = \mathbf{V} \odot \mathbf{D} + \mathbf{X} \odot \mathbf{P}$, wherein the matrix $\mathbf{V}$ represents the second parameter associated with the target transmission resource in the transmission resource set, the matrix $\mathbf{X}$ represents the first parameter associated with the target transmission resource in the transmission resource set, the matrix $\mathbf{D}$ represents a second signal transmitted on the target transmission resource in the transmission resource set, the matrix $\mathbf{P}$ represents a first signal transmitted on the target transmission resource in the transmission resource set, and $\odot$ represents a Hadmard product.

45. The communication device of claim 44, wherein the matrix $\mathbf{V}$ is determined based on a formula $\mathbf{V} = sqrt(\mathbf{A})$, and/or, the matrix $\mathbf{X}$ is determined based on a formula $\mathbf{X} = sqrt(1 - \mathbf{A})$, wherein $\mathbf{A} \in [0, 1]$, and $sqrt()$ represents a square root calculation.

46. The communication device of claim 44 or 45, wherein a number of the target transmission resources comprised in the transmission resource set is associated with matrix size(s) of target matrix(es), and the target matrix(es) comprises one or more of the matrix $\mathbf{S}$, the matrix $\mathbf{V}$, the matrix $\mathbf{X}$, and the matrix $\mathbf{P}$.

47. The communication device of any one of claims 42-46, wherein a symbol set corresponding to the first signal is associated with a transmission condition of the first signal; and/or

a symbol set corresponding to the second signal is associated with a transmission condition of the second signal.

48. The communication device of claim 47, wherein the transmission condition is associated with one or more of:

   an antenna number of antennas for signal transmission;
   a channel condition of a channel for signal transmission; and
   radio frequency device characteristic for signal transmission.

49. The communication device of claim 47 or 48, wherein the symbol set corresponding to the first signal comprises available modulation symbols of the first signal, and/or, the symbol set corresponding to the second signal comprises available modulation symbols of the second signal.

50. The communication device of claim 40, wherein the target signal is generated based on the first signal and the second signal that are non-linear superposed.

51. The communication device of claim 50, wherein the target signal is generated by non-linear superposition of the first signal and the second signal using a first model.

52. The communication device of claim 51, wherein the first model is used to perform non-linear superposition on the first signal and the second signal that are spliced.

53. The communication device of claim 52, wherein the first signal and the second signal that are spliced are obtained based on one or more of following splicing methods:

   splicing transmission resources occupied by the first signal and transmission resources occupied by the second signal in a time domain;
   splicing transmission resources occupied by the first signal and transmission resources occupied by the second signal in a frequency domain; and
   performing splicing based on an input channel of the first signal and an input channel of the second signal.

54. The communication device of claim 50, wherein the first model is used to perform non-linear superposition on the first signal and the second signal that are linearly superposed.

55. The communication device of any one of claims 39-54, further comprising a processing unit, wherein the processing unit is configured to:

   process the first signal by using a second model to obtain the processed first signal, and the second model is used for adjusting a symbol set corresponding to the first signal;
   process the second signal by using a third model to obtain the processed second signal, and the third model is used for adjusting a symbol set corresponding to the second signal; and
   generate the target signal based on the processed first signal and the processed second signal.

56. The communication device of any one of claims 39-55, wherein the second signal comprises a data signal and/or the first signal comprises a pilot signal.

57. A communication device, wherein the communication device is a second device, and the communication device comprises:
   a receiving unit, configured to receive a target signal transmitted on a target transmission resource by the first device, wherein the target signal comprises a first signal and a second signal that are transmitted non-orthogonally.

58. The communication device of claim 57, wherein the target transmission resource is part or all of transmission resources used for transmitting the first signal.

59. The communication device of claim 57 or 58, wherein the target signal is generated based on the first signal and the second signal that are linearly superposed.

60. The communication device of claim 59, wherein the first signal and the second signal are linearly superposed based on one or more of following parameters:

   a symbol set corresponding to the first signal;
   a symbol set corresponding to the second signal;
   a first parameter, wherein the first parameter is used for adjusting an energy of a first signal transmitted on the target transmission resource; and
   a second parameter, wherein the second parameter is used for adjusting an energy of a second signal transmitted on the target transmission resource.

61. The communication device of claim 60, wherein when the first signal and the second signal are linearly superposed based on the first parameter and/or the second parameter, the first parameter and/or the second parameter are used to adjust a sum of the energy of the first signal transmitted on the target transmission resource and the energy of the second signal transmitted on the target transmission resource to be less than or equal to an energy threshold corresponding to the target transmission resource.

62. The communication device of claim 60 or 61, wherein the target transmission resource belongs to a transmission resource set, the transmission resource set comprises one or more of the target transmission resources, the target signal transmitted on a target transmission resource in the transmission resource set is expressed as a matrix **S,** and the matrix **S** is determined by a formula $\mathbf{S} = \mathbf{V} \odot \mathbf{D} + \mathbf{X} \odot \mathbf{P}$, wherein the matrix **V** represents the second parameter associated with the target transmission resource in the transmission resource set, the matrix **X** represents the first parameter associated with the target transmission resource in the transmission resource set, the matrix **D** represents a second signal transmitted on the target transmission resource in the transmission resource set, the matrix **P** represents a first signal transmitted on the target transmission resource in the transmission resource set, and $\odot$ represents a Hadmard product.

63. The communication device of claim 62, wherein the matrix **V** is determined based on a formula $\mathbf{V} = sqrt(\mathbf{A})$, and/or, the matrix **X** is determined based on a formula $\mathbf{X} = sqrt(1 - \mathbf{A})$, wherein $\mathbf{A} \in [0, 1]$, and $sqrt()$ represents a square root calculation.

64. The communication device of claim 62 or 63, wherein a number of the target transmission resources comprised in the transmission resource set is associated with matrix size(s) of target matrix(es) comprising one or more of the matrix **S,** the matrix **V,** the matrix **X,** and the matrix **P.**

65. The communication device of any one of claims 60-64, wherein a symbol set corresponding to the first signal is associated with a transmission condition of the first signal; and/or
a symbol set corresponding to the second signal is associated with a transmission condition of the second signal.

66. The communication device of claim 65, wherein the transmission condition is associated with one or more of:

   an antenna number of antennas for signal transmission;
   a channel condition of a channel for signal transmission; and

radio frequency device characteristic for signal transmission.

67. The communication device of claim 65 or 66, wherein the symbol set corresponding to the first signal comprises available modulation symbols of the first signal, and/or, the symbol set corresponding to the second signal comprises available modulation symbols of the second signal.

68. The communication device of claim 58, wherein the target signal is generated based on the first signal and the second signal that are non-linear superposed.

69. The communication device of claim 68, wherein the target signal is generated by non-linear superposition of the first signal and the second signal using a first model.

70. The communication device of claim 69, wherein the first model is used to perform non-linear superposition on the first signal and the second signal that are spliced.

71. The communication device of claim 70, wherein the first signal and the second signal that are spliced are obtained based on one or more of the following splicing methods:

   splicing transmission resources occupied by the first signal and transmission resources occupied by the second signal in a time domain;
   splicing transmission resources occupied by the first signal and transmission resources occupied by the second signal in a frequency domain; and
   performing splicing based on an input channel of the first signal and an input channel of the second signal.

72. The communication device of claim 69, wherein the first model is used to perform non-linear superposition on the first signal and the second signal that are linearly superposed.

73. The communication device according to any one of claims 57-72, wherein the first signal is a data signal, and the receiving unit is configured to:
receive the target signal by using a first receiver, wherein the first receiver is configured to recover the data signal in the target signal.

74. The communication device of claim 73, wherein the first receiver is configured to recover data bits or data symbols corresponding to the data signal in the target signal based on a fourth model.

75. The communication device of claim 73, wherein the first signal comprises a data signal, the second signal comprises a pilot signal, the first receiver comprises a fifth model and a sixth model, the fifth model is used for estimating a channel state based on the pilot signal, and the sixth model is used for recovering data bits or data symbols corresponding to the data signal based on the estimated channel state.

**76.** The communication device of any one of claims 57-75, wherein the second signal comprises a data signal and/or the first signal comprises a pilot signal.

**77.** A communication device comprising a transceiver, a memory for storing a program, and a processor for invoking the program in the memory and controlling the transceiver to receive or transmit signals to cause the communication device to perform the method of any one of claims 1-38.

**78.** An apparatus comprising a processor for invoking a program from a memory to cause the apparatus to perform a method of any one of claims 1-38.

**79.** A chip comprising a processor for invoking a program from a memory to cause a device on which the chip is mounted to perform a method of any one of claims 1-38.

**80.** A computer-readable storage medium having a program stored thereon, wherein the program causes a computer to perform the method of any one of claims 1-38.

**81.** A computer program product comprising a program that causes a computer to perform the method of any one of claims 1-38.

**82.** A computer program that causes a computer to perform the method of any one of claims 1-38.

**FIG. 1**

**FIG. 2**

☐ Represents resource for transmitting data signal

▨ Represents resource for transmitting pilot signal

Frequency domain

Time domain

**FIG. 3(a)**

☐ Represents resource for transmitting data signal

▨ Represents resource for transmitting pilot signal

Frequency domain

Time domain

**FIG. 3(b)**

☐ Represents resource for transmitting data signal

▨ Represents resource for transmitting pilot signal

Frequency domain

Time domain

**FIG. 3(c)**

$a_1$
$w_1$
$a_2$
$w_2$
⋮
$w_j$
$a_j$
1
b
SU
f
t

**FIG. 4**

Input layer
510

Hidden layer
520

Output layer
530

**FIG. 5**

**FIG. 6**

Input layer 610 — Convolutional layer 620 — Pooling layer 630 — Convolutional layer 620 — Pooling layer 630 — Fully connected layer 640 — Output layer 650

Represents vector transmission
Represents processing node
Represents neural network layer
Represents vector connection
reprsents vector replication

**FIG. 7**

Receiver 800

Pilot signal → Channel estimation module 810 → Channel information

**FIG. 8**

900

**FIG. 9**

**FIG. 10**

**FIG. 11**

■ Represents superimposed
transmission resource

▨ Represents transmission
resource of the first signal

Frequency
domain

RB2

Time
domain

**FIG. 12**

Frequency
domain

Matrix **P**  ⊙  Matrix **X**  +  Matrix **D**  ⊙  Matrix **V**  =  Matrix **S**

Time
domain

**FIG. 13**

Imaginary
part

0.707

-0.707   0.707   Real part

-0.707

(a)

Imaginary
part

0.707

-0.707   0.707   Real part

-0.707

(b)

**FIG. 14**

**FIG. 15**

**FIG. 16**

**FIG. 17**

**FIG. 18**

**FIG. 19**

**FIG. 20**

First matrix

S2110
Second
model

Frequency
domain    S2130

RB1

RB2

Time
domain

Second matrix

S2120
Third
model

S2140
First
model

Matrix **Q**

**FIG. 21**

First matrix

S2210
Second
model

Second matrix

S2220
Third
model

S2230
RB2    RB1

Frequency
domain

Time
domain

S2240
First
model

Matrix **Q**

**FIG. 22**

First matrix

S2310
Second
model

Frequency
domain

Second matrix

S2320
Third
model

Input channel 2    S2340

Input channel 1    First
model

Time
domain

Matrix **Q**

**FIG. 23**

FIG. 24

FIG. 25

FIG. 26

2720  Matrix **X**  2730

Frequency
domain

Time
domain  2710

**FIG. 27**

2820  Matrix **X**  2830

Frequency
domain

Time
domain  2810

**FIG. 28**

2620  Matrix **X**  2630    Matrix **B**    Matrix **G**

Frequency
domain

Time
domain  2610

1

0

**FIG. 29**

**FIG. 30**

**FIG. 31**

**FIG. 32**

3320    Matrix **X**    3330

Frequency
domain

3310

Time
domain

**FIG. 33**

3420    Matrix **X**    3430

Frequency
domain

3410

Time
domain

**FIG. 34**

Matrix **X**        Matrix **B**        Matrix **G**

Frequency
domain

=    +        1

0

Time
domain

**FIG. 35**

3320    3330
Matrix **X**    Matrix **B**    Matrix **G**

Frequency
domain

Time
domain

3310

1

0

**FIG. 36**

3420    3430
Matrix **X**    Matrix **B**    Matrix **G**

Frequency
domain

Time
domain

3410

1

0

**FIG. 37**

3830    Matrix **X**

3810

Frequency
domain

3820

Time
domain

**FIG. 38**

**FIG. 39**

**FIG. 40**

**FIG. 41**

4230

Matrix **X**

4210

Frequency
domain

Time
domain

4220

**FIG. 42**

4330

Matrix **X**

4310

Frequency
domain

Time
domain

4320

**FIG. 43**

4230

Matrix **X**

4210

Frequency
domain

Time
domain

4220

Matrix **B**

Matrix **G**

1

0

**FIG. 44**

4330

Matrix **X**      Matrix **B**      Matrix **G**

4310

Frequency
domain

1

0

Time
domain    4320

**FIG. 45**

□ Represents a RE

Frequency
domain

Time domain
(symbol)

**FIG. 46**

□ Represents a RE

Frequency
domain
(subcarrier)

Time
domain

**FIG. 47**

□ Represents a RE

Frequency domain

Time domain

**FIG. 48**

Matrix **X**    Matrix **B**    Matrix **H**

Frequency domain

Time domain

**FIG. 49**

Matrix **X**    Matrix **B**    Matrix **H**

Frequency domain

Time domain

**FIG. 50**

Matrix **X**    Matrix **B**    Matrix **H**

Frequency domain

Time domain

**FIG. 51**

Matrix **X**      Matrix **B**      Matrix **H**

Frequency
domain

Time
domain

**FIG. 52**

Matrix **X**      Matrix **B**      Matrix **H**

Frequency
domain

Time
domain

**FIG. 53**

Matrix **X**      Matrix **B**      Matrix **H**

Frequency
domain

Time
domain

**FIG. 54**

Matrix **X**      Matrix **B**      Matrix **G**      Matrix **H**

Frequency
domain

Time
domain

**FIG. 55**

**FIG. 56**

**FIG. 57**

**FIG. 58**

**FIG. 59**

Matrix **1**

Fourth model

Represents bit carried on RE

**FIG. 60**

Frequency domain

Matrix **1**

Fourth model

Represents symbol carried on RE

Time domain

**FIG. 61**

Frequency domain

Matrix **1**

Fourth model

Represents bit carried on RE

Time domain

**FIG. 62**

Frequency domain

Matrix 1

Fifth model

Time domain

Matrix 2

Sixth model

Represents symbol corresponding to RE

**FIG. 63**

FIG. 64

FIG. 65

FIG. 66

FIG. 67

Communication device 6800

Transmitting unit 6810

**FIG. 68**

Communication device 6900

Transmitting unit 6910

**FIG. 69**

Apparatus 7000

Processor 7010

Memory 7020

Transceiver 7030

**FIG. 70**

## INTERNATIONAL SEARCH REPORT

| International application No. |
| --- |
| **PCT/CN2023/110024** |

| A. | CLASSIFICATION OF SUBJECT MATTER |
| --- | --- |

H04L1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNTXT, ENTXTC: 调制, 叠加, 非线性, 非正交, 符号, 功率, 机器学习, 码元, 模型, 能量, 拼接, 人工智能, 射频, 神经网络, 数量, 天线, 同一, 线性, 相同, 信道, 信号, 序列, 资源, AI, data, ML, pilot, reference, resource, RS, same, signal, non-orthogonal, power, energy, superposition, stitch, symbol, model, antenna, number, channel, radio, sequence, linear, non-linear

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107947843 A (SHANGHAI JIAO TONG UNIVERSITY) 20 April 2018 (2018-04-20) description, paragraphs 30-47 | 1-11, 17-29, 35, 37-49, 55-67, 73, 75-82 |
| Y | CN 107947843 A (SHANGHAI JIAO TONG UNIVERSITY) 20 April 2018 (2018-04-20) description, paragraphs 30-47 | 12-16, 30-34, 36, 50-54, 68-72, 74 |
| Y | CN 116389216 A (XIDIAN UNIVERSITY) 04 July 2023 (2023-07-04) description, paragraphs 20-26 | 12-16, 30-34, 36, 50-54, 68-72, 74 |
| A | CN 107466460 A (LG ELECTRONICS INC.) 12 December 2017 (2017-12-12) entire document | 1-82 |
| A | CN 109981511 A (HUAWEI TECHNOLOGIES CO., LTD.) 05 July 2019 (2019-07-05) entire document | 1-82 |
| A | CN 115633313 A (PENG CHENG LABORATORY) 20 January 2023 (2023-01-20) entire document | 1-82 |
| A | WO 2018027909 A1 (FUJITSU LTD.) 15 February 2018 (2018-02-15) entire document | 1-82 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 March 2024** | **21 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/110024** |

| C. | DOCUMENTS CONSIDERED TO BE RELEVANT | |
| --- | --- | --- |
| Category* | Citation of document, with indication, where appropriate, of the relevant passages | Relevant to claim No. |
| A | ZTE et al. "Considerations on the Preamble design for grant-free non-orthogonal MA" *3GPP TSG RAN WG1 Meeting #86bis, R1-1608955*, 14 October 2016 (2016-10-14), entire document | 1-14 |

Form PCT/ISA/210 (second sheet) (July 2022)

## INTERNATIONAL SEARCH REPORT
### Information on patent family members

International application No.

**PCT/CN2023/110024**

| Patent document cited in search report | | | Publication date (day/month/year) | Patent family member(s) | | | Publication date (day/month/year) |
|---|---|---|---|---|---|---|---|
| CN | 107947843 | A | 20 April 2018 | None | | | |
| CN | 116389216 | A | 04 July 2023 | None | | | |
| CN | 107466460 | A | 12 December 2017 | US | 2018115386 | A1 | 26 April 2018 |
| | | | | EP | 3276902 | A1 | 31 January 2018 |
| | | | | WO | 2016153250 | A1 | 29 September 2016 |
| CN | 109981511 | A | 05 July 2019 | WO | 2019128781 | A1 | 04 July 2019 |
| CN | 115633313 | A | 20 January 2023 | None | | | |
| WO | 2018027909 | A1 | 15 February 2018 | None | | | |

Form PCT/ISA/210 (patent family annex) (July 2022)

81